# EUROPEAN PATENT APPLICATION

(11) **EP 4 546 863 A1**
(43) Date of publication of application: **30.04.2025**
(21) Application number: 23826405.5
(22) Date of filing: 20.06.2023
(51) Int. Cl.: H04W 28/02

(54) **CONGESTION PROCESSING METHOD AND APPARATUS, AND COMMUNICATION DEVICE**

(30) Priority: 22.06.2022 CN 202210716554
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Michalski Hüttermann & Partner Patentanwälte mbB
(86) International application number: PCT/CN2023/101318
(87) International publication number: WO 2023/246758

(57) **Abstract**

This application discloses a congestion processing method and apparatus and a communication device, and belongs to the field of communication technologies. The method includes: obtaining, by a first communication device, first information, where the first information includes at least one of the following: first capability information of a terminal, first intention information of the terminal, operation information of the terminal, and a first requirement; and performing, by the first communication device, a first operation based on the first information, where the first operation includes at least one of the following: determining to accept the first requirement or reject the first requirement; performing an operation corresponding to a congestion mark, or skipping performing or rejecting to perform an operation corresponding to a congestion mark; sending a second requirement to the terminal; sending a first query to the terminal, where the first query is used to query the terminal whether to allow to perform the operation corresponding to the congestion mark; sending a second query to the terminal, where the second query is used to query the terminal whether the operation corresponding to the congestion mark is being performed; and sending at least one of the following to a second communication device: the first information and first capability information of the first communication device.

## Description

### CROSS-REFERENCE TO RELATED APPLICATIONS

The present application claims priority to Chinese Patent Application No. 202210716554.6 filed in China on June 22, 2022, which is incorporated herein by reference in its entirety.

### TECHNICAL FIELD

Embodiments of the present application relate to the field of wireless communication technologies, and in particular, to a congestion processing method and apparatus and a communication device.

### BACKGROUND

An explicit congestion notification (Explicit Congestion Notification, ECN) marking technology may be used to set a congestion mark in a data transmission path, so that an end side (for example, a client and a server) can obtain useful congestion information to mitigate congestion. Low latency, low loss, scalable throughput (low latency, low loss, scalable throughput, L4S) supports more elastic congestion control based on the ECN marking technology. A mobile cellular network (for example, a 5th generation mobile communication technology system (5th Generation Mobile Communication Technology System, 5GS)) is a segment of a transmission path between terminals or servers, and a radio resource is often a bottleneck of communication. How to better support the technology corresponding to the congestion mark in a mobile cellular network is a problem that needs to be resolved in the present application.

### SUMMARY

Embodiments of the present application provide a congestion processing method and apparatus and a communication device, to resolve a problem of how to process a congestion mark.

To resolve the foregoing technical problem, the present application is implemented as follows:

According to a first aspect, a congestion processing method is provided, including:
obtaining, by a first communication device, first information; where the first information includes at least one of the following: first capability information of a terminal, first intention information of the terminal, operation information of the terminal, and a first requirement; and
performing, by the first communication device, a first operation based on the first information; where the first operation includes at least one of the following:
   determining to accept the first requirement or reject the first requirement;
   performing an operation corresponding to the congestion mark, or skipping performing or rejecting to perform an operation corresponding to the congestion mark;
   sending a second requirement to the terminal, where the second requirement is used to require the terminal to perform an operation corresponding to the congestion mark;
   sending a first query to the terminal, where the first query is used to query the terminal whether to allow to perform an operation corresponding to the congestion mark;
   sending a second query to the terminal, where the second query is used to query the terminal whether an operation corresponding to the congestion mark is being performed; and
   sending at least one of the following to a second communication device: the first information and first capability information of the first communication device; where
   the first capability information indicates one of the following:
      supporting the operation and/or a function corresponding to the congestion mark; and
      not supporting the operation and/or the function corresponding to the congestion mark;
      the first intention information of the terminal indicates one of the following:
      allowing, by the terminal and/or a user, to perform the operation corresponding to the congestion mark; and
      not allowing, by the terminal and/or the user, to perform the operation corresponding to the congestion mark;
      the operation information of the terminal indicates one of the following:
         the terminal is performing the operation corresponding to the congestion mark; and
         the terminal has not performed the operation corresponding to the congestion mark; and
         the first requirement is used to require to perform the operation corresponding to congestion mark.

According to a second aspect, a congestion processing method is provided, including:
performing, by a terminal, a second operation, where the second operation includes at least one of the following:
sending second information, where the second information includes at least one of the following: first capability information of the terminal, first intention information of the terminal, and operation information of the terminal;
determining to accept a second requirement or reject a second requirement;
performing an operation corresponding to a congestion mark, or skipping performing or rejecting to perform an operation corresponding to a congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information indicates one of the following: supporting the operation and/or a function corresponding to the congestion mark, and not supporting the operation and/or the function corresponding to the congestion mark;
the first intention information of the terminal indicates one of the following:
   allowing, by the terminal and/or a user, to perform the operation corresponding to the congestion mark; and
   not allowing, by the terminal and/or the user, to perform the operation corresponding to the congestion mark; and
   the operation information of the terminal indicates one of the following:
      the terminal is performing the operation corresponding to the congestion mark; and
      the terminal has not performed the operation corresponding to the congestion mark.

According to a third aspect, a congestion processing method is provided, including:
obtaining, by a second communication device, third information, where the third information includes at least one of the following: first capability information of a terminal, first capability information of a first communication device, first intention information of the terminal, operation information of the terminal, and a third requirement; and
performing, by the second communication device, a third operation based on the third information; where the third operation includes at least one of the following:
   determining to accept the third requirement or reject the third requirement;
   sending a first requirement to the first communication device, where the first requirement is used to require to perform an operation corresponding to a congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark; and
   sending a second query to the terminal, where the second query is used to query the terminal whether the operation corresponding to the congestion mark is being performed; where
   the first capability information indicates one of the following: supporting the operation and/or a function corresponding to the congestion mark, and not supporting the operation and/or the function corresponding to the congestion mark;
   the first intention information of the terminal indicates one of the following:
      allowing, by the terminal and/or a user, to perform the operation corresponding to the congestion mark; and
      not allowing, by the terminal and/or the user, to perform the operation corresponding to the congestion mark;
      the operation information of the terminal indicates one of the following:
         the terminal is performing the operation corresponding to the congestion mark; and
         the terminal has not performed the operation corresponding to the congestion mark; and
         the third requirement is used to require to perform the operation corresponding to the congestion mark.

According to a fourth aspect, a congestion processing method is provided, including:
obtaining, by a third communication device, a third requirement, where the third requirement is used to require to perform an operation corresponding to a congestion mark; and
sending, by the third communication device, the third requirement to a second communication device.

According to a fifth aspect, a congestion processing apparatus is provided, applied to a first communication device, including:
a first obtaining module, configured to obtain first information; where the first information includes at least one of the following: first capability information of a terminal, first intention information of the terminal, operation information of the terminal, and a first requirement; and
a first execution module, configured to perform a first operation based on the first information; where the first operation includes at least one of the following:
   determining to accept the first requirement or reject the first requirement;
   performing an operation corresponding to a congestion mark, or skipping performing or rejecting to perform an operation corresponding to a congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark;
   sending a second query to the terminal, where the second query is used to query the terminal whether the operation corresponding to the congestion mark is being performed; and
   sending at least one of the following to a second communication device: the first information and first capability information of the first communication device; where
   the first capability information indicates one of the following:
      supporting the operation and/or a function corresponding to the congestion mark; and
      not supporting the operation and/or the function corresponding to the congestion mark;
      the first intention information of the terminal indicates one of the following:
      allowing, by the terminal and/or a user, to perform the operation corresponding to the congestion mark; and
      not allowing, by the terminal and/or the user, to perform the operation corresponding to the congestion mark;
      the operation information of the terminal indicates one of the following:
      the terminal is performing the operation corresponding to the congestion mark; and
      the terminal has not performed the operation corresponding to the congestion mark; and
      the first requirement is used to require to perform the operation corresponding to congestion mark.

According to a sixth aspect, a congestion processing apparatus is provided, applied to a terminal, including:
a second execution module, configured to perform a second operation, where the second operation includes at least one of the following:
sending second information, where the second information includes at least one of the following: first capability information of the terminal, first intention information of the terminal, and operation information of the terminal;
determining to accept a second requirement or reject a second requirement;
performing an operation corresponding to a congestion mark, or skipping performing or rejecting to perform an operation corresponding to a congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information indicates one of the following: supporting the operation and/or a function corresponding to the congestion mark, and not supporting the operation and/or the function corresponding to the congestion mark;
the first intention information of the terminal indicates one of the following:
   allowing, by the terminal and/or a user, to perform the operation corresponding to the congestion mark; and
   not allowing, by the terminal and/or the user, to perform the operation corresponding to the congestion mark; and
   the operation information of the terminal indicates one of the following:
      the terminal is performing the operation corresponding to the congestion mark; and
      the terminal has not performed the operation corresponding to the congestion mark.

According to a seventh aspect, a congestion processing apparatus is provided, applied to a second communication device, including:
a second obtaining module, configured to obtain third information, where the third information includes at least one of the following: first capability information of a terminal, first capability information of a first communication device, first intention information of the terminal, operation information of the terminal, and a third requirement; and
a third execution module, configured to perform a third operation based on the third information; where the third operation includes at least one of the following:
   determining to accept the third requirement or reject the third requirement;
   sending a first requirement to the first communication device, where the first requirement is used to require to perform an operation corresponding to a congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark; and
   sending a second query to the terminal, where the second query is used to query the terminal whether the operation corresponding to the congestion mark is being performed; where
   the first capability information indicates one of the following: supporting the operation and/or a function corresponding to the congestion mark, and not supporting the operation and/or the function corresponding to the congestion mark;
   the first intention information of the terminal indicates one of the following:
      allowing, by the terminal and/or a user, to perform the operation corresponding to the congestion mark; and
      not allowing, by the terminal and/or the user, to perform the operation corresponding to the congestion mark;
      the operation information of the terminal indicates one of the following:
         the terminal is performing the operation corresponding to the congestion mark; and
         the terminal has not performed the operation corresponding to the congestion mark; and
         the third requirement is used to require to perform the operation corresponding to the congestion mark.

According to an eighth aspect, a congestion processing apparatus is provided, applied to a third communication device, including:
a third obtaining module, configured to obtain a third requirement, where the third requirement is used to require to perform an operation corresponding to a congestion mark; and
a sending module, configured to send the third requirement to a second communication device.

According to a ninth aspect, a communication device is provided, including a processor and a memory that stores a program or an instruction executable on the processor, and when the program or the instruction is executed by the processor, the steps of the method according to the first aspect, the steps of the method according to the third aspect, or the steps of the method according to the fourth aspect are performed.

According to a tenth aspect, a terminal is provided, including a processor and a memory that stores a program or an instruction executable on the processor, and when the program or the instruction is executed by the processor, the steps of the method according to the second aspect are performed.

According to an eleventh aspect, a communication system is provided, including: a terminal, a first communication device, a second communication device, and a third communication device, where the first communication device may be configured to perform the steps of the method according to the first aspect, the terminal may be configured to perform the steps of the method according to the second aspect, the second communication device may be configured to perform the steps of the method according to the third aspect, and the third communication device may be configured to perform the steps of the method according to the fourth aspect.

According to a twelfth aspect, a readable storage medium is provided, storing a program or an instruction, and when the program or the instruction is executed by a processor, the steps of the method according to the first aspect, the steps of the method according to the second aspect, or the steps of the method according to the third aspect, or the steps of the method according to the fourth aspect are performed.

According to a thirteenth aspect, a chip is provided, including a processor and a communication interface. The communication interface is coupled to the processor, and the processor is configured to run a program or an instruction, to implement the method according to the first aspect, the method according to the second aspect, the method according to the third aspect, or the method according to the fourth aspect.

According to a fourteenth aspect, a computer program/program product is provided, stored in a storage medium, and the computer program/program product is executed by at least one processor to implement the steps of the method according to the first aspect, the steps of the method according to the second aspect, the steps of the method according to the third aspect, or the steps of the method according to the fourth aspect.

In the embodiments of the present application, the first communication device performs the first operation based on the obtained first information. The first operation includes at least one of the following: determining to accept the request of performing the operation corresponding to the congestion mark, or reject the request of performing the operation corresponding to the congestion mark; performing the operation corresponding to the congestion mark, or skipping performing or rejecting to perform the operation corresponding to the congestion mark; sending the second requirement to the terminal; sending the first query to the terminal; sending the second query to the terminal; and sending at least one of the first information and the first capability information of the first communication device to the second communication device. In the embodiments of the present application, the first communication device determines, based on a capability of the terminal, whether to accept or reject the congestion mark requirement, thereby avoiding a problem that the terminal cannot process the congestion mark in cooperation, and improving congestion processing efficiency.

### BRIEF DESCRIPTION OF THE DRAWINGS

Various other advantages and benefits become clear to persons of ordinary skill in the art by reading the following detailed description of exemplary implementations. The accompanying drawings are merely used for illustrating the preferred implementations and are not intended to constitute a limitation on the present application. Throughout the accompanying drawings, the same reference numerals are used to represent the same components. In the accompanying drawings:
FIG. 1 is a schematic architectural diagram of a wireless communication system according to an embodiment of the present application;
FIG. 2A is a schematic diagram 1 of an ECN marking technology according to an embodiment of the present application;
FIG. 2B is a schematic diagram 2 of an ECN marking technology according to an embodiment of the present application;
FIG. 2C is a schematic diagram 3 of an ECN marking technology according to an embodiment of the present application;
FIG. 3 is a flowchart 1 of steps of a congestion processing method according to an embodiment of the present application;
FIG. 4 is a flowchart 2 of steps of a congestion processing method according to an embodiment of the present application;
FIG. 5 is a flowchart 3 of steps of a congestion processing method according to an embodiment of the present application;
FIG. 6 is a flowchart 4 of steps of a congestion processing method according to an embodiment of the present application;
FIG. 7 is a schematic diagram of an application scenario 1 according to an embodiment of the present application;
FIG. 8 is a schematic diagram of an application scenario 2 according to an embodiment of the present application;
FIG. 9 is a schematic diagram of an application scenario 3 according to an embodiment of the present application;
FIG. 10 is a schematic diagram of an application scenario 4 according to an embodiment of the present application;
FIG. 11 is a schematic structural diagram 1 of a congestion processing apparatus according to an embodiment of the present application;
FIG. 12 is a schematic structural diagram 2 of a congestion processing apparatus according to an embodiment of the present application;
FIG. 13 is a schematic structural diagram 3 of a congestion processing apparatus according to an embodiment of the present application;
FIG. 14 is a schematic structural diagram 4 of a congestion processing apparatus according to an embodiment of the present application;
FIG. 15 is a schematic structural diagram of a communication device according to an embodiment of the present application;
FIG. 16 is a schematic structural diagram of a terminal according to an embodiment of the present application;
FIG. 17 is a schematic structural diagram 1 of a network side device according to an embodiment of the present application; and
FIG. 18 is a schematic structural diagram 2 of a network side device according to an embodiment of the present application.

### DETAILED DESCRIPTION

The following clearly and completely describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on the embodiments of the present application without making creative efforts shall fall within the protection scope of the present application.

The term "include" and any other variants in the specification and the claims of the present application are intended to cover a non-exclusive inclusion, for example, a process, method, system, product, or device that includes a list of steps or units is not necessarily limited to those expressly listed steps or units, but may include other steps or units not expressly listed or inherent to such a process, method, product, or device. In addition, the term "and/or" used in the specification and claims represents at least one of the connected objects. For example, A and/or B represents the following three cases: only A exists, only B exists, and both A and B exist.

In the embodiments of the present application, the word "exemplary" or "for example" is used to represent giving an example, an illustration, or a description. Any embodiment or design scheme described by using "exemplarily" or "for example" in the embodiments of the present application should not be explained as being more preferred or having more advantages than another embodiment or design scheme. To be specific, the use of the word such as "exemplarily" or "for example" is intended to present the related concepts in a specific manner.

The technology described in this specification is not limited to the 5th-generation (5th-generation, 5G) system and subsequent evolved communication systems as well as LTE/LTE-advanced (LTE-Advanced, LTE-A) systems, and can also be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA) systems, and other systems.

The terms "system" and "network" may usually be used interchangeably. A CDMA system may implement a radio technology such as CDMA2000 or universal terrestrial radio access (Universal Terrestrial Radio Access, UTRA). UTRA includes wideband CDMA (Wideband Code Division Multiple Access, WCDMA) and other CDMA variants. A TDMA system may implement a radio technology such as global system for mobile communication (Global System for Mobile Communication, GSM). An OFDMA system may implement a radio technology such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, or Flash-OFDM. UTRA and E-UTRA are parts of a universal mobile telecommunications system (Universal Mobile Telecommunications System, UMTS). LTE and LTE-advanced (for example, LTE-A) are new releases of UMTS using E-UTRA. UTRA, E-UTRA, UMTS, LTE, LTE-A, and GSM are described in documents of an organization named "3rd Generation Partnership Project" (3rd Generation Partnership Project, 3GPP). CDMA2000 and UMB are described in documents of an organization named "3rd Generation Partnership Project 2" (3GPP2). The technology described in this specification can be used in the foregoing systems and radio technologies as well as other systems and radio technologies.

In order to facilitate the understanding of the embodiments of the present application, the following technical points are introduced first:
A data receiving end and a data sending end are connected through a router. The data receiving end is, for example, a client, and the data sending end is, for example, a server. Alternatively, the data receiving end is, for example, a server, and the data sending end is, for example, a client. The data receiving end and the data sending end may be two ends of a connection (for example, an Internet protocol (Internet Protocol, IP) connection or a transmission control protocol (Transmission Control Protocol, TCP) connection).

Explicit congestion notification (Explicit Congestion Notification, ECN) is an extension of the TCP/IP protocol. ECN supports end-to-end network congestion notification. A router detects congestion before a queue overflows, and sets a congestion experienced (CE) codepoint in an IP header to indicate that congestion is occurring.

In an ECN marking technology, a congestion mark may be set in a data transmission path, so that an end side (a terminal or a server) obtains congestion information to perform a congestion response operation, for example, adjust a throughput rate, adjust compression efficiency, or discard a packet. It can be understood that the congestion response operation can be used to alleviate congestion or eliminate congestion. A specific process is as follows: When congestion occurs, a router sets a congestion occurrence mark CE in sent data, a data receiving end feeds back the received congestion occurrence mark to a data sending end, and the data sending end performs a congestion response operation based on the received congestion occurrence mark.

The ECN mark includes: CE (indicating occurrence of congestion), ECT (0) (ECN-Capable Transport indicates supporting ECN), ECT (1) (indicating supporting ECN and/or indicating requesting L4S), not-ECT (indicating not supporting ECN), an ECN echo mark, and a congestion window reduced (Congestion Window Reduced, CWR) mark.

The ECN echo mark (ECN-Echo (ECE)) is used to feed back the received congestion occurrence mark CE. Specifically, when receiving a CE data packet, the data receiving end may notify this to the data sending end through an ECE.

The L4S performs elastic control based on ECN marking. For example, a shorter queuing queue is used, and congestion marking is performed when slight congestion starts. After receiving the congestion mark, the end side does not discard a packet, and instead reduces a throughput rate and/or improves compression efficiency. The ECT (1) may additionally indicate that L4S is required.

A mobile cellular network (for example, 5GS) is a segment of a transmission path between terminals or servers, and radio resources are often a bottleneck of communication.

A mobile cellular network (for example, 5GS) is a segment of a transmission path between terminals or servers, and radio resources are often a bottleneck of communication.

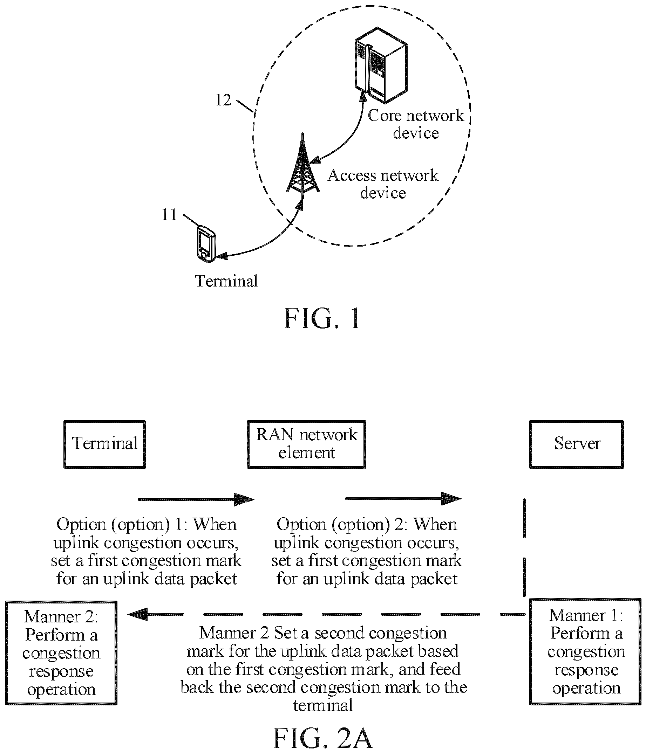

In an implementation, as shown in FIG. 2A, when uplink congestion occurs, a radio access network (Radio Access Network, RAN) element or user equipment (User Equipment, UE) sets a first congestion mark for an uplink data packet of a service and reports the first congestion mark to a server, so that the server adjusts coding efficiency or a throughput rate, discards a packet, sends a congestion window reduced mark (for example, sends CWR Congestion Window Reduced), or reduces a queue length.

For example, a case is as follows: the terminal supports "setting the first congestion mark for the uplink data packet (that is, a first target operation) when the uplink direction meets the congestion mark condition". In this case, it can be understood that only one of the RAN and the terminal "sets the first congestion mark for the uplink data packet when the uplink direction meets the congestion mark condition".

Another case is as follows: the terminal does not support "setting the first congestion mark for the uplink data packet when the uplink direction meets the congestion mark condition". In this case, it can be understood that only when the terminal supports performing, on the uplink, the operation and/or the function corresponding to the congestion mark (which does not include the first target operation, but includes performing the congestion response operation on the uplink based on the received first congestion mark or second congestion mark), the RAN needs to "set the first congestion mark for the uplink data packet when the uplink direction meets the congestion mark condition". Otherwise, if the terminal does not support "performing the congestion response operation on the uplink based on the received first congestion mark or second congestion mark", it may be meaningless for the RAN to "set the first congestion mark for the uplink data packet when the uplink direction meets the congestion mark condition". This is because it is meaningless for the server to feed back the congestion mark of uplink reception to the terminal, as shown in FIG. 2A.

Another case is as follows: regardless of whether the terminal supports "setting the first congestion mark for the uplink data packet when the uplink direction meets the congestion mark condition", based on the first requirement, the RAN may "set the first congestion mark for the uplink data packet when the uplink direction meets the congestion mark condition". After receiving the congestion mark on the uplink, the server can negotiate a throughput rate, compression efficiency, and the like with the client on the terminal, which can also achieve congestion alleviation, as shown in FIG. 2A.

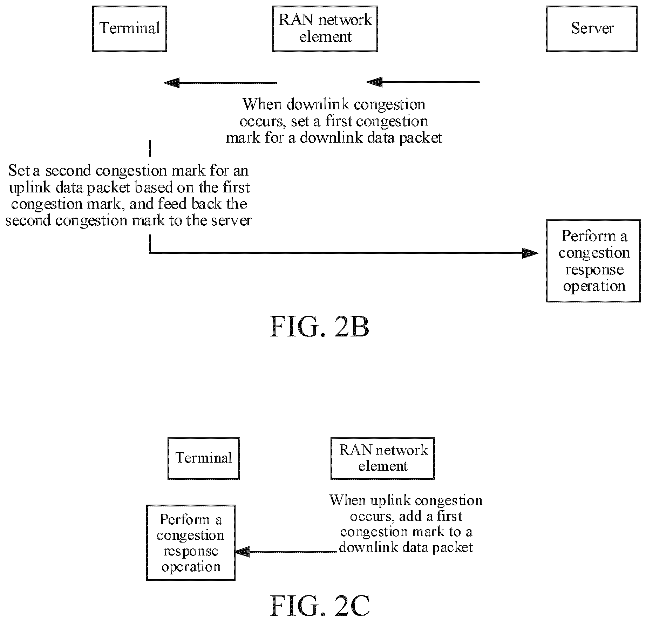

In another implementation, as shown in FIG. 2B, when downlink congestion occurs, the RAN network element sets a first congestion mark for a downlink data packet of a service and sends the first congestion mark to UE, and the UE sets a second congestion mark based on the first congestion mark and feeds back the second congestion mark to the server, so that the server adjusts coding efficiency or a throughput rate, discards a packet, sends a congestion window reduced mark (for example, sends CWR congestion window reduced), or reduces a queue length.

Therefore, it can be understood that in the congestion marking technology, except the RAN network element, the terminal and the server both need to have a capability, for example, an ECN capability and/or an L4S capability.

Therefore, to optimize the congestion processing method (especially, a downlink congestion mark), the following problems further need to be resolved:
Problem 1: An existing ECN capability is indicated by ECN marks of ECT (0) and ECT (1), and the ECN marks are carried in an IP layer and/or a TCP layer. Generally, data is carried and transmitted in a channel (for example, a quality of service (Quality of Service, QoS) flow), and the QoS flow is established after a session management function (Session Management function, SMF) initiates the establishment to the RAN. If an operation corresponding to an ECN mark is required for a data flow, when initiating channel (that is, a channel carrying the data flow) establishment or modification to the RAN, the SMF may instruct the RAN to perform, on data in the channel, the operation corresponding to the congestion mark (for example, the ECN mark). However, the SMF is a control plane node, and does not know whether the terminal supports the operation corresponding to the congestion mark. As shown in FIG. 2B, the operation corresponding to the congestion mark on the downlink needs to be completed by the terminal in cooperation with the RAN. If the terminal does not support the operation corresponding to the congestion mark, the operation corresponding to the congestion mark on the downlink fails.

Therefore, in a solution, the SMF needs to know the first capability information of the terminal in advance, that is, whether the operation corresponding to the congestion mark is supported. The terminal may report the first capability information to the SMF. A first capability may be a NAS capability (for example, a NAS session management capability).

In another solution, the RAN may determine, based on the first capability information of the terminal, to accept or reject the first requirement (for example, requiring to perform, on the downlink, the operation corresponding to the congestion mark) of the SMF. In this case, a channel has not been established, and data has not been sent. The terminal may report the first capability information to the RAN. The first capability may be an RRC capability.

Problem 2: The RAN cannot understand and parse a packet header of an IP layer and/or a TCP layer of the data packet. To support congestion marking, for uplink, the RAN may carry the congestion mark in one of the following: a TCP layer, an IP layer, and GTP-U. For downlink, the RAN may carry the congestion mark in one of the following: a TCP layer, an IP layer, an SDAP layer, a PDCP layer, and RRC signaling. For the congestion mark carried in the SDAP layer, the PDCP layer, or the RRC signaling, the terminal is required to have a new RRC capability. GTP-U refers to GPRS tunneling protocol for the user plane (GPRS Tunnelling Protocol for the user plane). GPRS refers to general packet radio service (General Packet Radio Service).

Problem 3: Even if the UE supports congestion mark technologies such as ECN and/or L4S, before data starts, it is not clear whether the UE intends to forward the ECN mark to the server or intends to set the ECN mark. Therefore, the RAN needs to obtain the intention of the UE in advance when performing downlink congestion ECN marking. Besides, it is not clear whether the default intention of the UE is to allow or not to allow.

Problem 4: Besides, before the data starts, it is not clear whether the server needs and understands ECN and/or L4S. Therefore, one of trigger condition for the RAN to set the ECN mark is that an indication that requires setting of the ECN mark is obtained. A disclosed solution is a specific 5G quality of service identifier (5G QoS Identifier, 5QI). However, a 5QI cannot be used to distinguish between an uplink ECN mark requirement and a downlink ECN mark requirement.

FIG. 1 is a schematic architectural diagram of a wireless communication system according to an embodiment of the present application. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home appliance (home equipments with a wireless communication function, such as a refrigerator, a TV, a washing machine or a furniture), and terminal side equipments such as a game console, a personal computer (personal computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific type of the terminal 11 is not limited in the embodiments of the present application. The network side device 12 may include an access network device or a core network device, where the access network device may also be called a radio access network device, a radio access network (Radio Access Network, RAN), a radio access network function or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited. The core network device may include but is not limited to at least one of the following: core network nodes, core network functions, mobility management entities (Mobility Management Entity, MME), access and mobility management functions (Access and Mobility Management Function, AMF), session management functions (Session Management Function, SMF), user plane functions (User Plane Function, UPF), policy control functions (Policy Control Function, PCF), policy and charging rules functions (Policy and Charging Rules Function, PCRF), edge application server discovery functions (Edge Application Server Discovery Function, EASDF), unified data management (Unified Data Management, UDM), unified data repository (Unified Data Repository, UDR), home subscriber servers (Home Subscriber Server, HSS), centralized network configuration (Centralized network configuration, CNC), network repository functions (Network Repository Function, NRF), network exposure functions (Network Exposure Function, NEF), local NEFs (Local NEF, or L-NEF), binding support functions (Binding Support Function, BSF), application functions (Application Function, AF), or the like. It should be noted that in the embodiments of the present application, only the core network device in the NR system is used as an example for introduction, and the specific type of the core network device is not limited.

Optionally, obtaining may be understood as obtaining from a configuration, obtaining through receiving, obtaining after receiving by using a request, obtaining through self-learning, obtaining through derivation based on information that is not received, or obtaining after processing based on received information. This may be specifically determined based on an actual requirement, and is not limited in the embodiments of the present application. For example, when specific capability indication information sent by a device is not received, it may be inferred that the device does not support the capability.

Optionally, sending may include broadcasting, broadcasting in a system message, and returning after responding to a request.

In an optional embodiment of the present application, a communication device may include at least one of the following: a communication network element and a terminal.

In an embodiment of the present application, the communication network element may include at least one of the following: a core network element and a radio access network element.

In the embodiments of the present application, the core network (Core Network, CN) element may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gateway, PDN gateway), a policy control function (Policy Control Function, PCF), a policy and charging rules function (Policy and Charging Rules Function, PCRF) unit, a serving GPRS support node (Serving GPRS Support Node, SGSN), a gateway GPRS support node (Gateway GPRS Support Node, GGSN), and an application function (Application Function).

In the embodiments of the present application, the RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, and N3IWF.

The base station may be a base transceiver station (BTS, Base Transceiver Station) in GSM or CDMA, a NodeB (NodeB) in WCDMA, an evolved NodeB (eNB or e-NodeB, evolutional NodeB) in LTE, or a 5G gNodeB (gNB), which is not limited in the embodiments of the present application.

In an optional embodiment of the present application, the UE may include one of the following: a terminal device, a terminal device and a card, and a card.

In an optional embodiment of the present application, the card may include one of the following: a subscriber identity module (Subscriber Identity Module, SIM) card, a universal subscriber identity module (Universal Subscriber Identity Module, USIM) card, and an embedded-SIM (Embedded-SIM, eSIM) card.

In an optional embodiment of the present application, the terminal may include a relay supporting a terminal function and/or a terminal supporting a relay function. The terminal may also be referred to as a terminal device or user equipment (User Equipment, UE). The terminal may be a terminal side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that the specific type of the terminal is not limited in the embodiments of the present application.

In at least one optional embodiment of the present application, an operation corresponding to a congestion mark is equivalent to a function corresponding to the congestion mark.

In an optional embodiment of the present invention, the operation and/or the function corresponding to the congestion mark may be instantiated as follows: ECN (for example, an operation corresponding to ECN), and L4S (for example, an operation corresponding to L4S).

In an optional embodiment of the present invention, a congestion mark, a first congestion mark, and a second congestion mark may indicate occurrence of congestion. The first congestion mark is the same as or different from the second congestion mark. The first congestion mark is, for example, CE in ECN. The second congestion mark is, for example, ECE (ECN Echo).

In an optional embodiment of the present invention, mark information related to the congestion mark includes the congestion mark. The mark information related to the congestion mark may further include a mark indicating first capability information. For example, supporting the operation and/or the function corresponding to the congestion mark may be instantiated as ECT (0) or ECT (1) in the ECN mark. Not supporting the operation and/or the function corresponding to the congestion mark may be instantiated as Not ECT in the ECN mark.

The recognizing the mark information related to the congestion mark in the first protocol layer includes at least one of the following: reading the mark information related to the congestion mark from the first protocol layer; and understanding a meaning of the mark information related to the congestion mark (for example, understanding a meaning of ECT (0), ECT (1), Not ECT, and CE).

In an optional embodiment of the present invention, the meeting the congestion mark condition includes at least one of the following: congestion occurs, a congestion level is reached, a resource load threshold corresponding to the congestion mark is reached, a length of a queue for data queuing is reached, the queue for data queuing overflows or nearly overflows, and a threshold of the queue for data queuing corresponding to the congestion mark is reached. In an implementation, congestion mark conditions corresponding to an ECN congestion mark and an L4S congestion mark are different.

In an optional embodiment of the present invention, the performing, on a downlink by the first communication device, the operation corresponding to the congestion mark includes at least one of the following: setting the first congestion mark for the downlink data packet when the downlink direction meets the congestion mark condition; and recognizing the mark information related to the congestion mark in the first protocol layer.

In an optional embodiment of the present invention, the performing, on a downlink by the terminal, the operation corresponding to the congestion mark includes at least one of the following: setting, based on the received first congestion mark, the second congestion mark for the uplink data packet for feedback; and recognizing the mark information related to the congestion mark in the first protocol layer.

In an optional embodiment of the present invention, the first requirement or the requiring, by the first requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback; and requiring to recognize the mark information related to the congestion mark in the first protocol layer.

The second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer.

The third requirement or the requiring, by the third requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to feed back (for example, feed back through an ECN echo mark) the congestion mark through an uplink data packet; and requiring to recognize the mark information related to the congestion mark in the first protocol layer.

In an optional embodiment of the present invention, the performing, on an uplink by the first communication device, the operation corresponding to the congestion mark includes at least one of the following:
setting the first congestion mark for the uplink data packet when the uplink direction meets the congestion mark condition;
sending the congestion mark or the congestion status to the terminal when the uplink direction meets the congestion mark or the congestion condition; and
recognizing the mark information related to the congestion mark in the first protocol layer.

In an optional embodiment of the present invention, the performing, on an uplink by the terminal, the operation corresponding to the congestion mark includes at least one of the following:
setting the first congestion mark for the uplink data packet when the uplink direction meets the congestion mark condition;
performing the congestion response operation on the uplink based on the received congestion mark; and
recognizing the mark information related to the congestion mark in the first protocol layer.

In an optional embodiment of the present invention, the first requirement or the requiring, by the first requirement, to perform, on the uplink, the operation corresponding to the congestion mark includes at least one of the following:
setting the first congestion mark (for example, a congestion occurrence mark CE in ECN) for the uplink data packet when an uplink direction meets the congestion mark condition;
sending the first congestion mark or the congestion status to the terminal when the uplink direction meets the congestion mark or the congestion condition; and
performing the congestion response operation on the uplink based on the received congestion mark.

In an optional embodiment of the present invention, the second requirement or the requiring, by the second requirement, the terminal to perform, on the uplink, the operation corresponding to the congestion mark includes:
setting the first congestion mark (for example, a congestion occurrence mark CE in ECN) for the uplink data packet when an uplink direction meets the congestion mark condition; and
performing the congestion response operation on the uplink based on the received congestion mark.

In an optional embodiment of the present invention, the third requirement or the requiring, by the third requirement, to perform, on the uplink, the operation corresponding to the congestion mark includes:
setting the first congestion mark (for example, a congestion occurrence mark CE in ECN) for the uplink data packet when an uplink direction meets the congestion mark condition; and
performing the congestion response operation on the uplink based on the received congestion mark.

A first capability includes: a capability required for the operation and/or the function corresponding to the congestion mark.

In an optional embodiment of the present invention, the supporting, by the first communication device, performing, on a downlink, the operation corresponding to the congestion mark includes at least one of the following: supporting setting the first congestion mark for the downlink data packet when the downlink direction meets the congestion mark condition; and supporting recognizing the mark information related to the congestion mark in the first protocol layer.

In an optional embodiment of the present invention, the supporting, by the terminal, performing, on a downlink, the operation corresponding to the congestion mark includes at least one of the following: supporting setting, based on the received first congestion mark, the second congestion mark for the uplink data packet for feedback; and supporting recognizing the mark information related to the congestion mark in the first protocol layer.

In an optional embodiment of the present invention, the supporting, by first communication device, to perform, on an uplink, the operation and/or the function corresponding to the congestion mark includes at least one of the following:
supporting setting the first congestion mark (for example, a congestion occurrence mark CE in ECN) for the uplink data packet when an uplink direction meets the congestion mark condition;
supporting setting the first congestion mark (for example, a congestion occurrence mark CE in congestion) for the downlink data packet when an uplink direction meets the congestion mark condition; and
supporting sending the congestion mark or the congestion status to the terminal when the uplink direction meets the congestion mark or the congestion condition.

In an optional embodiment of the present invention, the supporting, by the terminal, performing the operation and/or the function corresponding to the congestion mark on an uplink includes at least one of the following:
supporting setting the first congestion mark (for example, a congestion occurrence mark CE in ECN) for the uplink data packet when an uplink direction meets the congestion mark condition;
supporting performing the congestion response operation on the uplink based on the received congestion mark; and
supporting recognizing the mark information related to the congestion mark in the first protocol layer.

In an optional embodiment of the present invention, the first requirement, the second requirement, and/or the third requirement may be indicated by a first QoS identifier (for example, 5QI). The first QoS identifier indicates the second requirement and/or the third requirement, that is, require to perform the operation corresponding to the congestion mark. When the operation corresponding to the congestion mark is distinguished between uplink and downlink, there may alternatively be two first QoS identifiers, which respectively indicate uplink and downlink.

In an optional embodiment of the present invention, the channel includes at least one of the following: a session (session) (for example, a protocol data unit (Protocol Data Unit, PDU) session or a session between a RAN and a CN), a QoS flow, a QoS sub-flow, an evolved packet system (Evolved Packet System, EPS) bearer, a PDP context, a DRB, a signaling radio bearer (Signaling Radio Bearer, SRB), an IPsec association, and a GPRS tunnelling protocol (GPRS Tunnelling Protocol, GTP) tunnel (tunnel). The channel may be instantiated as any one of the foregoing types of channels.

In an optional embodiment of the present application, a data packet set may be referred to as a data set for short. The data packet set includes one or more data packets. Optionally, the data packet set has boundary.

In an optional embodiment of the present application, the data packet set is a concept in a cellular mobile communication network. The data packet set may be a paragraph formed by one or more data packets or a set formed by one or more data packets in a channel (for example, a QoS flow, a QoS sub-flow, or a radio bearer).

In an optional embodiment of the present application, the data packet may be a PDU packet data unit.

In an optional embodiment of the present application, the data packet set may be one of the following: a packet data unit set (PDU Set), an instance of the PDU set, a PDU set class, an instance of the PDU set class, and a data paragraph or a data packet set in a channel (for example, a QoS flow, a QoS sub-flow, or a radio bearer).
(1) In an implementation, a PDU set class may include a plurality of PDU set instances. A PDU set class may be identified by a PDU set identifier (for example, a QoS identifier at a PDU set level). A plurality of different PDU set instances of a same PDU set may be distinguished by data packet set sequence numbers (for example, PDU set sequence numbers).
(2) In another implementation, a PDU set class may include a plurality of PDU sets. The PDU set is an instance of the PDU set class. A PDU set class may be identified by a PDU set identifier (for example, a QoS identifier at a PDU set level). A plurality of different PDU sets of a same PDU set class may be distinguished by data packet set sequence numbers (for example, PDU set sequence numbers).

In an optional embodiment of the present application, the data packet set class may be one of the following: a packet data unit set (PDU Set) and a channel (for example, a QoS flow, a QoS sub-flow, and a radio bearer). One data packet set class may correspond to a plurality of data packet sets. The data packet set is an instance of the data packet set class. The data packet set class may be identified by a data packet set class identifier. An identifier of the data packet set class is, for example, a QoS identifier at a data packet set level. In this case, a plurality of data packet sets may be distinguished by sequence numbers of the data packet sets.

In an implementation, classes of the one or more data packet sets are the same or different. Different classes of data packet sets may be distinguished by identifiers of the data packet sets. Different data packet sets of a same class may be distinguished by sequence numbers of the data packet sets.

In an optional embodiment of the present application, the PDU set is as follows: The PDU set is formed by one or more PDUs, and these PDUs carry a payload (for example, a frame or a video slice (video slice)) of an information unit generated at an application program level. In some implementations, an application layer needs all PDUs in the PDU set to use a corresponding information unit. In other implementations, when some PDUs are lost, the application layer may still recover the entire or a part of the information unit.

The following describes the method in the embodiments of the present application.

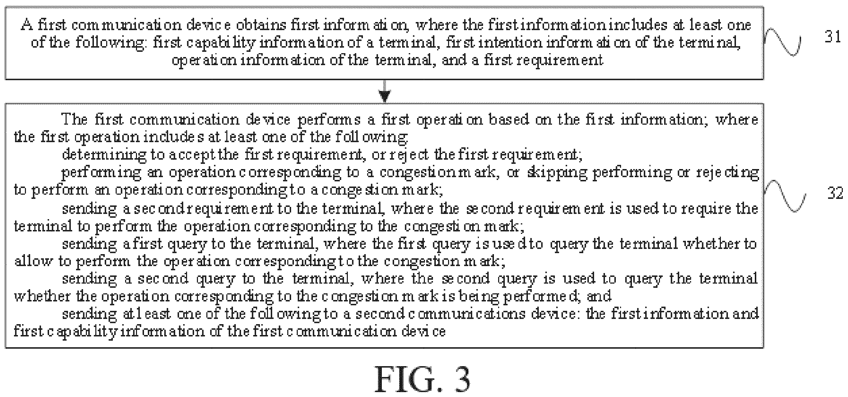

Referring to FIG. 3, an embodiment of the present application provides a congestion processing method, applied to a first communication device. The first communication device includes, but is not limited to, a radio access network RAN network element (for example, a base station). The method includes:
Step 31: A first communication device obtains first information; where the first information includes at least one of the following: first capability information of a terminal, first intention information of the terminal, operation information of the terminal, and a first requirement; and
Step 32: The first communication device performs a first operation based on the first information; where the first operation includes at least one of the following:
   determining to accept the first requirement or reject the first requirement;
   performing the operation corresponding to the congestion mark, or skipping performing or rejecting to perform the operation corresponding to the congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark;
   sending a second query to the terminal, where the second query is used to query the terminal whether the operation corresponding to the congestion mark is being performed; and
   sending at least one of the following to a second communication device: the first information and first capability information of the first communication device; where
   the first capability information includes at least one of the following:
      supporting the operation and/or a function corresponding to the congestion mark; and
      not supporting the operation and/or the function corresponding to the congestion mark; where a first capability includes: the operation and/or a function corresponding to the congestion mark;
      the first intention information of the terminal includes at least one of the following:
      allowing, by the terminal and/or a user, to perform the operation corresponding to the congestion mark; and
      not allowing, by the terminal and/or the user, to perform the operation corresponding to the congestion mark;
      the operation information of the terminal includes at least one of the following:
         the terminal is performing the operation corresponding to the congestion mark; and
         the terminal has not performed the operation corresponding to the congestion mark; and
         the first requirement is used to require to perform the operation corresponding to congestion mark.

Optionally, the congestion mark includes a codepoint that is set in a first mark bit of a first protocol layer of a data packet.

The codepoint includes at least one of the following: a codepoint for indicating congestion, a codepoint for indicating supporting the operation corresponding to the congestion mark, a codepoint for indicating not supporting the operation corresponding to the congestion mark, and a codepoint for indicating different congestion responses.

In an implementation, the first communication device obtains the first requirement from a first source end device. The first source end device includes at least one of the following: a second communication device, a CN network element (for example, an AMF, an SMF, and a PCF), and a terminal. The first communication device may return a first response to the first source end device.

In an implementation, the first communication device obtains at least one of the following from the terminal: first capability information of the terminal, first intention information of the terminal, and operation information of the terminal. In a manner, the first communication device obtains the foregoing information through control plane signaling of the terminal, and in another manner, the first communication device obtains the foregoing information through data of the terminal. For example, a value of an ECN identifier carried in the data packet being ECT (0) or ECT (1) may indicate that the terminal supports ECN.

In an implementation, the second communication device is a CN network element (for example, an AMF, an SMF, or a PCF).

In an implementation, the first source end device that sends the first requirement considers the first communication device (for example, the RAN) and the terminal as a whole, and sends the first requirement to the first communication device, to require the first communication device and a second target device to execute the first requirement jointly. In this case, the first requirement may include: requiring to set the first congestion mark for the downlink data packet when the congestion mark condition is met; and requiring to echo (for example, ECN Echo) the congestion mark through an uplink data packet. In this case, the first communication device needs to determine the second requirement based on a task of the first requirement, and deliver the second requirement to the terminal for execution.

In another implementation, the first source end device directly divides a task and then sends the divided task to the first communication device (for example, the RAN) and the terminal for separate execution. In this case, the first requirement may include only a task that the first communication device needs to perform. For example, the first congestion mark is set for the downlink data packet when the congestion mark condition is met. In this case, the first communication device does not need to divide to obtain the second requirement based on the first requirement either.

Optionally, the congestion mark is, for example, an ECN mark or an ECN mark corresponding to L4S. Therefore, the supporting the operation and/or the function corresponding to the congestion mark may be understood as at least one of the following: supporting ECN (for example, supporting an operation corresponding to ECN), and supporting L4S (for example, supporting an operation corresponding to L4S). The not supporting the operation corresponding to the congestion mark may be understood as at least one of the following: not supporting ECN (for example, not supporting an operation corresponding to ECN), and not supporting L4S (for example, not supporting an operation corresponding to L4S).

In an implementation, supporting ECN does not necessarily indicate supporting L4S. Supporting L4S needs to ensure supporting ECN.

In an implementation, when the first capability information of the terminal is not obtained, it is implicitly indicated that the terminal does not support the operation corresponding to the congestion mark.

In an implementation, the first capability of the terminal may be an RRC capability of the terminal, a NAS capability of the terminal, a mobility management capability of the terminal, or a session management capability of the terminal.

Optionally, the supporting the operation and/or the function corresponding to the congestion mark includes at least one of the following: supporting performing, on a downlink, the operation and/or the function corresponding to the congestion mark, and supporting performing, on an uplink, the operation and/or the function corresponding to the congestion mark.

The supporting, by the terminal and/or the first communication device, ECN includes at least one of the following: supporting setting a first ECN mark (for example, a CE mark) when congestion occurs; supporting setting, based on the received ECN mark (for example, the CE mark), a second ECN mark (for example, an ECN echo mark) for feedback; and understanding a capability of the ECN mark.

The supporting, by the terminal and/or the first communication device, L4S includes at least one of the following: supporting ECN; supporting setting, when congestion occurs, an ECN mark corresponding to L4S; supporting setting, based on the received first ECN mark (for example, the CE mark) corresponding to L4S, a second ECN mark (for example, an ECN echo mark) corresponding to L4S for feedback; and understanding a capability of the ECN mark corresponding to L4S.

In an implementation, the supporting, by the terminal, ECN includes at least one of the following: supporting, by the terminal, setting, based on the received first ECN mark (for example, the CE mark), a second ECN mark (for example, an ECN echo mark) for feedback. The received first ECN mark is carried by a downlink data packet. That is, the ECN capability of the terminal does not need to support setting the first ECN mark, but needs to support feeding back the second ECN mark to the server.

In an implementation, the supporting, by the first communication device (for example, the RAN network element), the ECN includes at least one of the following: supporting a capability of setting a first ECN mark when congestion occurs. That is, the first communication device is not responsible for feeding back the second ECN mark to the server.

In an implementation, the "supporting, by the terminal, setting, based on the received ECN mark (for example, the CE mark), a second ECN mark (for example, an ECN echo mark) for feedback" can be understood as: not requiring the terminal to understand the meaning of the ECN mark. In another implementation, the "supporting, by the terminal, setting, based on the received ECN mark (for example, the CE mark), a second ECN mark (for example, an ECN echo mark) for feedback" can be understood as: requiring the terminal to understand the meaning of the ECN mark.

In an implementation, the supporting, by the terminal, L4S includes at least one of the following: supporting, by the terminal, ECN, and supporting, by the terminal, a capability of setting, when congestion occurs, a first ECN mark corresponding to L4S; and supporting, by the terminal, a capability of understanding the ECN mark corresponding to L4S.

Optionally, the allowing, by the terminal and/or the user, to perform the operation corresponding to the congestion mark includes at least one of the following: allowing, by the terminal and/or the user, ECN (for example, allowing an operation corresponding to the ECN), and allowing, by the terminal and/or the user, L4S (for example, allowing an operation corresponding to L4S).

Optionally, the not allowing, by the terminal and/or the user, to perform the operation corresponding to the congestion mark includes at least one of the following: not allowing, by the terminal and/or the user, ECN (for example, not allowing an operation corresponding to the ECN), and not allowing, by the terminal and/or the user, L4S (for example, not allowing an operation corresponding to L4S).

In an implementation, a terminal and/or a user that allows ECN does not necessarily allow L4S. A terminal and/or a user that allows L4S needs to allow ECN.

In an implementation, the allowing, by the terminal and/or the user, to perform the operation corresponding to the congestion mark includes: allowing, by the terminal and/or the user, to perform, on a downlink, the operation corresponding to the congestion mark, and allowing, by the terminal and/or the user, to perform, on an uplink, the operation corresponding to the congestion mark. The congestion mark is, for example, an ECN mark or an ECN mark corresponding to L4S.

In an implementation, the not allowing, by the terminal and/or the user, to perform the operation corresponding to the congestion mark includes: not allowing, by the terminal and/or the user, to perform, on a downlink, the operation corresponding to the congestion mark, and not allowing, by the terminal and/or the user, to perform, on an uplink, the operation corresponding to the congestion mark.

Further, the allowing, by the terminal and/or the user, to perform the operation corresponding to the congestion mark may further include: allowing, by the terminal and/or the user, to perform, on data of the first object, the operation corresponding to the congestion mark.

Further, the allowing, by the terminal and/or the user, to perform, on the downlink, the operation corresponding to the congestion mark may further include: allowing, by the terminal and/or the user, to perform, on downlink data of the first object, the operation corresponding to the congestion mark.

Further, the allowing, by the terminal and/or the user, to perform, on the uplink, the operation corresponding to the congestion mark may further include: allowing, by the terminal and/or the user, to perform, on uplink data of the first object, the operation corresponding to the congestion mark. A case of not allowing is similar, and details are not described herein again.

Therefore, in an implementation, the first intention information may further include: description information of the first object. In another implementation, the first intention information is at the granularity of the first object and may be carried in signaling or an information element corresponding to the granularity of the first object.

In an implementation, when the first intention information of the terminal is not obtained, it is implicitly indicated that the terminal and/or the user does not allow to perform the operation corresponding to the congestion mark.

In an implementation, that the terminal is performing the operation corresponding to the congestion mark includes: performing, on a downlink by the terminal, the operation corresponding to the congestion mark, and performing, on an uplink by the terminal, the operation corresponding to the congestion mark. The congestion mark is, for example, an ECN mark or an ECN mark corresponding to L4S.

In an implementation, that the terminal has not performed the operation corresponding to the congestion mark includes: the terminal has not performed, on a downlink, the operation corresponding to the congestion mark, and the terminal has not performed, on an uplink, the operation corresponding to the congestion mark.

Further, that the terminal is performing the operation corresponding to the congestion mark may further include: the terminal is performing, on data of the first object, the operation corresponding to the congestion mark.

Further, that the terminal is performing, on the downlink, the operation corresponding to the congestion mark may further include: the terminal is performing, on downlink data of the first object, the operation corresponding to the congestion mark.

Further, that the terminal is performing, on the uplink, the operation corresponding to the congestion mark may further include: the terminal is performing, on uplink data of the first object, the operation corresponding to the congestion mark.

Further, that the terminal has not performed the operation corresponding to the congestion mark may further include: the terminal has not performed, on the data of the first object, the operation corresponding to the congestion mark.

Further, that the terminal has not performed, on the downlink, the operation corresponding to the congestion mark may further include: the terminal has not performed, on the downlink data of the first object, the operation corresponding to the congestion mark.

Further, that the terminal has not performed, on the uplink, the operation corresponding to the congestion mark may further include: the terminal has not performed, on the uplink data of the first object, the operation corresponding to the congestion mark.

Therefore, in an implementation, the operation information of the terminal may further include: description information of the first object. In another implementation, the operation information of the terminal is at the granularity of the first object and may be carried in signaling or an information element corresponding to the granularity of the first object.

In an implementation, when the operation information of the terminal is not obtained, at least one of the following is implicitly indicated: the terminal has not performed the operation corresponding to the congestion mark.

An operation corresponding to ECN includes at least one of the following: a downlink operation corresponding to ECN, and an uplink operation corresponding to ECN.

An operation corresponding to L4S includes at least one of the following: a downlink operation corresponding to L4S, and an uplink operation corresponding to L4S.

In an implementation, the requiring, by the first requirement, to perform the operation corresponding to the congestion mark includes: requiring to perform, on a downlink, the operation corresponding to the congestion mark, and requiring to perform, on an uplink, the operation corresponding to the congestion mark; and the congestion mark is, for example, an ECN mark or an ECN mark corresponding to L4S.

Further, the requiring to perform the operation corresponding to the congestion mark may include: requiring to perform, on data of the first object, the operation corresponding to the congestion mark.

Further, the requiring to perform, on the downlink, the operation corresponding to the congestion mark may include: requiring to perform, on downlink data of the first object, the operation corresponding to the congestion mark.

Further, the requiring to perform, on the uplink, the operation corresponding to the congestion mark may include: requiring to perform, on uplink data of the first object, the operation corresponding to the congestion mark.

Therefore, in an implementation, the first requirement may further include: description information of the first object. In another implementation, the first requirement is at the granularity of the first object and may be carried in signaling or an information element corresponding to the granularity of the first object.

In an implementation, the requiring the terminal to perform the operation corresponding to the congestion mark includes: requiring the terminal to perform, on a downlink, the operation corresponding to the congestion mark, and requiring the terminal to perform, on an uplink, the operation corresponding to the congestion mark. The congestion mark is, for example, an ECN mark or an ECN mark corresponding to L4S.

Further, the requiring the terminal to perform the operation corresponding to the congestion mark may further include: requiring the terminal to perform, on the first object, the operation corresponding to the congestion mark.

Further, the requiring to perform, on the downlink, the operation corresponding to the congestion mark may include: requiring the terminal to perform, on downlink data of the first object, the operation corresponding to the congestion mark.

Further, the requiring to perform, on the uplink, the operation corresponding to the congestion mark may include: requiring the terminal to perform, on uplink data of the first object, the operation corresponding to the congestion mark.

Therefore, in an implementation, the second requirement may further include: description information of the first object. In another implementation, the second requirement is at the granularity of the first object and may be carried in signaling or an information element corresponding to the granularity of the first object.

In an implementation, the querying the terminal whether to allow to perform the operation corresponding to the congestion mark includes: querying the terminal whether to allow to perform, on the downlink, the operation corresponding to the congestion mark, and querying the terminal whether to allow to perform, on the uplink, the operation corresponding to the congestion mark. The congestion mark is, for example, an ECN mark or an ECN mark corresponding to L4S.

Further, the querying the terminal whether to allow to perform the operation corresponding to the congestion mark may further include: querying the terminal whether to allow to perform, on data of the first object, the operation corresponding to the congestion mark.

Further, the querying the terminal whether to allow to perform, on a downlink, the operation corresponding to the congestion mark may include: querying the terminal whether to allow to perform, on downlink data of the first object, the operation corresponding to the congestion mark.

Further, the querying the terminal whether to allow to perform, on an uplink, the operation corresponding to the congestion mark may include: querying the terminal whether to allow to perform, on uplink data of the first object, the operation corresponding to the congestion mark.

Therefore, in an implementation, the first query may further include: description information of the first object. In another implementation, the first query is at the granularity of the first object and may be carried in signaling or an information element corresponding to the granularity of the first object.

In an implementation, the querying, by the first communication device, whether the terminal is performing the operation corresponding to the congestion mark includes: querying, by the first communication device, whether the terminal is performing, on the downlink, the operation corresponding to the congestion mark, and querying, by the first communication device, whether the terminal is performing, on the uplink, the operation corresponding to the congestion mark. The congestion mark is, for example, an ECN mark or an ECN mark corresponding to L4S.

Further, the querying, by the first communication device, whether the terminal is performing the operation corresponding to the congestion mark may further include: querying, by the first communication device, whether the terminal is performing, on data of the first object, the operation corresponding to the congestion mark.

Further, the querying, by the first communication device, whether the terminal is performing, on the downlink, the operation corresponding to the congestion mark may include: querying, by the first communication device, whether the terminal is performing, on downlink data of the first object, the operation corresponding to the congestion mark.

Further, the querying, by the first communication device, whether the terminal is performing, on the uplink, the operation corresponding to the congestion mark may include: querying, by the first communication device, whether the terminal is performing, on uplink data of the first object, the operation corresponding to the congestion mark.

Therefore, in an implementation, the second query may further include: description information of the first object. In another implementation, the second query is at the granularity of the first object and may be carried in signaling or an information element corresponding to the granularity of the first object.

Therefore, in an implementation, the first requirement, the second requirement, the first intention information, the operation information of the terminal, the first query, and/or the second query may further include: description information of the first object.

The first object includes at least one of the following: a service data flow, a data packet set, and a channel (for example, a QoS flow, a QoS sub-flow, and a radio bearer).

In an implementation, the first requirement, the second requirement, the first intention information, the operation information of the terminal, the first query, and/or the second query is at the granularity of the first object.

In an implementation, the first requirement, the second requirement, the first intention information, the operation information of the terminal, the first query, and/or the second query may be carried in signaling or an information element corresponding to the granularity of the first object.

In at least one embodiment of the present application,
the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
   and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control (Medium Access Control, MAC) layer, a radio link control (Radio Link Control, RLC) layer, a packet data convergence protocol (Packet Data Convergence Protocol, PDCP) layer, a service data adaptation protocol (Service Data Adaptation Protocol, SDAP) layer, a general packet radio service tunneling protocol for the user plane GTP-U layer, an Internet protocol IP layer, and a transmission control protocol TCP layer.

In an implementation, the mark information related to the congestion mark includes at least one of the following: a first congestion mark (for example, CE in ECN), and a mark supporting the operation and/or the function corresponding to the congestion mark (for example, ECT in ECN).

In an implementation, the first congestion mark includes at least one of: a first congestion mark on an uplink (for example, indicating that congestion occurs on the uplink), and a first congestion mark on a downlink (for example, indicating that congestion occurs on the downlink).

In an implementation, the congestion response operation includes at least one of the following: reducing a throughput rate, improving compression efficiency, discarding a packet, sending a congestion window reduced mark (for example, sending CWR congestion window reduced), and reducing a queue length. It can be understood that the congestion response operation can be used to alleviate congestion or eliminate congestion.

In an implementation, the congestion mark in the congestion response operation performed on the uplink based on the received first congestion mark or the second congestion mark may be a congestion mark that is fed back, as shown in FIG. 2A.

In an implementation, the sending the congestion mark or the congestion status to the terminal when the uplink direction meets the congestion mark condition includes at least one of the following: setting the first congestion mark in a downlink data packet (for example, a TCP ACK data packet, a PDCP data packet, an RLC data packet, or a MAC data packet), and sending the first congestion mark or the congestion status to the terminal by using radio resource control (Radio Resource Control, RRC) signaling. An example is shown in FIG. 2C.

In at least one embodiment of the present application,
the performing, on a downlink by the first communication device, the operation corresponding to the congestion mark includes at least one of the following: setting the first congestion mark for the downlink data packet when the downlink direction meets the congestion mark condition; and recognizing the mark information related to the congestion mark in the first protocol layer;
   and/or
the performing, on a downlink by the terminal, the operation corresponding to the congestion mark includes at least one of the following: setting, based on the received first congestion mark, the second congestion mark for the uplink data packet for feedback; and recognizing the mark information related to the congestion mark in the first protocol layer;
   and/or
the performing, on an uplink by the first communication device, the operation corresponding to the congestion mark includes at least one of the following:
   setting the first congestion mark for the uplink data packet when the uplink direction meets the congestion mark condition;
   sending the congestion mark or the congestion status to the terminal when the uplink direction meets the congestion mark or the congestion condition; and
   recognizing the mark information related to the congestion mark in the first protocol layer;
      and/or
   the performing, on an uplink by the terminal, the operation corresponding to the congestion mark includes at least one of the following:
      setting the first congestion mark for the uplink data packet when the uplink direction meets the congestion mark condition;
      performing the congestion response operation on the uplink based on the received first congestion mark or the second congestion mark; and
      recognizing the mark information related to the congestion mark in the first protocol layer;
         and/or
      the requiring, by the first requirement, to perform the operation corresponding to the congestion mark includes at least one of the following: requiring to perform, on the uplink, the operation corresponding to the congestion mark; and requiring to perform, on the downlink, the operation corresponding to the congestion mark;
         and/or
      the first requirement or the requiring, by the first requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer;
         and/or
      the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
         and/or
      the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer.

It can be understood that, when the first communication device can meet the congestion mark condition, the first congestion mark may be set for the downlink data packet, and the terminal feeds back the congestion mark to the server.

In an implementation, the first source end device that sends the first requirement considers the first communication device (for example, the RAN) and the terminal as a whole, and sends the first requirement to the first communication device, to require the first communication device and a second target device to execute the first requirement jointly. In this case, the first requirement may include: requiring to set the first congestion mark for the downlink data packet when the congestion mark condition is met; and requiring to echo (for example, ECN Echo) the congestion mark through an uplink data packet. In this case, the first communication device needs to determine the second requirement based on a task of the first requirement, and deliver the second requirement to the terminal for execution.

In another implementation, the first source end device directly divides a task and then sends the divided task to the first communication device (for example, the RAN) and the terminal for separate execution. In this case, the first requirement may include only a task that the first communication device needs to perform. For example, the first congestion mark is set for the downlink data packet when the congestion mark condition is met. In this case, the first communication device does not need to divide to obtain the second requirement based on the first requirement either.

The congestion response operation includes: for example, a sending party (for example, a terminal or a server) reduces uplink data transmission, improves data compression efficiency, discards a packet, sends a congestion window reduced mark (for example, sending CWR congestion window reduced), and reduces a queue length. It can be understood that the congestion response operation can be used to alleviate congestion or eliminate congestion.

**In** at least one embodiment of the present application, the first operation further includes at least one of the following:
sending a first response after the step of obtaining the first requirement;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; where
the first response includes at least one of the following:
   determining to accept the first requirement or reject the first requirement; and
   a failure cause or a rejection cause;
   the second response includes at least one of the following information:
   accepting the second requirement or rejecting the second requirement; and
   a failure cause or a rejection cause;
   the response to the first query includes one of the following:
      allowing, by the terminal and/or a user, to perform the operation corresponding to the congestion mark; and
      not allowing, by the terminal and/or the user, to perform the operation corresponding to the congestion mark; and
      the response to the second query includes one of the following:
         the terminal is performing the operation corresponding to the congestion mark; and
         the terminal has not performed the operation corresponding to the congestion mark.

In at least one embodiment of the present application, the failure cause or the rejection cause includes at least one of the following:
the terminal does not support the operation and/or the function corresponding to the congestion mark; and
the terminal and/or the user does not allow to perform the operation corresponding to the congestion mark.

In at least one embodiment of the present application, when a first condition is met, the first operation includes at least one of the following: performing the operation corresponding to the congestion mark, and determining to accept the first requirement; where
the first condition includes at least one of the following:
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement;
the terminal accepts that the operation corresponding to the congestion mark is being performed;
the first communication device supports the operation and/or the function corresponding to the congestion mark;
a resource of the first communication device can meet the first requirement; and
the first communication device has received the first requirement.

In at least one embodiment of the present application, when a second condition is met, the first operation includes at least one of the following: skipping performing or rejecting to perform the operation corresponding to the congestion mark; where
the second condition includes at least one of the following:
the terminal does not support the operation and/or the function corresponding to the congestion mark;
the terminal and/or a user does not allow to perform the operation corresponding to the congestion mark;
the terminal rejects the second requirement;
the terminal has not performed the operation corresponding to the congestion mark;
the first communication device has not received the first requirement;
the first communication device has received the first requirement, but a resource of the first communication device cannot meet the first requirement; and
the first communication device does not support the operation and/or the function corresponding to the congestion mark.

In an implementation, the first condition and the second condition further include: downlink congestion occurs or a downlink congestion level meets a congestion mark requirement.

In an implementation, when the terminal cannot feed back the downlink congestion mark to the server in cooperation, related marks of downlink marking performed by the first communication device are all meaningless.

In at least one embodiment of the present application, when a third condition is met, the first operation includes at least one of the following: rejecting the first requirement; where
the third condition includes at least one of the following:
the terminal does not support the operation and/or the function corresponding to the congestion mark;
the terminal and/or a user does not allow to perform the operation corresponding to the congestion mark;
the terminal rejects the second requirement;
the terminal has not performed the operation corresponding to the congestion mark;
the first communication device does not support the operation and/or the function corresponding to the congestion mark;
the first communication device has received the first requirement; and
a resource of the first communication device cannot meet the first requirement.

In at least one embodiment of the present application, when a fourth condition is met, the first operation includes at least one of the following: sending the second requirement to the terminal; where
the fourth condition includes at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device has received the first requirement; and
a resource of the first communication device can meet the first requirement.

In at least one embodiment of the present application, when a fifth condition is met, the first operation includes at least one of the following: sending the first query to the terminal; where
the fifth condition includes at least one of the following:
the terminal supports the operation and/or the function corresponding to the congestion mark;
the first communication device cannot determine whether the terminal allows to perform the operation corresponding to the congestion mark;
the first communication device supports the operation and/or the function corresponding to the congestion mark;
the first communication device has received the first requirement; and
a resource of the first communication device can meet the first requirement.
In at least one embodiment of the present application, when a sixth condition is met, the first operation includes at least one of the following: sending the second query to the terminal; where
the sixth condition includes at least one of the following:
   the terminal supports the operation and/or the function corresponding to the congestion mark;
   the first communication device cannot determine whether the terminal is performing the operation corresponding to the congestion mark;
   the first communication device supports the operation and/or the function corresponding to the congestion mark;
   the first communication device has received the first requirement; and
   a resource of the first communication device can meet the first requirement.

In an implementation, an object of the operation corresponding to the congestion mark that the terminal is required to perform, and/or an object of query information sent to a terminal is: service data in a specified radio bearer (for example, a data radio bearer (Data Radio Bearer, DRB)) or any service data of the terminal.

In an implementation, when the object is service data of a specified radio bearer, the operation corresponding to the congestion mark that the terminal is required to perform, and/or query information is sent to the terminal through signaling or an information element related to the radio bearer.

In at least one embodiment of the present application, the performing, by the first communication device, the operation corresponding to the congestion mark includes: performing, on a downlink by the first communication device, the operation corresponding to the congestion mark;
and/or
skipping, by the first communication device, performing or rejecting to perform the operation corresponding to the congestion mark includes: skipping, by the first communication device, performing, on a downlink, or rejecting to perform, on a downlink, the operation corresponding to the congestion mark;
   and/or
the first requirement or the first requirement in an N^{th} condition includes: requiring to perform, on the downlink, the operation corresponding to the congestion mark;
   and/or
the second requirement or the second requirement in an N^{th} condition includes: requiring to perform, on the downlink, the operation corresponding to the congestion mark;
   and/or
the first query includes: querying the terminal whether to allow to perform, on a downlink, the operation corresponding to the congestion mark;
   and/or
the second query includes: querying whether the terminal is performing, on a downlink, the operation corresponding to the congestion mark;
   and/or
the supporting, by the terminal, the operation and/or the function corresponding to the congestion mark in the N^{th} condition includes: supporting, by the terminal, performing, on a downlink, the operation and/or the function corresponding to the congestion mark;
   and/or
the allowing, by the terminal and/or the user, to perform the operation corresponding to the congestion mark in the N^{th} condition includes: allowing, by the terminal and/or the user, to perform, on a downlink, the operation corresponding to the congestion mark;
   and/or
that the terminal is performing the operation corresponding to the congestion mark in the N^{th} condition includes: the terminal is performing, on a downlink, the operation corresponding to the congestion mark;
   and/or
the not supporting, by the terminal, the operation and/or the function corresponding to the congestion mark in the N^{th} condition includes: not supporting, by the terminal, performing, on a downlink, the operation and/or the function corresponding to the congestion mark;
   and/or
the not allowing, by the terminal and/or the user, to perform the operation corresponding to the congestion mark in the N^{th} condition includes: not allowing, by the terminal and/or the user, to perform, on a downlink, the operation corresponding to the congestion mark;
   and/or
that the terminal has not performed the operation corresponding to the congestion mark in the N^{th} condition includes: the terminal has not performed, on a downlink, the operation corresponding to the congestion mark; where
the N^{th} condition includes at least one of the following: the first condition, the second condition, the third condition, the fourth condition, the fifth condition, and the sixth condition.
In at least one embodiment of the present application, the performing the operation corresponding to the congestion mark includes: performing, on a downlink, the operation corresponding to the congestion mark;
   and/or
the operation corresponding to the congestion mark includes an operation corresponding to a downlink congestion mark.

Alternatively, in another implementation, the performing the operation corresponding to the congestion mark includes: performing, on an uplink, the operation corresponding to the congestion mark.

Alternatively, in another implementation, the operation corresponding to the congestion mark includes an operation corresponding to an uplink congestion mark.

For example, the first communication device performs, on the uplink, the operation corresponding to the congestion mark, so that the server feeds back the congestion mark to the terminal, and the terminal performs the congestion response operation on the uplink based on the received first congestion mark or the second congestion mark. This operation is meaningful only when the terminal supports performing the congestion response operation on the uplink based on the received first congestion mark or the second congestion mark.

In at least one embodiment of the present application,
at least one of the first requirement, the second requirement, the first intention information, the operation information of the terminal, the first query, and the second query is granularity information of a first object;
   and/or
at least one of the first requirement, the second requirement, the first intention information, the operation information of the terminal, the first query, and the second query further includes: description information of the first object;
   and/or
at least one of the first requirement, the second requirement, the first intention information, the operation information of the terminal, the first query, and the second query is carried in signaling or an information element corresponding to a granularity of the first object; where
the first object includes at least one of the following: a terminal, a service data flow, a data packet set, and a channel (for example, a QoS flow, a QoS sub-flow, and a radio bearer).

In this embodiment of the present application, the first communication device performs the first operation based on the obtained first information. The first operation includes at least one of the following: determining to accept the request of performing the operation corresponding to the congestion mark, or reject the request of performing the operation corresponding to the congestion mark; performing the operation corresponding to the congestion mark, or skipping performing or rejecting to perform the operation corresponding to the congestion mark; sending the second requirement to the terminal; sending the first query to the terminal; sending the second query to the terminal; and sending at least one of the first information and the first capability information of the first communication device to the second communication device. In the embodiments of the present application, the first communication device determines, based on a capability of the terminal, whether to accept or reject the congestion mark requirement, thereby avoiding a problem that the terminal cannot process the congestion mark in cooperation, and improving congestion processing efficiency.

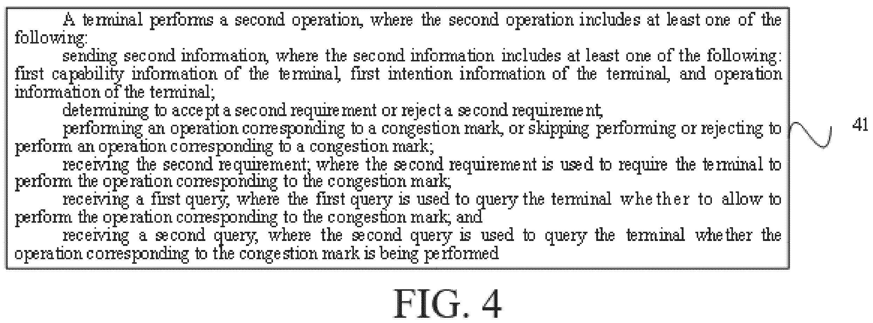

Referring to FIG. 4, an embodiment of the present application provides a congestion processing method, applied to a terminal. The method includes:
Step 41: A terminal performs a second operation, where the second operation includes at least one of the following:
sending second information, where the second information includes at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information includes at least one of the following: supporting the operation and/or a function corresponding to the congestion mark, and not supporting the operation and/or the function corresponding to the congestion mark; where a first capability includes: the operation and/or a function corresponding to the congestion mark;
the first intention information of the terminal includes at least one of the following:
   allowing, by the terminal and/or a user, to perform the operation corresponding to the congestion mark; and
   not allowing, by the terminal and/or the user, to perform the operation corresponding to the congestion mark; and
   the operation information of the terminal includes at least one of the following:
      the terminal is performing the operation corresponding to the congestion mark; and
      the terminal has not performed the operation corresponding to the congestion mark.

In an implementation, the terminal obtains the second requirement, the first query, and/or the second query from the first source end device, where the first source end device includes at least one of the following: the first communication device, the second communication device, the RAN network element, and the CN network element (for example, an SMF).

In an implementation, the terminal sends a second response, a first query response, and/or a second query response to the second source end device.

In an implementation, the step of sending the second information by the terminal is performed before the step of performing the operation corresponding to the congestion mark.

In an implementation, the terminal sends the second information to a fourth target device, where the fourth target device includes: the first communication device, the second communication device, the RAN network element, and the CN network element (for example, an SMF).

In an implementation, the second information can be used by the RAN network element to determine to perform or not to perform the operation corresponding to the congestion mark.

In an implementation, before the step of performing the operation corresponding to the congestion mark, the second requirement is received. Correspondingly, the terminal performs, based on the second requirement, the operation corresponding to the congestion mark.

Details of the first requirement, the second requirement, the first intention information, the operation information of the terminal, the first query, and/or the second query are specifically described in the embodiment of FIG. 3, and are not repeated herein.

In at least one embodiment of the present application, the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing the congestion response operation on the uplink based on the received first congestion mark or the second congestion mark; and recognizing the mark information related to the congestion mark in the first protocol layer;
and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

In an implementation, the mark information related to the congestion mark includes at least one of the following: a first congestion mark (for example, CE in ECN), and a mark supporting the operation and/or the function corresponding to the congestion mark (for example, ECT in ECN).

In an implementation, the first congestion mark includes at least one of: a first congestion mark on an uplink (for example, indicating that congestion occurs on the uplink), and a first congestion mark on a downlink (for example, indicating that congestion occurs on the downlink).

In an implementation, the feeding back the congestion mark or the feeding back the received congestion mark includes: feeding back, by a first end side, the received congestion mark to a second end side. The first end side is, for example, a client, and the second end side is, for example, a server. Alternatively, the first end side is, for example, a server, and the second end is, for example, a client. The first end and the second end may be two ends of a connection (for example, an IP connection or a TCP connection), as shown in FIG. 2A and FIG. 2B.

Generally, the congestion mark is fed back by being contained in an ACK data packet (for example, a TCP ACK data packet). The congestion mark contained in the ACK data packet is also referred to as an echo (Echo) congestion mark.

Therefore, feedback may be understood as echo. Feeding back the congestion mark may be referred to as echoing the congestion mark.

In an implementation, the congestion response operation includes at least one of the following: reducing a throughput rate, improving compression efficiency, discarding a packet, sending a congestion window reduced mark (for example, sending CWR congestion window reduced), and reducing a queue length. It can be understood that the congestion response operation can be used to alleviate congestion or eliminate congestion.

In an implementation, the performing the congestion response operation on the uplink based on the received first congestion mark or the second congestion mark is shown in FIG. 2A.

In an implementation, the sending the congestion mark or the congestion status to the terminal when the uplink direction meets the congestion mark condition includes at least one of the following: setting the first congestion mark in a downlink data packet (for example, a TCP ACK data packet, a PDCP data packet, an RLC data packet, or a MAC data packet), and sending the first congestion mark or the congestion status to the terminal by using RRC signaling. An example is shown in FIG. 2C.

In at least one embodiment of the present application, the performing, on a downlink by the terminal, the operation corresponding to the congestion mark includes at least one of the following: setting, based on the received first congestion mark, the second congestion mark for the uplink data packet for feedback; and recognizing the mark information related to the congestion mark in the first protocol layer;
and/or
the performing, on an uplink by the terminal, the operation corresponding to the congestion mark includes at least one of the following:
setting the first congestion mark for the uplink data packet when the uplink direction meets the congestion mark condition;
performing the congestion response operation on the uplink based on the received first congestion mark or the second congestion mark; and
recognizing the mark information related to the congestion mark in the first protocol layer;
   and/or
the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
   and/or
the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer.

The congestion response operation includes: for example, a sending party (for example, a terminal or a server) reduces uplink data transmission, improves data compression efficiency, discards a packet, sends a congestion window reduced mark (for example, sending CWR congestion window reduced), and reduces a queue length. It can be understood that the congestion response operation can be used to alleviate congestion or eliminate congestion.

In at least one embodiment of the present application, the second operation further includes at least one of the following:
sending a second response based on the received second requirement;
sending a response to the first query based on the received first query; and
sending a response to the second query based on the received second query; where
the second response includes at least one of the following:
accepting the second requirement or rejecting the second requirement; and
a failure cause or a rejection cause;
the response to the first query includes at least one of the following:
   allowing, by the terminal and/or a user, to perform the operation corresponding to the congestion mark; and
   not allowing, by the terminal and/or the user, to perform the operation corresponding to the congestion mark; and
   the response to the second query includes at least one of the following:
      the terminal is performing the operation corresponding to the congestion mark; and
      the terminal has not performed the operation corresponding to the congestion mark.

The failure cause or the rejection cause includes at least one of the following: the terminal does not support the operation and/or the function corresponding to the congestion mark; and the terminal and/or a user does not allow to perform the operation corresponding to the congestion mark.

**In** at least one embodiment of the present application, when a seventh condition is met, the second operation includes at least one of the following: performing the operation corresponding to the congestion mark, and determining to accept the second requirement; where
the seventh condition includes at least one of the following:
the terminal supports the operation and/or the function corresponding to the congestion mark;
the terminal and/or a user allows to perform the operation corresponding to the congestion mark;
a requirement that the terminal is performing the operation corresponding to the congestion mark; and
the terminal has received the second requirement.

**In** an implementation, the terminal receives the second requirement before performing the operation corresponding to the downlink ECN mark. Correspondingly, the terminal performs, based on the second requirement, the operation corresponding to the downlink ECN mark.

**In** at least one embodiment of the present application, the performing, by the terminal, the operation corresponding to the congestion mark includes: performing, on a downlink, the operation corresponding to the congestion mark;
and/or
the second requirement includes: requiring to perform, on the downlink, the operation corresponding to the congestion mark;
   and/or
the supporting, by the terminal, the operation and/or the function corresponding to the congestion mark in the seventh condition includes: supporting, by the terminal, performing, on a downlink, the operation and/or the function corresponding to the congestion mark;
   and/or
the allowing, by the terminal and/or the user, to perform the operation corresponding to the congestion mark in the seventh condition includes: allowing, by the terminal and/or the user, to perform, on a downlink, the operation corresponding to the congestion mark;
   and/or
that the terminal is performing the operation corresponding to the congestion mark in the seventh condition includes: the terminal is performing, on a downlink, the operation corresponding to the congestion mark.

In at least one embodiment of the present application, when the second operation includes performing the operation corresponding to the congestion mark, before the step of performing the operation corresponding to the congestion mark, the method further includes: receiving the second requirement; where
the performing the operation corresponding to the congestion mark includes:
performing, based on the second requirement, the operation corresponding to the congestion mark.

In at least one embodiment of the present application, the performing the operation corresponding to the congestion mark includes: performing, on a downlink, the operation corresponding to the congestion mark;
and/or
the operation corresponding to the congestion mark includes an operation corresponding to a downlink congestion mark.

Alternatively, in another implementation, the performing the operation corresponding to the congestion mark includes: performing, on an uplink, the operation corresponding to the congestion mark.

Alternatively, in another implementation, the operation corresponding to the congestion mark includes an operation corresponding to an uplink congestion mark.

For example, the first communication device performs, on the uplink, the operation corresponding to the congestion mark, so that the server feeds back the congestion mark to the terminal, and the terminal performs the congestion response operation on the uplink based on the received first congestion mark or the second congestion mark. This operation is meaningful only when the terminal supports performing the congestion response operation on the uplink based on the received first congestion mark or the second congestion mark.

In at least one embodiment of the present application, a capability required for the operation and/or the function corresponding to the congestion mark is a first capability;
and/or
the first capability of the terminal or the first capability information is represented as one of the following: a radio resource control RRC capability of the terminal, a non-access stratum NAS capability of the terminal, a mobility management capability of the terminal, and a session management capability of the terminal.

In this embodiment of the present application, the terminal performs the second operation, where the second operation includes at least one of the following: sending second information, where the second information includes at least one of the following: first capability information of the terminal, first intention information of the terminal, and operation information of the terminal; determining to accept a second requirement or reject a second requirement; performing the operation corresponding to the congestion mark, or skipping performing or rejecting to perform the operation corresponding to the congestion mark; receiving the second requirement; receiving the first query; and receiving the second query. In this embodiment of the present application, it can be determined, based on a capability of the terminal, whether to accept or reject the congestion mark requirement, thereby avoiding a problem that the terminal cannot process the congestion mark in cooperation, and improving congestion processing efficiency.

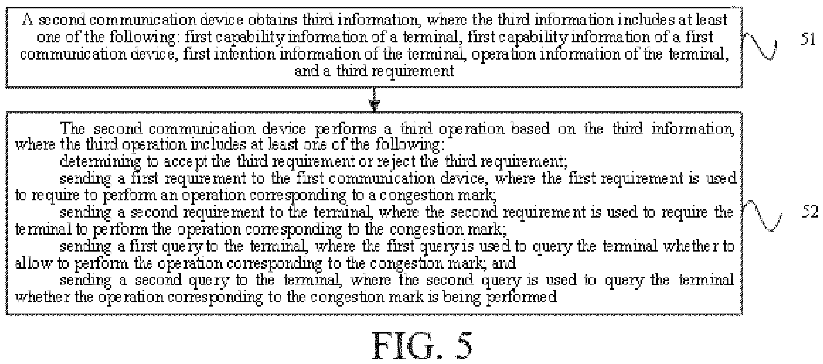

Referring to FIG. 5, an embodiment of the present application provides a congestion processing method, applied to a second communication device. The second communication device includes, but is not limited to, a CN network element (for example, an access management function (Access Management Function, AMF) network element, a session management function (Session Management Function, SMF) network element, or a policy control function (Policy Control Function, PCF) network element). The CN network element may be referred to as a first CN network element. The method includes:
Step 51: The second communication device obtains third information, where the third information includes at least one of the following: first capability information of a terminal, first capability information of a first communication device, first intention information of the terminal, operation information of the terminal, and a third requirement.
Step 52: The second communication device performs a third operation based on the third information; where the third operation includes at least one of the following:
   determining to accept the third requirement or reject the third requirement;
   sending a first requirement to the first communication device, where the first requirement is used to require to perform an operation corresponding to a congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark; and
   sending a second query to the terminal, where the second query is used to query the terminal whether the operation corresponding to the congestion mark is being performed; where
   the first capability information includes at least one of the following: supporting the operation and/or a function corresponding to the congestion mark, and not supporting the operation and/or the function corresponding to the congestion mark; where a first capability includes: the operation and/or a function corresponding to the congestion mark;
   the first intention information of the terminal includes at least one of the following:
      allowing, by the terminal and/or a user, to perform the operation corresponding to the congestion mark; and
      not allowing, by the terminal and/or the user, to perform the operation corresponding to the congestion mark;
      the operation information of the terminal includes at least one of the following:
         the terminal is performing the operation corresponding to the congestion mark; and
         the terminal has not performed the operation corresponding to the congestion mark; and
         the third requirement is used to require to perform the operation corresponding to the congestion mark.

Optionally, the congestion mark includes a codepoint that is set in a first mark bit of a first protocol layer of a data packet.

The codepoint includes at least one of the following: a codepoint for indicating congestion, a codepoint for indicating supporting the operation corresponding to the congestion mark, a codepoint for indicating not supporting the operation corresponding to the congestion mark, and a codepoint for indicating different congestion responses.

**In** an implementation, the second communication device obtains at least one of the following from the terminal: first capability information of the terminal, first intention information of the terminal, and operation information of the terminal.

In an implementation, the second communication device obtains the third requirement from the CN network element (for example, the PCF).

In an implementation, the second communication device obtains the following information from the CN network element (for example, the AMF) or the RAN: first capability information of the first communication device, the first response, first capability information of the terminal, first intention information of the terminal, and operation information of the terminal.

Optionally, the congestion mark is, for example, an ECN mark or an ECN mark corresponding to L4S. Therefore, the supporting, by the terminal and/or the first communication device, the operation and/or the function corresponding to the congestion mark may be understood as at least one of the following: supporting, by the terminal and/or the first communication device, ECN (for example, supporting an operation corresponding to ECN), and supporting, by the terminal and/or the first communication device, L4S (for example, supporting an operation corresponding to L4S). The not supporting, by the terminal and/or the first communication device, the operation corresponding to the congestion mark may be understood as at least one of the following: not supporting, by the terminal and/or the first communication device, ECN (for example, not supporting an operation corresponding to ECN), and not supporting, by the terminal and/or the first communication device, L4S (for example, not supporting an operation corresponding to L4S).

In an implementation, the terminal and/or the first communication device that supports ECN does not necessarily support L4S. The terminal and/or the first communication device that supports L4S needs to support ECN.

In an implementation, when the second communication device has not obtained the first capability information of the terminal, at least one of the following is implicitly indicated: the terminal does not support the operation corresponding to the congestion mark.

In an implementation, the first capability of the terminal may be an RRC capability of the terminal, a NAS capability of the terminal, a mobility management capability of the terminal, or a session management capability of the terminal.

In an implementation, the supporting, by the terminal and/or the first communication device, the operation and/or the function corresponding to the congestion mark includes at least one of the following: supporting, by the terminal and/or the first communication device, performing, on a downlink, the operation corresponding to the congestion mark, and supporting, by the terminal and/or the first communication device, performing, on an uplink, the operation corresponding to the congestion mark.

The supporting, by the terminal and/or the first communication device, ECN includes at least one of the following: supporting setting a first ECN mark (for example, a CE mark) when congestion occurs; supporting setting, based on the received ECN mark (for example, the CE mark), a second ECN mark (for example, an ECN echo mark) for feedback; and understanding a capability of the ECN mark.

The supporting, by the terminal and/or the first communication device, L4S includes at least one of the following: supporting ECN; supporting setting, when congestion occurs, an ECN mark corresponding to L4S; supporting setting, based on the received first ECN mark (for example, the CE mark) corresponding to L4S, a second ECN mark (for example, an ECN echo mark) corresponding to L4S for feedback; and understanding a capability of the ECN mark corresponding to L4S.

In an implementation, the supporting, by the terminal, ECN includes at least one of the following: supporting, by the terminal, setting, based on the received first ECN mark (for example, the CE mark), a second ECN mark (for example, an ECN echo mark) for feedback. The received first ECN mark is carried by a downlink data packet. That is, the ECN capability of the terminal does not need to support setting the first ECN mark, but needs to support feeding back the second ECN mark to the server.

In an implementation, the supporting, by the first communication device (for example, the RAN network element), the ECN includes at least one of the following: supporting a capability of setting a first ECN mark when congestion occurs. That is, the first communication device is not responsible for feeding back the second ECN mark to the server.

In an implementation, the "supporting, by the terminal, setting, based on the received ECN mark (for example, the CE mark), a second ECN mark (for example, an ECN echo mark) for feedback" can be understood as: not requiring the terminal to understand the meaning of the ECN mark. In another implementation, the "supporting, by the terminal, setting, based on the received ECN mark (for example, the CE mark), a second ECN mark (for example, an ECN echo mark) for feedback" can be understood as: requiring the terminal to understand the meaning of the ECN mark.

In an implementation, the supporting, by the terminal, L4S includes at least one of the following: supporting, by the terminal, ECN, and supporting, by the terminal, a capability of setting, when congestion occurs, a first ECN mark corresponding to L4S; and supporting, by the terminal, a capability of understanding the ECN mark corresponding to L4S.

Optionally, the allowing, by the terminal and/or the user, to perform the operation corresponding to the congestion mark includes at least one of the following: allowing, by the terminal and/or the user, ECN (for example, allowing an operation corresponding to the ECN), and allowing, by the terminal and/or the user, L4S (for example, allowing an operation corresponding to L4S).

Optionally, the not allowing, by the terminal and/or the user, to perform the operation corresponding to the congestion mark includes at least one of the following: not allowing, by the terminal and/or the user, ECN (for example, not allowing an operation corresponding to the ECN), and not allowing, by the terminal and/or the user, L4S (for example, not allowing an operation corresponding to L4S).

In an implementation, a terminal and/or a user that allows ECN does not necessarily allow L4S. A terminal and/or a user that allows L4S needs to allow ECN.

In an implementation, the allowing, by the terminal and/or the user, to perform the operation corresponding to the congestion mark includes: allowing, by the terminal and/or the user, to perform, on a downlink, the operation corresponding to the congestion mark, and allowing, by the terminal and/or the user, to perform, on an uplink, the operation corresponding to the congestion mark. The congestion mark is, for example, an ECN mark or an ECN mark corresponding to L4S.

In an implementation, the not allowing, by the terminal and/or the user, to perform the operation corresponding to the congestion mark includes: not allowing, by the terminal and/or the user, to perform, on a downlink, the operation corresponding to the congestion mark, and not allowing, by the terminal and/or the user, to perform, on an uplink, the operation corresponding to the congestion mark.

Further, the allowing, by the terminal and/or the user, to perform the operation corresponding to the congestion mark may further include: allowing, by the terminal and/or the user, to perform, on data of the first object, the operation corresponding to the congestion mark.

Further, the allowing, by the terminal and/or the user, to perform, on the downlink, the operation corresponding to the congestion mark may further include: allowing, by the terminal and/or the user, to perform, on downlink data of the first object, the operation corresponding to the congestion mark.

Further, the allowing, by the terminal and/or the user, to perform, on the uplink, the operation corresponding to the congestion mark may further include: allowing, by the terminal and/or the user, to perform, on uplink data of the first object, the operation corresponding to the congestion mark. A case of not allowing is similar and is omitted herein.

Therefore, in an implementation, the first intention information may further include: description information of the first object. In another implementation, the first intention information is at the granularity of the first object and may be carried in signaling or an information element corresponding to the granularity of the first object.

In an implementation, when the first intention information of the terminal is not obtained, it is implicitly indicated that the terminal and/or the user does not allow to perform the operation corresponding to the congestion mark.

In an implementation, that the terminal is performing the operation corresponding to the congestion mark includes: the terminal is performing, on a downlink, the operation corresponding to the congestion mark, and the terminal is performing, on an uplink, the operation corresponding to the congestion mark. The congestion mark is, for example, an ECN mark or an ECN mark corresponding to L4S.

In an implementation, that the terminal has not performed the operation corresponding to the congestion mark includes: the terminal has not performed, on a downlink, the operation corresponding to the congestion mark, and the terminal has not performed, on an uplink, the operation corresponding to the congestion mark.

Further, that the terminal is performing the operation corresponding to the congestion mark may further include: the terminal is performing, on data of the first object, the operation corresponding to the congestion mark.

Further, that the terminal is performing, on the downlink, the operation corresponding to the congestion mark may further include: the terminal is performing, on downlink data of the first object, the operation corresponding to the congestion mark.

Further, that the terminal is performing, on the uplink, the operation corresponding to the congestion mark may further include: the terminal is performing, on uplink data of the first object, the operation corresponding to the congestion mark.

Further, that the terminal has not performed the operation corresponding to the congestion mark may further include: the terminal has not performed, on the data of the first object, the operation corresponding to the congestion mark.

Further, that the terminal has not performed, on the downlink, the operation corresponding to the congestion mark may further include: the terminal has not performed, on the downlink data of the first object, the operation corresponding to the congestion mark.

Further, that the terminal has not performed, on the uplink, the operation corresponding to the congestion mark may further include: the terminal has not performed, on the uplink data of the first object, the operation corresponding to the congestion mark.

Therefore, in an implementation, the operation information of the terminal may further include: description information of the first object. In another implementation, the operation information of the terminal is at the granularity of the first object and may be carried in signaling or an information element corresponding to the granularity of the first object.

In an implementation, when the operation information of the terminal is not obtained, at least one of the following is implicitly indicated: the terminal has not performed the operation corresponding to the congestion mark.

An operation corresponding to ECN includes at least one of the following: a downlink operation corresponding to ECN, and an uplink operation corresponding to ECN.

An operation corresponding to L4S includes at least one of the following: a downlink operation corresponding to L4S, and an uplink operation corresponding to L4S.

Details of the first requirement, the second requirement, the first intention information, the operation information of the terminal, the first query, and/or the second query are specifically described in the embodiment of FIG. 3, and are not repeated herein.

In an implementation, the third requirement is at a granularity of a policy control and charging rule (Policy Control and Charging rule, PCC rule) or a service data flow.

In an implementation, the third requirement may be carried in a PCC rule or a PCC rule corresponding to the service data flow.

In at least one embodiment of the present application,
the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing the congestion response operation on the uplink based on the received first congestion mark or the second congestion mark; and recognizing the mark information related to the congestion mark in the first protocol layer;
   and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

In an implementation, the mark information related to the congestion mark includes at least one of the following: a first congestion mark (for example, CE in ECN), and a mark supporting the operation and/or the function corresponding to the congestion mark (for example, ECT in ECN).

In an implementation, the first congestion mark includes at least one of: a first congestion mark on an uplink (for example, indicating that congestion occurs on the uplink), and a first congestion mark on a downlink (for example, indicating that congestion occurs on the downlink).

In an implementation, the feeding back the congestion mark or the feeding back the received congestion mark includes: feeding back, by a first end side, the received congestion mark to a second end side. The first end side is, for example, a client, and the second end side is, for example, a server. Alternatively, the first end side is, for example, a server, and the second end is, for example, a client. The first end and the second end may be two ends of a connection (for example, an IP connection or a TCP connection), as shown in FIG. 2A and FIG. 2B.

Generally, the congestion mark is fed back by being contained in an ACK data packet (for example, a TCP ACK data packet). The congestion mark contained in the ACK data packet is also referred to as an echo (Echo) congestion mark.

Therefore, feedback may be understood as echo. Feeding back the congestion mark may be referred to as echoing the congestion mark.

In an implementation, the congestion response operation includes at least one of the following: reducing a throughput rate, improving compression efficiency, discarding a packet, sending a congestion window reduced mark (for example, sending CWR congestion window reduced), and reducing a queue length. It can be understood that the congestion response operation can be used to alleviate congestion or eliminate congestion.

In an implementation, the performing the congestion response operation on the uplink based on the received first congestion mark or the second congestion mark is shown in FIG. 2A.

In an implementation, the sending the congestion mark or the congestion status to the terminal when the uplink direction meets the congestion mark condition includes at least one of the following: setting the first congestion mark in a downlink data packet (for example, a TCP ACK data packet, a PDCP data packet, an RLC data packet, or a MAC data packet), and sending the first congestion mark or the congestion status to the terminal by using RRC signaling. An example is shown in FIG. 2C.

In at least one embodiment of the present application, the requiring, by the first requirement, to perform the operation corresponding to the congestion mark includes at least one of the following: requiring to perform, on the uplink, the operation corresponding to the congestion mark; and requiring to perform, on the downlink, the operation corresponding to the congestion mark;
and/or
the first requirement or the requiring, by the first requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer;
   and/or
the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
   and/or
the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer;
   and/or
the requiring, by the third requirement, to perform the operation corresponding to the congestion mark includes at least one of the following: requiring to perform, on the uplink, the operation corresponding to the congestion mark; and requiring to perform, on the downlink, the operation corresponding to the congestion mark;
   and/or
the third requirement or the requiring, by the third requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

In an implementation, the first source end device that sends the first requirement considers the first communication device (for example, the RAN) and the terminal as a whole, and sends the first requirement to the first communication device, to require the first communication device and a second target device to execute the first requirement jointly. In this case, the first requirement may include: requiring to set the first congestion mark for the downlink data packet when the congestion mark condition is met; and requiring to echo (for example, ECN Echo) the congestion mark through an uplink data packet. In this case, the first communication device needs to determine the second requirement based on a task of the first requirement, and deliver the second requirement to the terminal for execution.

In another implementation, the first source end device directly divides a task and then sends the divided task to the first communication device (for example, the RAN) and the terminal for separate execution. In this case, the first requirement may include only a task that the first communication device needs to perform. For example, the first congestion mark is set for the downlink data packet when the congestion mark condition is met. In this case, the first communication device does not need to divide to obtain the second requirement based on the first requirement either.

The congestion response operation includes at least one of the following: for example, a UE client reduces uplink data transmission, improves data compression efficiency, discards a packet, sends a congestion window reduced mark (for example, sending CWR congestion window reduced), and reduces a queue length. It can be understood that the congestion response operation can be used to alleviate congestion or eliminate congestion.

In at least one embodiment of the present application, the third operation further includes at least one of the following:
sending a third response after the step of obtaining the third requirement;
after the step of sending the first requirement to the first communication device, receiving a first response sent by the first communication device;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; where
the first response includes at least one of the following:
   accepting the first requirement or rejecting the first requirement; and
   a failure cause or a rejection cause;
   the second response includes at least one of the following information:
   accepting the second requirement or rejecting the second requirement; and
   a failure cause or a rejection cause;
   the third response includes at least one of the following:
      accepting the third requirement or rejecting the third requirement; and
      a failure cause or a rejection cause;
      the response to the first query includes one of the following:
         allowing, by the terminal and/or a user, to perform the operation corresponding to the congestion mark; and
         not allowing, by the terminal and/or the user, to perform the operation corresponding to the congestion mark; and
         the response to the second query includes one of the following:
            the terminal is performing the operation corresponding to the congestion mark; and
            the terminal has not performed the operation corresponding to the congestion mark.
            In at least one embodiment of the present application, the failure cause or the rejection cause includes at least one of the following:
               the terminal does not support the operation and/or the function corresponding to the congestion mark;
               the terminal and/or a user does not allow to perform the operation corresponding to the congestion mark;
               the first communication device does not support the operation and/or the function corresponding to the congestion mark; and
               the first communication device does not allow to perform the operation corresponding to the congestion mark.

In at least one embodiment of the present application, when an eighth condition is met, the third operation includes at least one of the following: sending the first requirement to the first communication device, and determining to accept the third requirement; where
the eighth condition includes at least one of the following:
the first communication device supports the operation and/or the function corresponding to the congestion mark;
the first communication device allows to perform the operation corresponding to the congestion mark;
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement; and
the second communication device has received the third requirement.

In at least one embodiment of the present application, when a ninth condition is met, the third operation includes at least one of the following: determining to accept the third requirement; where
the ninth condition includes at least one of the following:
the first communication device supports the operation and/or the function corresponding to the congestion mark;
the first communication device accepts the first requirement;
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement; and
the second communication device has received the third requirement.
In at least one embodiment of the present application, when a tenth condition is met, the first requirement is not sent to the first communication device, where
the tenth condition includes at least one of the following:
   the first communication device does not support the operation and/or the function corresponding to the congestion mark;
   the terminal does not support the operation and/or the function corresponding to the congestion mark;
   the terminal and/or a user does not allow to perform the operation corresponding to the congestion mark;
   the terminal has not performed the operation corresponding to the congestion mark;
   the terminal rejects the second requirement; and
   the second communication device has not received the third requirement.
   In at least one embodiment of the present application, when an eleventh condition is met, the third requirement is rejected, where
   the eleventh condition includes at least one of the following:
      the first communication device does not support the operation and/or the function corresponding to the congestion mark;
      the first communication device rejects the first requirement;
      the terminal does not support the operation and/or the function corresponding to the congestion mark;
      the terminal and/or a user does not allow to perform the operation corresponding to the congestion mark;
      the terminal has not performed the operation corresponding to the congestion mark;
      the terminal rejects the second requirement; and
      the second communication device has received the third requirement.

In an implementation, when the terminal cannot feed back the downlink ECN mark to the server in cooperation, related marks of downlink marking performed by the first communication device are all meaningless.

In at least one embodiment of the present application, when a twelfth condition is met, the first operation includes at least one of the following: sending the second requirement to the terminal; where
the twelfth condition includes at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device accepts the first requirement; and
the second communication device has received the third requirement.

In at least one embodiment of the present application, when a thirteenth condition is met, the first operation includes at least one of the following: sending the first query to the terminal; where
the thirteenth condition includes at least one of the following:
the terminal supports the operation and/or the function corresponding to the congestion mark;
the second communication device cannot determine whether the terminal allows to perform the operation corresponding to the congestion mark;
the first communication device supports the operation and/or the function corresponding to the congestion mark;
the first communication device accepts the first requirement; and
the second communication device has received the third requirement.

In at least one embodiment of the present application, when a fourteenth condition is met, the first operation includes at least one of the following: sending the second query to the terminal; where
the fourteenth condition includes at least one of the following:
the terminal supports the operation and/or the function corresponding to the congestion mark;
the second communication device cannot determine whether the terminal is performing the operation corresponding to the congestion mark;
the first communication device supports the operation and/or the function corresponding to the congestion mark;
the first communication device accepts the first requirement; and
the second communication device has received the third requirement.

In an implementation, an object of the operation corresponding to the congestion mark that the terminal is required to perform, and/or an object of query information sent to the terminal is: service data in a specified radio bearer (for example, a DRB) or any service data of the terminal.

In an implementation, when the object is service data of a specified radio bearer, the operation corresponding to the congestion mark that the terminal is required to perform, and/or query information is sent to the terminal through signaling or an information element related to the radio bearer.

In at least one embodiment of the present application,
the performing, by the first communication device, the operation corresponding to the congestion mark includes: performing, on a downlink by the first communication device, the operation corresponding to the congestion mark;
   and/or
the skipping, by the first communication device, performing or rejecting to perform the operation corresponding to the congestion mark includes: skipping, by the first communication device, performing, on a downlink, or rejecting to perform, on a downlink, the operation corresponding to the congestion mark;
   and/or
the first requirement or the first requirement in an M^{th} condition includes: requiring to perform, on the downlink, the operation corresponding to the congestion mark;
   and/or
the second requirement or the second requirement in the M^{th} condition includes: requiring to perform, on the downlink, the operation corresponding to the congestion mark;
   and/or
the third requirement or the third requirement in the M^{th} condition includes: requiring to perform, on the downlink, the operation corresponding to the congestion mark;
   and/or
the first query includes: querying the terminal whether to allow to perform, on a downlink, the operation corresponding to the congestion mark;
   and/or
the second query includes: querying whether the terminal is performing, on a downlink, the operation corresponding to the congestion mark;
   and/or
the supporting, by the terminal, the operation and/or the function corresponding to the congestion mark in the M^{th} condition includes: supporting, by the terminal, performing, on a downlink, the operation and/or the function corresponding to the congestion mark;
   and/or
the allowing, by the terminal and/or the user, to perform the operation corresponding to the congestion mark in the M^{th} condition includes: allowing, by the terminal and/or the user, to perform, on a downlink, the operation corresponding to the congestion mark;
   and/or
that the terminal is performing the operation corresponding to the congestion mark in the M^{th} condition includes: the terminal is performing, on a downlink, the operation corresponding to the congestion mark;
   and/or
the not supporting, by the terminal, the operation and/or the function corresponding to the congestion mark in the M^{th} condition includes: not supporting, by the terminal, performing, on a downlink, the operation and/or the function corresponding to the congestion mark;
   and/or
the not allowing, by the terminal and/or the user, to perform the operation corresponding to the congestion mark in the M^{th} condition includes: not allowing, by the terminal and/or the user, to perform, on a downlink, the operation corresponding to the congestion mark;
   and/or
that the terminal has not performed the operation corresponding to the congestion mark in the M^{th} condition includes: the terminal has not performed, on a downlink, the operation corresponding to the congestion mark; where
the M^{th} condition includes at least one of the following: the eighth condition, the ninth condition, the tenth condition, the eleventh condition, the twelfth condition, the thirteenth condition, and the fourteenth condition.

In at least one embodiment of the present application, the performing the operation corresponding to the congestion mark includes: performing, on a downlink, the operation corresponding to the congestion mark;
and/or
the operation corresponding to the congestion mark includes an operation corresponding to a downlink congestion mark.

Alternatively, in another implementation, the performing the operation corresponding to the congestion mark includes: performing, on an uplink, the operation corresponding to the congestion mark.

Alternatively, in another implementation, the operation corresponding to the congestion mark includes an operation corresponding to an uplink congestion mark.

For example, the first communication device performs, on the uplink, the operation corresponding to the congestion mark, so that the server feeds back the congestion mark to the terminal, and the terminal performs the congestion response operation on the uplink based on the received first congestion mark or the second congestion mark. This operation is meaningful only when the terminal supports performing the congestion response operation on the uplink based on the received first congestion mark or the second congestion mark.

In at least one embodiment of the present application,
at least one of the first requirement, the second requirement, the third requirement, the first intention information, the operation information of the terminal, the first query, and the second query is granularity information of a first object;
   and/or
at least one of the first requirement, the second requirement, the third requirement, the first intention information, the operation information of the terminal, the first query, and the second query further includes: description information of the first object;
   and/or
at least one of the first requirement, the second requirement, the third requirement, the first intention information, the operation information of the terminal, the first query, and the second query is carried in signaling or an information element corresponding to the granularity of the first object; where
the first object includes at least one of the following: a terminal, a service data flow, a data packet set, and a channel (for example, a QoS flow, a QoS sub-flow, and a radio bearer).

In this embodiment of the present application, the second communication device performs a third operation based on the obtained third information. The third operation includes at least one of the following: determining to accept the request of performing the operation corresponding to the congestion mark, or reject the request of performing the operation corresponding to the congestion mark; sending the first requirement to the first communication device; sending the second requirement to the terminal; sending the first query to the terminal; and sending the second query to the terminal. In this embodiment of the present application, the second communication device determines, based on a capability of the terminal and a capability of the first communication device, whether to accept or reject the congestion mark requirement, thereby avoiding a problem that the terminal cannot process the congestion mark in cooperation, and improving congestion processing efficiency.

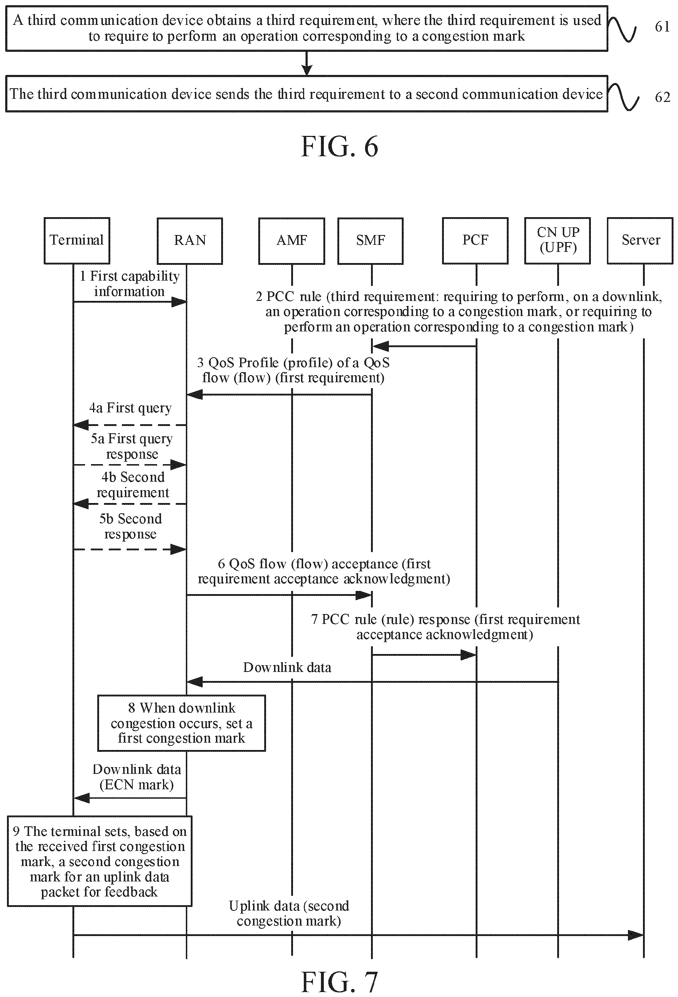

Referring to FIG. 6, an embodiment of the present application provides a congestion processing method, applied to a third communication device. The third communication device includes, but is not limited to, a CN network element (for example, a policy control function (Policy Control Function, PCF) network element, an application function (Application Function, AF) network element, or a network exposure function (Network Exposure Function, NEF) network element). This type of CN network element may be referred to as a second CN network element. The method includes:
Step 61: A third communication device obtains a third requirement, where the third requirement is used to require to perform an operation corresponding to a congestion mark.
Step 62: The third communication device sends the third requirement to a second communication device.

In an implementation, the third communication device receives the third requirement from an AF and/or an NEF.

In another implementation, the third communication device obtains the third requirement through local configuration.

In at least one embodiment of the present application,
the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing the congestion response operation on the uplink based on the received first congestion mark or the second congestion mark; and recognizing the mark information related to the congestion mark in the first protocol layer;
   and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

In an implementation, the mark information related to the congestion mark includes at least one of the following: a first congestion mark (for example, CE in ECN), and a mark supporting the operation and/or the function corresponding to the congestion mark (for example, ECT in ECN).

In an implementation, the first congestion mark includes at least one of: a first congestion mark on an uplink (for example, indicating that congestion occurs on the uplink), and a first congestion mark on a downlink (for example, indicating that congestion occurs on the downlink).

In an implementation, the congestion response operation includes at least one of the following: reducing a throughput rate, improving compression efficiency, discarding a packet, sending a congestion window reduced mark (for example, sending CWR congestion window reduced), and reducing a queue length. It can be understood that the congestion response operation can be used to alleviate congestion or eliminate congestion.

In an implementation, the performing the congestion response operation on the uplink based on the received first congestion mark or the second congestion mark is shown in FIG. 2A.

In an implementation, the sending the congestion mark or the congestion status to the terminal when the uplink direction meets the congestion mark condition includes at least one of the following: setting the first congestion mark in a downlink data packet (for example, a TCP ACK data packet, a PDCP data packet, an RLC data packet, or a MAC data packet), and sending the first congestion mark or the congestion status to the terminal by using RRC signaling. An example is shown in FIG. 2C.

In at least one embodiment of the present application,
the requiring, by the third requirement, to perform the operation corresponding to the congestion mark includes at least one of the following: requiring to perform, on the uplink, the operation corresponding to the congestion mark; and requiring to perform, on the downlink, the operation corresponding to the congestion mark;
   and/or
the third requirement or the requiring, by the third requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

In at least one embodiment of the present application,
the obtained third requirement is granularity requirement information of a second object; and
the sent third requirement is granularity requirement information of a third object; where
the second object includes at least one of the following: a service data flow; and the third object includes at least one of the following: a service data flow and a QoS policy (for example, a PCC rule).

In an implementation, the obtaining a third requirement may further include: obtaining description information of the second object.

In an implementation, the sent third requirement may be carried in signaling or an information element corresponding to the granularity of the third object.

The second object is mapped to the third object.

In at least one embodiment of the present application, the method further includes:
after the step of sending the third requirement to the second communication device, receiving a third response sent by the second communication device; where
the third response includes at least one of the following:
   accepting the third requirement or rejecting the third requirement; and
   a failure cause or a rejection cause.

In an implementation, the failure cause or the rejection cause includes at least one of the following:
the terminal does not support the operation and/or the function corresponding to the congestion mark;
the terminal and/or a user does not allow to perform the operation corresponding to the congestion mark;
the first communication device does not support the operation and/or the function corresponding to the congestion mark; and
the first communication device does not allow to perform the operation corresponding to the congestion mark.

The first capability includes: the operation and/or the function corresponding to the congestion mark.

In this embodiment of the present application, the third communication device sends the received third requirement to the second communication device, and the second communication device determines, based on a capability of the terminal and a capability of the first communication device, whether to accept or reject the congestion mark requirement, thereby avoiding a problem that the terminal cannot process the congestion mark in cooperation, and improving congestion processing efficiency.

The following describes the multi-card optimization method in the embodiments of the present application with reference to specific application scenarios.

Application scenario 1 of the embodiments of the present application:

The application scenario 1 of the embodiments of the present application mainly describes RRC negotiation of a downlink congestion mark. An RAN negotiates with the terminal on whether the terminal can support or accept the downlink congestion mark, and the terminal feeds back the downlink congestion mark to a server. The RAN performs a process of the downlink congestion mark only when the terminal supports and accepts the mark. Refer to FIG. 7. The following steps are included:
Step 1: A terminal sends first capability information to an RAN.
Step 2: An SMF receives a third requirement sent by a PCF. The third requirement is used to require one of the following: requiring to perform, on a downlink, the operation corresponding to the congestion mark, or requiring to perform the operation corresponding to the congestion mark.

The SMF sends a first requirement to the RAN based on the third requirement.

Step 3: The RAN receives the first requirement. The first requirement is in signaling or an information element related to a QoS flow (the first requirement may be indicated by a first 5QI).

Step 4a: Optionally, based on the first requirement, when the first capability information of the terminal indicates supporting an operation corresponding to a congestion mark, the RAN sends a first query to the terminal, to query the terminal whether to allow the operation corresponding to the congestion mark. For example, the RAN queries the terminal whether the terminal allows, for service data in a radio bearer (for example, a DRB), the operation corresponding to the congestion mark.

Step 5a: Optionally, the terminal feeds back a first query response, where the first query response includes "the terminal allows the operation corresponding to the congestion mark".

Step 4b: Optionally, send a second requirement to the terminal based on the first requirement when the terminal supports the operation corresponding to the congestion mark, to require the terminal to perform the operation corresponding to the congestion mark. For example, for service data in a radio bearer (for example, a DRB), the RAN requires the terminal to perform the operation corresponding to the congestion mark.

Step 5b: Optionally, the terminal feeds back a second response, where the second response includes "the terminal accepts the operation corresponding to the congestion mark".

Step 6: The SMF receives a first requirement acceptance acknowledgment.

Step 7: The PCF receives the first requirement acceptance acknowledgment sent by the SMF.

Step 8: The RAN performs the operation corresponding to the downlink congestion mark, including one of the following: when downlink congestion occurs, setting a first congestion mark for the downlink data packet.

When a first condition is met, the RAN performs the operation corresponding to the downlink congestion mark.

The first condition includes at least one of the following:
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement;
the terminal accepts that the operation corresponding to the congestion mark is being performed;
the first communication device supports the operation and/or the function corresponding to the congestion mark;
a resource of the first communication device can meet the first requirement; and
the first communication device has received the first requirement.

Step 9: The terminal sets, based on the received first congestion mark, a second congestion mark for an uplink data packet for feedback.

Application scenario 2 of the embodiments of the present application:

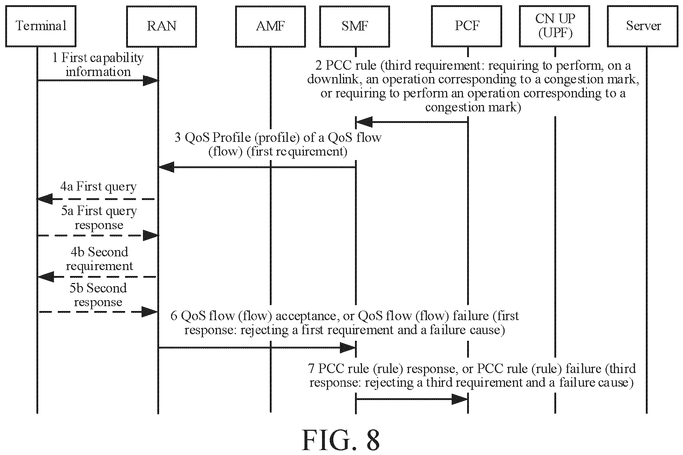

The application scenario 2 of the embodiments of the present application mainly describes a process of a determining failure of an RAN for uplink data. Refer to FIG. 8. The following steps are included:
Step 1: A terminal sends first capability information to an RAN.
Step 2: An SMF receives a third requirement sent by a PCF. The third requirement is used to require one of the following: requiring to perform, on a downlink, the operation corresponding to the congestion mark, or requiring to perform the operation corresponding to the congestion mark.
Step 3: The RAN receives a first requirement. The first requirement is in signaling or an information element (for example, a 5QI) related to a QoS flow.
Step 4a: Optionally, based on the first requirement, when the terminal supports an operation corresponding to a congestion mark, the RAN sends a first query to the terminal, to query the terminal whether to allow the operation corresponding to the congestion mark. For example, the RAN queries the terminal whether the terminal allows, for service data in a radio bearer (for example, a DRB), the operation corresponding to the congestion mark.
Step 5a: Optionally, the terminal feeds back a first query response, where the first query response includes: "the terminal does not allow the operation corresponding to the congestion mark".
Step 4b: Optionally, send a second requirement to the terminal based on the first requirement when the terminal supports the operation corresponding to the congestion mark, to require the terminal to perform the operation corresponding to the congestion mark. For example, the RAN queries the terminal about service data in a radio bearer (for example, a DRB), and requires the terminal to perform the operation corresponding to the congestion mark.
Step 5b: Optionally, the terminal feeds back a second response, where the second response includes: "the terminal rejects the operation corresponding to the congestion mark", and a failure cause.
Step 6: The SMF receives a first response, where the first response includes: rejecting the first requirement and a failure cause.
Step 7: The PCF receives a third response sent by the SMF, where the third response includes: rejecting the third requirement and a failure cause. The third response may be a policy and charging control rule (PCC Rule) response or a PCC rule failure response.

As shown in the embodiment of FIG. 3, when the third condition is met, the first requirement is rejected.

The second condition includes at least one of the following:
The third condition includes at least one of the following:
the terminal does not support the operation and/or the function corresponding to the congestion mark;
the terminal and/or a user does not allow to perform the operation corresponding to the congestion mark;
the terminal rejects the second requirement;
the terminal has not performed the operation corresponding to the congestion mark;
the first communication device does not support the operation and/or the function corresponding to the congestion mark;
the first communication device has received the first requirement; and
a resource of the first communication device cannot meet the first requirement.

Application scenario 3 of the embodiments of the present application:

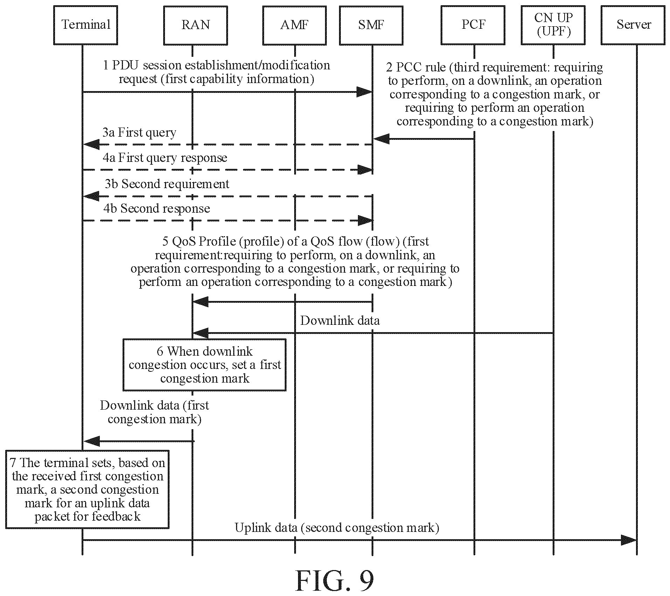

The application scenario 3 of the embodiments of the present application mainly describes that an SMF negotiates with a terminal on whether the terminal can support or accept a downlink congestion mark, and the terminal feeds back the downlink congestion mark to a server. The SMF performs a process of the downlink congestion mark only when the terminal supports and accepts the mark. Refer to FIG. 9. The following steps are included:
Step 1: A terminal sends first capability information to an SMF.
Step 2: The SMF receives a third requirement sent by a PCF. The third requirement is used to require one of the following: requiring to perform, on a downlink, the operation corresponding to the congestion mark, or requiring to perform the operation corresponding to the congestion mark. The third requirement is in signaling or an information element related to PCC.
Step 3a: Optionally, based on the third requirement, when the terminal allows the operation corresponding to the congestion mark and supports the operation corresponding to the congestion mark, the SMF sends a first query to the terminal, to query the terminal whether to allow the operation corresponding to the congestion mark. For example, the SMF queries the terminal whether the terminal allows, for the service data in the QoS flow, the operation corresponding to the congestion mark.
Step 4a: Optionally, the terminal feeds back a first query response, where the first query response includes: "the terminal allows the operation corresponding to the congestion mark".
Step 3b: Optionally, send a second requirement to the terminal based on the third requirement when the terminal supports the operation corresponding to the congestion mark, to require the terminal to perform the operation corresponding to the congestion mark. For example, the SMF queries the terminal about the service data in the QoS flow, and requires the terminal to perform the operation corresponding to the congestion mark.
Step 4b: Optionally, the terminal feeds back a second response, where the second response includes: "the terminal accepts the operation corresponding to the congestion mark".
Step 5: The SMF sends the first requirement to the RAN when a third condition is met.

The third condition includes at least one of the following:
the RAN has an ECN capability and/or an L4S capability;
the terminal has an ECN capability and/or an L4S capability;
the terminal allows the operation corresponding to the congestion mark;
the terminal accepts a requirement of the operation corresponding to the congestion mark; and
the third requirement is received.

The third requirement and the first requirement are used to require one of the following: requiring to perform, on a downlink, the operation corresponding to the congestion mark, or requiring to perform the operation corresponding to the congestion mark.

Step 6: The RAN performs the operation corresponding to the downlink congestion mark, including one of the following: when downlink congestion occurs, setting a first congestion mark for the downlink data packet.

When a first condition is met, the RAN performs the operation corresponding to the downlink congestion mark.

The first condition includes at least one of the following:
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement;
the terminal accepts that the operation corresponding to the congestion mark is being performed;
the first communication device supports the operation and/or the function corresponding to the congestion mark;
a resource of the first communication device can meet the first requirement; and
the first communication device has received the first requirement.

Step 9: The terminal sets, based on the received first congestion mark, a second congestion mark for an uplink data packet for feedback.

Application scenario 4 of the embodiments of the present application:

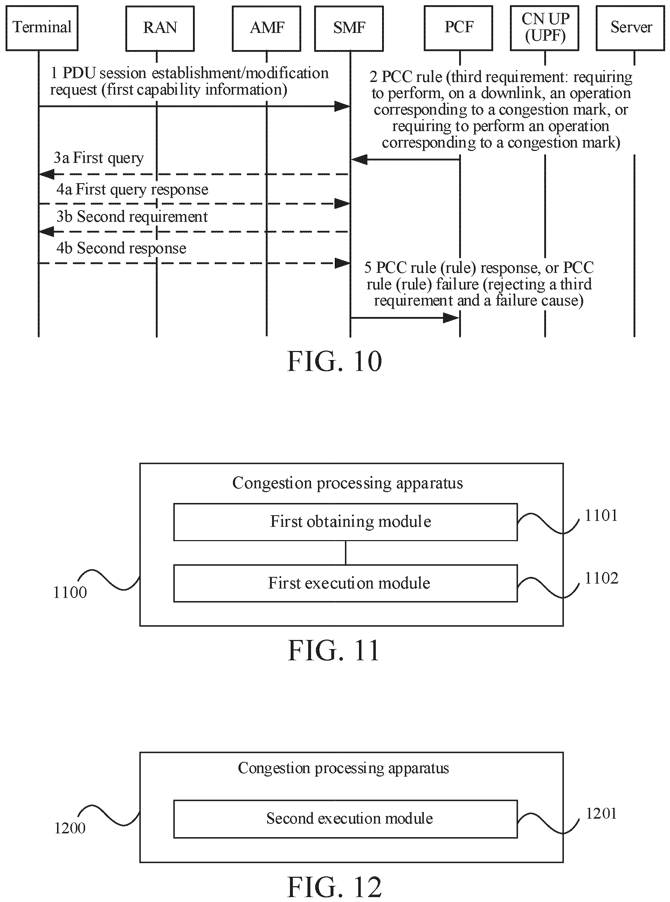

The application scenario 4 of the embodiments of the present application mainly describes a process in which an SMF negotiates with a terminal whether the terminal can support or accept a downlink congestion mark. Refer to FIG. 10. The following steps are included:
Step 1: A terminal sends first capability information to an SMF.
Step 2: The SMF receives a third requirement sent by a PCF. The third requirement is used to require one of the following: requiring to perform, on a downlink, an operation corresponding to a congestion mark, or requiring to perform an operation corresponding to a congestion mark. The third requirement is in signaling or an information element related to PCC.
Step 3a: Optionally, based on the third requirement, the SMF sends a first query to the terminal to query the terminal whether to allow the operation corresponding to the congestion mark. For example, the SMF queries the terminal whether the terminal allows, for service data in a QoS flow, the operation corresponding to the congestion mark.
Step 4a: Optionally, the terminal feeds back a first query response, where the first query response includes: "the terminal does not allow the operation corresponding to the congestion mark".
Step 3b: Optionally, send a second requirement to the terminal based on the third requirement when the terminal supports the operation corresponding to the congestion mark, to require the terminal to perform the operation corresponding to the congestion mark. For example, the SMF queries the terminal about service data in a QoS flow, and requires the terminal to perform the operation corresponding to the congestion mark.
Step 4b: Optionally, the terminal feeds back a second response, where the second response includes: "the terminal rejects the operation corresponding to the congestion mark", and a failure cause.
Step 5:

As described in the embodiment in FIG. 10, when a tenth condition is met, the SMF does not send a first requirement to the RAN device.

The tenth condition includes at least one of the following:
the first communication device does not support the operation and/or the function corresponding to the congestion mark;
the terminal does not support the operation and/or the function corresponding to the congestion mark;
the terminal and/or a user does not allow to perform the operation corresponding to the congestion mark;
the terminal has not performed the operation corresponding to the congestion mark;
the terminal rejects the second requirement; and
the second communication device has not received the third requirement.

When an eleventh condition is met, the SMF rejects to receive the third requirement, where
the eleventh condition includes at least one of the following:
the first communication device does not support the operation and/or the function corresponding to the congestion mark;
the first communication device rejects the first requirement;
the terminal does not support the operation and/or the function corresponding to the congestion mark;
the terminal and/or a user does not allow to perform the operation corresponding to the congestion mark;
the terminal has not performed the operation corresponding to the congestion mark;
the terminal rejects the second requirement; and
the second communication device has received the third requirement.

The third requirement and the first requirement are used to require one of the following: requiring to perform, on a downlink, the operation corresponding to the congestion mark, or requiring to perform the operation corresponding to the congestion mark.

The congestion processing method provided by this embodiment of the present application may be performed by a congestion processing apparatus. In the embodiments of the present application, the congestion processing apparatus performing the congestion processing method is used as an example to illustrate the congestion processing apparatus provided by the embodiments of the present application.

As shown in FIG. 11, an embodiment of the present application further provides a congestion processing apparatus 1100, applied to a first communication device, including:
a first obtaining module 1101, configured to obtain first information; where the first information includes at least one of the following: first capability information of a terminal, first intention information of the terminal, operation information of the terminal, and a first requirement; and
a first execution module 1102, configured to perform a first operation based on the first information, where the first operation includes at least one of the following:
   determining to accept the first requirement or reject the first requirement;
   performing the operation corresponding to the congestion mark, or skipping performing or rejecting to perform the operation corresponding to the congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark;
   sending a second query to the terminal, where the second query is used to query the terminal whether the operation corresponding to the congestion mark is being performed; and
   sending at least one of the following to a second communication device: the first information and first capability information of the first communication device; where
   the first capability information indicates one of the following:
      supporting the operation and/or a function corresponding to the congestion mark; and
      not supporting the operation and/or the function corresponding to the congestion mark;
      the first intention information of the terminal indicates one of the following:
         allowing, by the terminal and/or a user, to perform the operation corresponding to the congestion mark; and
         not allowing, by the terminal and/or the user, to perform the operation corresponding to the congestion mark;
         the operation information of the terminal indicates one of the following:
            the terminal is performing the operation corresponding to the congestion mark; and
            the terminal has not performed the operation corresponding to the congestion mark; and
            the first requirement is used to require to perform the operation corresponding to congestion mark.

As an optional embodiment, the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

As an optional embodiment, the performing, on a downlink by the first communication device, the operation corresponding to the congestion mark includes at least one of the following: setting the first congestion mark for the downlink data packet when the downlink direction meets the congestion mark condition; and recognizing the mark information related to the congestion mark in the first protocol layer;
and/or
the performing, on a downlink by the terminal, the operation corresponding to the congestion mark includes at least one of the following: setting, based on the received first congestion mark, the second congestion mark for the uplink data packet for feedback; and recognizing the mark information related to the congestion mark in the first protocol layer;
   and/or
the performing, on an uplink by the first communication device, the operation corresponding to the congestion mark includes at least one of the following:
   setting the first congestion mark for the uplink data packet when the uplink direction meets the congestion mark condition;
   sending the congestion mark or the congestion status to the terminal when the uplink direction meets the congestion mark or the congestion condition; and
   recognizing the mark information related to the congestion mark in the first protocol layer;
      and/or
   the performing, on an uplink by the terminal, the operation corresponding to the congestion mark includes at least one of the following:
      setting the first congestion mark for the uplink data packet when the uplink direction meets the congestion mark condition;
      performing the congestion response operation on the uplink based on the received first congestion mark or the second congestion mark; and
      recognizing the mark information related to the congestion mark in the first protocol layer;
         and/or
      the requiring, by the first requirement, to perform the operation corresponding to the congestion mark includes at least one of the following: requiring to perform, on the uplink, the operation corresponding to the congestion mark; and requiring to perform, on the downlink, the operation corresponding to the congestion mark;
         and/or
      the first requirement or the requiring, by the first requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer;
         and/or
      the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
         and/or
      the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer.

As an optional embodiment, the first operation further includes at least one of the following:
sending a first response after the step of obtaining the first requirement;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; where
the first response includes at least one of the following:
   determining to accept the first requirement or reject the first requirement; and
   a failure cause or a rejection cause;
   the second response includes at least one of the following information:
   accepting the second requirement or rejecting the second requirement; and
   a failure cause or a rejection cause;
   the response to the first query includes one of the following:
      allowing, by the terminal and/or a user, to perform the operation corresponding to the congestion mark; and
      not allowing, by the terminal and/or the user, to perform the operation corresponding to the congestion mark;
      the response to the second query includes one of the following:
         the terminal is performing the operation corresponding to the congestion mark; and
         the terminal has not performed the operation corresponding to the congestion mark.

As an optional embodiment, the failure cause or the rejection cause includes at least one of the following:
the terminal does not support the operation and/or the function corresponding to the congestion mark; and
the terminal and/or a user does not allow to perform the operation corresponding to the congestion mark;

As an optional embodiment, when a first condition is met, the first operation includes at least one of the following: performing the operation corresponding to the congestion mark, and determining to accept the first requirement; where
the first condition includes at least one of the following:
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement;
the terminal accepts that the operation corresponding to the congestion mark is being performed;
the first communication device supports the operation and/or the function corresponding to the congestion mark;
a resource of the first communication device can meet the first requirement; and
the first communication device has received the first requirement.

As an optional embodiment, when a second condition is met, the first operation includes at least one of the following: skipping performing or rejecting to perform the operation corresponding to the congestion mark; where
the second condition includes at least one of the following:
the terminal does not support the operation and/or the function corresponding to the congestion mark;
the terminal and/or a user does not allow to perform the operation corresponding to the congestion mark;
the terminal rejects the second requirement;
the terminal has not performed the operation corresponding to the congestion mark;
the first communication device has not received the first requirement;
the first communication device has received the first requirement, but a resource of the first communication device cannot meet the first requirement; and
the first communication device does not support the operation and/or the function corresponding to the congestion mark;

As an optional embodiment, when a third condition is met, the first operation includes at least one of the following: rejecting the first requirement; where
the third condition includes at least one of the following:
the terminal does not support the operation and/or the function corresponding to the congestion mark;
the terminal and/or a user does not allow to perform the operation corresponding to the congestion mark;
the terminal rejects the second requirement;
the terminal has not performed the operation corresponding to the congestion mark;
the first communication device does not support the operation and/or the function corresponding to the congestion mark;
the first communication device has received the first requirement; and
a resource of the first communication device cannot meet the first requirement.

As an optional embodiment, when a fourth condition is met, the first operation includes at least one of the following: sending the second requirement to the terminal; where
the fourth condition includes at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device has received the first requirement; and
a resource of the first communication device can meet the first requirement.

As an optional embodiment, when a fifth condition is met, the first operation includes at least one of the following: sending the first query to the terminal; where
the fifth condition includes at least one of the following:
the terminal supports the operation and/or the function corresponding to the congestion mark;
the first communication device cannot determine whether the terminal allows to perform the operation corresponding to the congestion mark;
the first communication device supports the operation and/or the function corresponding to the congestion mark;
the first communication device has received the first requirement; and
a resource of the first communication device can meet the first requirement.

As an optional embodiment, when a sixth condition is met, the first operation includes at least one of the following: sending the second query to the terminal; where
the sixth condition includes at least one of the following:
the terminal supports the operation and/or the function corresponding to the congestion mark;
the first communication device cannot determine whether the terminal is performing the operation corresponding to the congestion mark;
the first communication device supports the operation and/or the function corresponding to the congestion mark;
the first communication device has received the first requirement; and
a resource of the first communication device can meet the first requirement.

As an optional embodiment, the performing, by the first communication device, the operation corresponding to the congestion mark includes: performing, on a downlink by the first communication device, the operation corresponding to the congestion mark;
and/or
the skipping, by the first communication device, performing or rejecting to perform the operation corresponding to the congestion mark includes: skipping, by the first communication device, performing, on a downlink, or rejecting to perform, on a downlink, the operation corresponding to the congestion mark;
   and/or
the first requirement or the first requirement in an N^{th} condition includes: requiring to perform, on the downlink, the operation corresponding to the congestion mark;
   and/or
the second requirement or the second requirement in an N^{th} condition includes: requiring to perform, on the downlink, the operation corresponding to the congestion mark;
   and/or
the first query includes: querying the terminal whether to allow to perform, on a downlink, the operation corresponding to the congestion mark;
   and/or
the second query includes: querying whether the terminal is performing, on a downlink, the operation corresponding to the congestion mark;
   and/or
the supporting, by the terminal, the operation and/or the function corresponding to the congestion mark in the N^{th} condition includes: supporting, by the terminal, performing, on a downlink, the operation and/or the function corresponding to the congestion mark;
   and/or
the allowing, by the terminal and/or the user, to perform the operation corresponding to the congestion mark in the N^{th} condition includes: allowing, by the terminal and/or the user, to perform, on a downlink, the operation corresponding to the congestion mark;
   and/or
that the terminal is performing the operation corresponding to the congestion mark in the N^{th} condition includes: the terminal is performing, on a downlink, the operation corresponding to the congestion mark;
   and/or
the not supporting, by the terminal, the operation and/or the function corresponding to the congestion mark in the N^{th} condition includes: not supporting, by the terminal, performing, on a downlink, the operation and/or the function corresponding to the congestion mark;
   and/or
the not allowing, by the terminal and/or the user, to perform the operation corresponding to the congestion mark in the N^{th} condition includes: not allowing, by the terminal and/or the user, to perform, on a downlink, the operation corresponding to the congestion mark;
   and/or
that the terminal has not performed the operation corresponding to the congestion mark in the N^{th} condition includes: the terminal has not performed, on a downlink, the operation corresponding to the congestion mark; where
the N^{th} condition includes at least one of the following: the first condition, the second condition, the third condition, the fourth condition, the fifth condition, and the sixth condition.

As an optional embodiment, the performing the operation corresponding to the congestion mark includes: performing, on a downlink, the operation corresponding to the congestion mark;
and/or
the operation corresponding to the congestion mark includes an operation corresponding to a downlink congestion mark.

As an optional embodiment, the at least one of the first requirement, the second requirement, the first intention information, the operation information of the terminal, the first query, and the second query is granularity information of a first object;
and/or
at least one of the first requirement, the second requirement, the first intention information, the operation information of the terminal, the first query, and the second query further includes: description information of the first object;
   and/or
at least one of the first requirement, the second requirement, the first intention information, the operation information of the terminal, the first query, and the second query is carried in signaling or an information element corresponding to a granularity of the first object; where
the first object includes at least one of the following: a terminal, a service data flow, a data packet set, and a channel (for example, a QoS flow, a QoS sub-flow, and a radio bearer).

In this embodiment of the present application, the first communication device performs the first operation based on the obtained first information. The first operation includes at least one of the following: determining to accept the request of performing the operation corresponding to the congestion mark, or reject the request of performing the operation corresponding to the congestion mark; performing the operation corresponding to the congestion mark, or skipping performing or rejecting to perform the operation corresponding to the congestion mark; sending the second requirement to the terminal; where sending the first query to the terminal; sending the second query to the terminal; and sending at least one of the first information and the first capability information of the first communication device to the second communication device. In the embodiments of the present application, the first communication device determines, based on a capability of the terminal, whether to accept or reject the congestion mark requirement, thereby avoiding a problem that the terminal cannot process the congestion mark in cooperation, and improving congestion processing efficiency.

It should be noted that, the congestion processing apparatus provided in this embodiment of the present application is an apparatus capable of performing the above congestion processing method, and all embodiments of the above congestion processing method are applicable to this apparatus, and can achieve the same or similar beneficial effects.

As shown in FIG. 12, an embodiment of the present application further provides a congestion processing apparatus 1200, including:
a second execution module 1201, configured to perform a second operation, where the second operation includes at least one of the following:
sending second information, where the second information includes at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information indicates one of the following: supporting the operation and/or a function corresponding to the congestion mark, and not supporting the operation and/or the function corresponding to the congestion mark;
the first intention information of the terminal indicates one of the following:
   allowing, by the terminal and/or a user, to perform the operation corresponding to the congestion mark; and
   not allowing, by the terminal and/or the user, to perform the operation corresponding to the congestion mark; and
   the operation information of the terminal indicates one of the following:
      the terminal is performing the operation corresponding to the congestion mark; and
      the terminal has not performed the operation corresponding to the congestion mark.

As an optional embodiment, the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

As an optional embodiment, the performing, on a downlink by the terminal, the operation corresponding to the congestion mark includes at least one of the following: setting, based on the received first congestion mark, the second congestion mark for the uplink data packet for feedback; and recognizing the mark information related to the congestion mark in the first protocol layer;
and/or
the performing, on an uplink by the terminal, the operation corresponding to the congestion mark includes at least one of the following:
setting the first congestion mark for the uplink data packet when the uplink direction meets the congestion mark condition;
performing the congestion response operation on the uplink based on the received first congestion mark or the second congestion mark; and
recognizing the mark information related to the congestion mark in the first protocol layer;
   and/or
the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
   and/or
the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer.

As an optional embodiment, the second operation further includes at least one of the following:
sending a second response based on the received second requirement;
sending a response to the first query based on the received first query; and
sending a response to the second query based on the received second query; where
the second response includes at least one of the following:
   accepting the second requirement or rejecting the second requirement; and
   a failure cause or a rejection cause;
   the response to the first query includes at least one of the following:
      allowing, by the terminal and/or a user, to perform the operation corresponding to the congestion mark; and
      not allowing, by the terminal and/or the user, to perform the operation corresponding to the congestion mark; and
      the response to the second query includes at least one of the following:
         the terminal is performing the operation corresponding to the congestion mark; and
         the terminal has not performed the operation corresponding to the congestion mark.

As an optional embodiment, when a seventh condition is met, the second operation includes at least one of the following: performing the operation corresponding to the congestion mark, and determining to accept the second requirement; where
the seventh condition includes at least one of the following:
the terminal supports the operation and/or the function corresponding to the congestion mark;
the terminal and/or a user allows to perform the operation corresponding to the congestion mark;
a requirement that the terminal is performing the operation corresponding to the congestion mark; and
the terminal has received the second requirement.

As an optional embodiment, the performing, by the terminal, the operation corresponding to the congestion mark includes: performing, on a downlink, the operation corresponding to the congestion mark;
and/or
the second requirement includes: requiring to perform, on the downlink, the operation corresponding to the congestion mark;
   and/or
the supporting, by the terminal, the operation and/or the function corresponding to the congestion mark in the seventh condition includes: supporting, by the terminal, performing, on a downlink, the operation and/or the function corresponding to the congestion mark;
   and/or
the allowing, by the terminal and/or the user, to perform the operation corresponding to the congestion mark in the seventh condition includes: allowing, by the terminal and/or the user, to perform, on a downlink, the operation corresponding to the congestion mark;
   and/or
that the terminal is performing the operation corresponding to the congestion mark in the seventh condition includes: the terminal is performing, on a downlink, the operation corresponding to the congestion mark.

As an optional embodiment, when the second operation includes performing the operation corresponding to the congestion mark, before the step of performing the operation corresponding to the congestion mark, the method further includes: receiving the second requirement; where
the performing the operation corresponding to the congestion mark includes:
performing, based on the second requirement, the operation corresponding to the congestion mark.

As an optional embodiment, the performing the operation corresponding to the congestion mark includes: performing, on a downlink, the operation corresponding to the congestion mark;
and/or
the operation corresponding to the congestion mark includes an operation corresponding to a downlink congestion mark.

As an optional embodiment, a capability required for the operation and/or the function corresponding to the congestion mark is a first capability;
and/or
the first capability of the terminal or the first capability information is represented as one of the following: a radio resource control RRC capability of the terminal, a non-access stratum (Non-Access-Stratum, NAS) capability of the terminal, a mobility management capability of the terminal, and a session management capability of the terminal.

In this embodiment of the present application, the terminal performs the second operation, where the second operation includes at least one of the following: sending second information, where the second information includes at least one of the following: first capability information of the terminal, first intention information of the terminal, and operation information of the terminal; determining to accept a second requirement or reject a second requirement; performing the operation corresponding to the congestion mark, or skipping performing or rejecting to perform the operation corresponding to the congestion mark; receiving the second requirement; receiving the first query; and receiving the second query. In this embodiment of the present application, it can be determined, based on a capability of the terminal, whether to accept or reject the congestion mark requirement, thereby avoiding a problem that the terminal cannot process the congestion mark in cooperation, and improving congestion processing efficiency.

It should be noted that, the congestion processing apparatus provided in this embodiment of the present application is an apparatus capable of performing the above congestion processing method, and all embodiments of the above congestion processing method are applicable to this apparatus, and can achieve the same or similar beneficial effects.

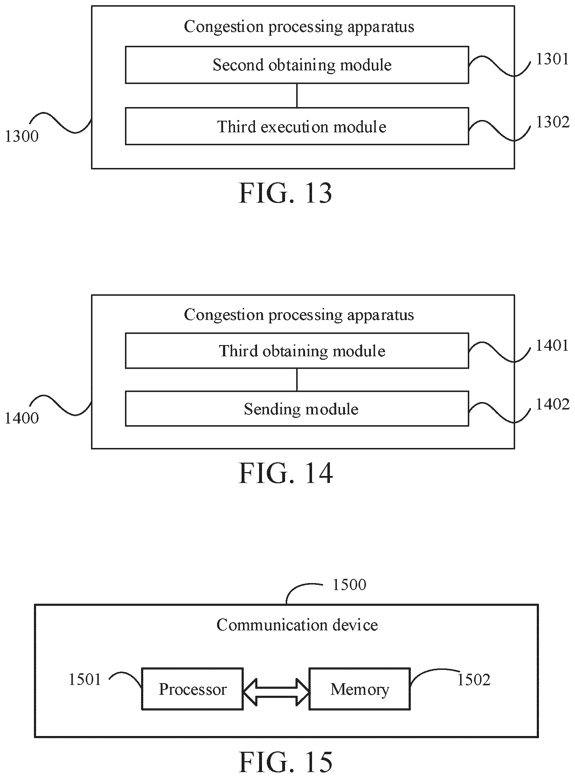

As shown in FIG. 13, an embodiment of the present application further provides a congestion processing apparatus 1300, applied to a second communication device, including:
a second obtaining module 1301, configured to obtain third information, where the third information includes at least one of the following: first capability information of a terminal, first capability information of a first communication device, first intention information of the terminal, operation information of the terminal, and a third requirement; and
a third execution module 1302, configured to perform a third operation based on the third information, where the third operation includes at least one of the following:
   determining to accept the third requirement or reject the third requirement;
   sending a first requirement to the first communication device, where the first requirement is used to require to perform an operation corresponding to a congestion mark;
   sending a second requirement to the terminal, where the second requirement is used to require the terminal to perform the operation corresponding to the congestion mark;
   sending a first query to the terminal, where the first query is used to query the terminal whether to allow to perform the operation corresponding to the congestion mark; and
   sending a second query to the terminal, where the second query is used to query the terminal whether the operation corresponding to the congestion mark is being performed; where
   the first capability information indicates one of the following: supporting the operation and/or a function corresponding to the congestion mark, and not supporting the operation and/or the function corresponding to the congestion mark;
   the first intention information of the terminal indicates one of the following:
      allowing, by the terminal and/or a user, to perform the operation corresponding to the congestion mark; and
      not allowing, by the terminal and/or the user, to perform the operation corresponding to the congestion mark;
      the operation information of the terminal indicates one of the following:
         the terminal is performing the operation corresponding to the congestion mark; and
         the terminal has not performed the operation corresponding to the congestion mark; and
         the third requirement is used to require to perform the operation corresponding to the congestion mark.

As an optional embodiment, the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

As an optional embodiment, the requiring, by the first requirement, to perform the operation corresponding to the congestion mark includes at least one of the following: requiring to perform, on the uplink, the operation corresponding to the congestion mark; and requiring to perform, on the downlink, the operation corresponding to the congestion mark;
and/or
the first requirement or the requiring, by the first requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer;
   and/or
the requiring, by the second requirement, the terminal to perform the operation corresponding to the congestion mark includes at least one of the following: requiring the terminal to perform, on the uplink, the operation corresponding to the congestion mark; and requiring the terminal to perform, on the downlink, the operation corresponding to the congestion mark;
   and/or
the second requirement or the requiring, by the second requirement, the terminal to perform, on the downlink, the operation corresponding to the congestion mark includes at least one of the following: requiring the terminal to set, based on the received first congestion mark, the second congestion mark for the uplink data packet for feedback; and requiring to recognize the mark information related to the congestion mark in the first protocol layer;
   and/or
the requiring, by the third requirement, to perform the operation corresponding to the congestion mark includes at least one of the following: requiring to perform, on the uplink, the operation corresponding to the congestion mark; and requiring to perform, on the downlink, the operation corresponding to the congestion mark;
   and/or
the third requirement or the requiring, by the third requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

As an optional embodiment, the third operation further includes at least one of the following:
sending a third response after the step of obtaining the third requirement;
after the step of sending the first requirement to the first communication device, receiving a first response sent by the first communication device;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; where
the first response includes at least one of the following:
   accepting the first requirement or rejecting the first requirement; and
   a failure cause or a rejection cause;
   the second response includes at least one of the following information:
   accepting the second requirement or rejecting the second requirement; and
   a failure cause or a rejection cause;
   the third response includes at least one of the following:
      accepting the third requirement or rejecting the third requirement; and
      a failure cause or a rejection cause;
      the response to the first query includes one of the following:
         allowing, by the terminal and/or a user, to perform the operation corresponding to the congestion mark; and
         not allowing, by the terminal and/or the user, to perform the operation corresponding to the congestion mark; and
         the response to the second query includes one of the following:
            the terminal is performing the operation corresponding to the congestion mark; and
            the terminal has not performed the operation corresponding to the congestion mark.

As an optional embodiment, the failure cause or the rejection cause includes at least one of the following:
the terminal does not support the operation and/or the function corresponding to the congestion mark;
the terminal and/or a user does not allow to perform the operation corresponding to the congestion mark;
the first communication device does not support the operation and/or the function corresponding to the congestion mark; and
the first communication device does not allow to perform the operation corresponding to the congestion mark.

As an optional embodiment, when an eighth condition is met, the third operation includes at least one of the following: sending the first requirement to the first communication device, and determining to accept the third requirement; where
the eighth condition includes at least one of the following:
the first communication device supports the operation and/or the function corresponding to the congestion mark;
the first communication device allows to perform the operation corresponding to the congestion mark;
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement; and
the second communication device has received the third requirement.

As an optional embodiment, when a ninth condition is met, the third operation includes at least one of the following: determining to accept the third requirement; where
the ninth condition includes at least one of the following:
the first communication device supports the operation and/or the function corresponding to the congestion mark;
the first communication device accepts the first requirement;
the terminal supports the operation and/or the function corresponding to the congestion mark;
the terminal and/or a user allows to perform the operation corresponding to the congestion mark;
the terminal is performing the operation corresponding to the congestion mark;
the terminal accepts the second requirement; and
the second communication device has received the third requirement.

As an optional embodiment, when a tenth condition is met, the first requirement is not sent to the first communication device, where
the tenth condition includes at least one of the following:
the first communication device does not support the operation and/or the function corresponding to the congestion mark;
the terminal does not support the operation and/or the function corresponding to the congestion mark;
the terminal and/or a user does not allow to perform the operation corresponding to the congestion mark;
the terminal has not performed the operation corresponding to the congestion mark;
the terminal rejects the second requirement; and
the second communication device has not received the third requirement.

As an optional embodiment, when an eleventh condition is met, the third requirement is rejected, where
the eleventh condition includes at least one of the following:
the first communication device does not support the operation and/or the function corresponding to the congestion mark;
the first communication device rejects the first requirement;
the terminal does not support the operation and/or the function corresponding to the congestion mark;
the terminal and/or a user does not allow to perform the operation corresponding to the congestion mark;
the terminal has not performed the operation corresponding to the congestion mark;
the terminal rejects the second requirement; and
the second communication device has received the third requirement.

As an optional embodiment, when a twelfth condition is met, the first operation includes at least one of the following: sending the second requirement to the terminal; where
the twelfth condition includes at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device accepts the first requirement; and
the second communication device has received the third requirement.

As an optional embodiment, when a thirteenth condition is met, the first operation includes at least one of the following: sending the first query to the terminal; where
the thirteenth condition includes at least one of the following:
the terminal supports the operation and/or the function corresponding to the congestion mark;
the second communication device cannot determine whether the terminal allows to perform the operation corresponding to the congestion mark;
the first communication device supports the operation and/or the function corresponding to the congestion mark;
the first communication device accepts the first requirement; and
the second communication device has received the third requirement.

As an optional embodiment, when a fourteenth condition is met, the first operation includes at least one of the following: sending the second query to the terminal; where
the fourteenth condition includes at least one of the following:
the terminal supports the operation and/or the function corresponding to the congestion mark;
the second communication device cannot determine whether the terminal is performing the operation corresponding to the congestion mark;
the first communication device supports the operation and/or the function corresponding to the congestion mark;
the first communication device accepts the first requirement; and
the second communication device has received the third requirement.

As an optional embodiment, the performing, by the first communication device, the operation corresponding to the congestion mark includes: performing, on a downlink by the first communication device, the operation corresponding to the congestion mark;
and/or
the skipping, by the first communication device, performing or rejecting to perform the operation corresponding to the congestion mark includes: skipping, by the first communication device, performing, on a downlink, or rejecting to perform, on a downlink, the operation corresponding to the congestion mark;
   and/or
the first requirement or the first requirement in an M^{th} condition includes: requiring to perform, on the downlink, the operation corresponding to the congestion mark;
   and/or
the second requirement or the second requirement in the M^{th} condition includes: requiring to perform, on the downlink, the operation corresponding to the congestion mark;
   and/or
the third requirement or the third requirement in the M^{th} condition includes: requiring to perform, on the downlink, the operation corresponding to the congestion mark;
   and/or
the first query includes: querying the terminal whether to allow to perform, on a downlink, the operation corresponding to the congestion mark;
   and/or
the second query includes: querying whether the terminal is performing, on a downlink, the operation corresponding to the congestion mark;
   and/or
the supporting, by the terminal, the operation and/or the function corresponding to the congestion mark in the M^{th} condition includes: supporting, by the terminal, performing, on a downlink, the operation and/or the function corresponding to the congestion mark;
   and/or
the allowing, by the terminal and/or the user, to perform the operation corresponding to the congestion mark in the M^{th} condition includes: allowing, by the terminal and/or the user, to perform, on a downlink, the operation corresponding to the congestion mark;
   and/or
that the terminal is performing the operation corresponding to the congestion mark in the M^{th} condition includes: the terminal is performing, on a downlink, the operation corresponding to the congestion mark;
   and/or
the not supporting, by the terminal, the operation and/or the function corresponding to the congestion mark in the M^{th} condition includes: not supporting, by the terminal, performing, on a downlink, the operation and/or the function corresponding to the congestion mark;
   and/or
the not allowing, by the terminal and/or the user, to perform the operation corresponding to the congestion mark in the M^{th} condition includes: not allowing, by the terminal and/or the user, to perform, on a downlink, the operation corresponding to the congestion mark;
   and/or
that the terminal has not performed the operation corresponding to the congestion mark in the M^{th} condition includes: the terminal has not performed, on a downlink, the operation corresponding to the congestion mark; where
   the M^{th} condition includes at least one of the following: the eighth condition, the ninth condition, the tenth condition, the eleventh condition, the twelfth condition, the thirteenth condition, and the fourteenth condition.

As an optional embodiment, the performing the operation corresponding to the congestion mark includes: performing, on a downlink, the operation corresponding to the congestion mark;
and/or
the operation corresponding to the congestion mark includes an operation corresponding to a downlink congestion mark.

As an optional embodiment, at least one of the first requirement, the second requirement, the third requirement, the first intention information, the operation information of the terminal, the first query, and the second query is granularity information of a first object;
and/or
at least one of the first requirement, the second requirement, the third requirement, the first intention information, the operation information of the terminal, the first query, and the second query further includes: description information of the first object;
   and/or
at least one of the first requirement, the second requirement, the third requirement, the first intention information, the operation information of the terminal, the first query, and the second query is carried in signaling or an information element corresponding to the granularity of the first object; where
the first object includes at least one of the following: a terminal, a service data flow, a data packet set, and a channel (for example, a QoS flow, a QoS sub-flow, and a radio bearer).

In this embodiment of the present application, the second communication device performs a third operation based on the obtained third information. The third operation includes at least one of the following: determining to accept the request of performing the operation corresponding to the congestion mark, or reject the request of performing the operation corresponding to the congestion mark; sending the first requirement to the first communication device; sending the second requirement to the terminal; where sending the first query to the terminal; and sending the second query to the terminal. In this embodiment of the present application, the second communication device determines, based on a capability of the terminal and a capability of the first communication device, whether to accept or reject the congestion mark requirement, thereby avoiding a problem that the terminal cannot process the congestion mark in cooperation, and improving congestion processing efficiency.

It should be noted that, the congestion processing apparatus provided in this embodiment of the present application is an apparatus capable of performing the above congestion processing method, and all embodiments of the above congestion processing method are applicable to this apparatus, and can achieve the same or similar beneficial effects.

As shown in FIG. 14, an embodiment of the present application further provides a congestion processing apparatus 1400, applied to a third communication device, including:
a third obtaining module 1401, configured to obtain a third requirement, where the third requirement is used to require to perform an operation corresponding to a congestion mark; and
a sending module 1402, configured to send the third requirement to a second communication device.

As an optional embodiment, the performing an operation corresponding to a congestion mark includes at least one of the following: setting the first congestion mark (for example, a congestion occurrence mark CE in ECN) for a data packet when the congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark includes at least one of the following: performing, on a downlink, the operation corresponding to the congestion mark, and performing, on an uplink, the operation corresponding to the congestion mark; and recognizing the mark information related to the congestion mark in the first protocol layer;
   and/or
the performing, on a downlink, the operation corresponding to the congestion mark includes at least one of the following:
   setting the first congestion mark (for example, a congestion occurrence mark CE in ECN) for the downlink data packet when a downlink direction meets the congestion mark condition;
   setting, based on the received first congestion mark, the second congestion mark for the uplink data packet for feedback; and
   recognizing the mark information related to the congestion mark in the first protocol layer;
      and/or
   the performing, on an uplink, the operation corresponding to the congestion mark includes at least one of the following:
      setting the first congestion mark (for example, a congestion occurrence mark CE in ECN) for the uplink data packet when an uplink direction meets the congestion mark condition;
      setting the first congestion mark (for example, a congestion occurrence mark CE in ECN) for the downlink data packet when an uplink direction meets the congestion mark condition;
      sending a corresponding congestion mark or a corresponding congestion status to the terminal when the uplink direction meets the congestion mark or the congestion condition; and
      performing the congestion response operation on the uplink based on the received first congestion mark or the second congestion mark; where
      the first protocol layer includes at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

As an optional embodiment, the requiring, by the third requirement, to perform the operation corresponding to the congestion mark includes at least one of the following: requiring to perform, on the uplink, the operation corresponding to the congestion mark; and requiring to perform, on the downlink, the operation corresponding to the congestion mark;
and/or
the third requirement or the requiring, by the third requirement, to perform, on the downlink, the operation corresponding to the congestion mark includes at least one of the following: requiring to set the first congestion mark (for example, a congestion occurrence mark CE in ECN) for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

As an optional embodiment, the obtained third requirement is granularity requirement information of a second object; and
the sent third requirement is granularity requirement information of a third object; where
the second object includes at least one of the following: a service data flow; and the third object includes at least one of the following: a service data flow and a QoS policy (for example, a PCC rule).

As an optional embodiment, the method further includes:
after the step of sending the third requirement to the second communication device, receiving a third response sent by the second communication device; where
the third response includes at least one of the following:
   accepting the third requirement or rejecting the third requirement; and
   a failure cause or a rejection cause.

In this embodiment of the present application, the third communication device sends the received third requirement to the second communication device, and the second communication device determines, based on a capability of the terminal and a capability of the first communication device, whether to accept or reject the congestion mark requirement, thereby avoiding a problem that the terminal cannot process the congestion mark in cooperation, and improving congestion processing efficiency.

It should be noted that, the congestion processing apparatus provided in this embodiment of the present application is an apparatus capable of performing the above congestion processing method, and all embodiments of the above congestion processing method are applicable to this apparatus, and can achieve the same or similar beneficial effects.

The congestion processing apparatus in this embodiment of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in the embodiments of the present application.

The congestion processing apparatus provided by this embodiment of the present application can implement the processes in the method embodiments in FIG. 3 to FIG. 10, and achieve the same technical effect. To avoid repetition, details are not described herein again.

Optionally, as shown in FIG. 15, an embodiment of the present application further provides a communication device 1500, including a processor 1501 and a memory 1502. The memory 1502 stores a program or an instruction executable on the processor 1501. For example, when the communication device 1500 is a first communication device, when the program or the instruction is executed by the processor 1501, steps of the embodiments of the above congestion processing method are performed, and the same technical effect can be achieved. Alternatively, when the communication device 1500 is a terminal, when the program or the instruction is executed by the processor 1501, steps of the embodiments of the above congestion processing method are performed, and the same technical effect can be achieved. Alternatively, when the communication device 1500 is a second communication device, when the program or the instruction is executed by the processor 1501, steps of the embodiments of the above congestion processing method are performed, and the same technical effect can be achieved. Alternatively, when the communication device 1500 is a third communication device, when the program or the instruction is executed by the processor 1501, steps of the embodiments of the above congestion processing method are performed, and the same technical effect can be achieved. To avoid repetition, details are not described herein again.

An embodiment of the present application further provides a terminal, including a processor and a communication interface. The processor is configured to perform a second operation. The second operation includes at least one of the following:
sending second information, where the second information includes at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information includes at least one of the following: supporting the operation and/or a function corresponding to the congestion mark, and not supporting the operation and/or the function corresponding to the congestion mark; where a first capability includes: the operation and/or a function corresponding to the congestion mark;
the first intention information of the terminal includes at least one of the following:
   allowing, by the terminal and/or a user, to perform the operation corresponding to the congestion mark; and
   not allowing, by the terminal and/or the user, to perform the operation corresponding to the congestion mark; and
   the operation information of the terminal includes at least one of the following:
      the terminal is performing the operation corresponding to the congestion mark; and
      the terminal has not performed the operation corresponding to the congestion mark.

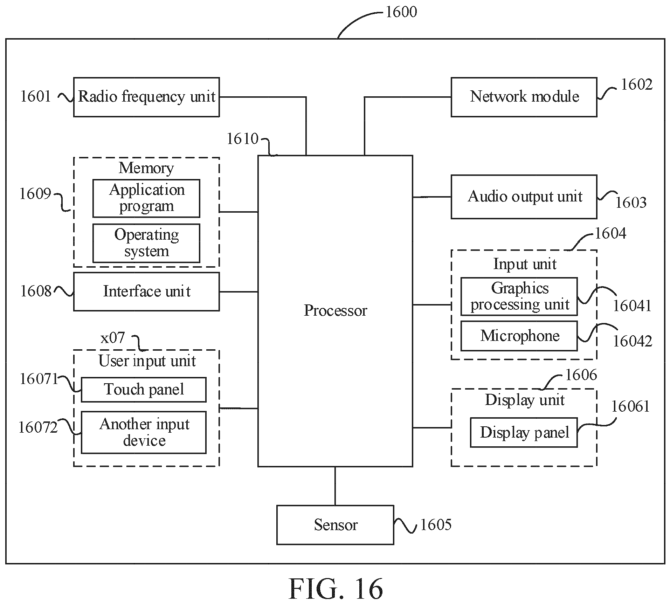

This terminal embodiment corresponds to the above method embodiment on the terminal side, and each implementation process and implementation of the above method embodiment can be applied to this terminal embodiment, and can achieve the same technical effect. Specifically, FIG. 16 is a schematic diagram of a hardware structure of a terminal implementing an embodiment of the present application.

A terminal 1600 includes but is not limited to: at least some of a radio frequency unit 1601, a network module 1602, an audio output unit 1603, an input unit 1604, a sensor 1605, a display unit 1606, a user input unit 1607, an interface unit 1608, a memory 1609, and a processor 1610.

Persons skilled in the art can understand that the terminal 1600 may further include a power supply (for example, a battery) supplying power to each component. The power supply may be logically connected to the processor 1610 by using a power management system, so as to implement functions such as charging management, discharging management and power consumption management by using the power management system. The terminal structure shown in FIG. 16 does not constitute any limitation on the terminal, and the terminal may include more or fewer components than those shown in the figure, or combine some components, or have different component arrangements. Details are not described herein.

It should be understood that in the embodiments of the present application, the input unit 1604 may include a graphics processing unit (Graphics Processing Unit, GPU) 16041 and a microphone 16042, and the graphics processing unit 16041 processes image data of a still picture or video obtained by an image capture apparatus (such as a camera) in a video capture mode or an image capture mode. The display unit 1606 may include a display panel 16061, and the display panel 16061 may be configured in a form of a liquid crystal display, an organic light-emitting diode or the like. The user input unit 1607 includes at least one of a touch panel 16071 and another input device 16072. The touch panel 16071 is also called a touch screen The touch panel 16071 may include two parts: a touch detection apparatus and a touch controller. The another input device 16072 may include, but is not limited to, a physical keyboard, function keys (such as a volume control key and a switch key), a trackball, a mouse, and a joystick. Details are not described herein.

In the embodiments of the present application, after receiving downlink data from the network side device, the radio frequency unit 1601 can transmit the data to the processor 1610 for processing. In addition, the radio frequency unit 1601 can send uplink data to the network side device. Generally, the radio frequency unit 1601 includes, but is not limited to, an antenna, an amplifier, a transceiver, a coupler, a low noise amplifier, a duplexer, and the like.

The memory 1609 may be configured to store software programs or instructions and various pieces of data. The memory 1609 may mainly include a first storage area storing a program or an instruction and a second storage area storing data, where the first storage area may store an operating system, an application program or instructions required by at least one function (for example, a sound playback function or an image playback function) and the like. Besides, the memory 1609 may be a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 described in the embodiments of the present application is intended to include but is not limited to these and any other suitable types of memories.

The processor 1610 may include one or more processing units. Optionally, the processor 1610 may integrate an application processor and a modem processor, where the application processor mainly processes an operating system, a user interface, an application program, and the like, and the modem processor mainly processes wireless communication signals, such as a baseband processor. It can be understood that, the modem processor may not be integrated into the processor 1610.

The processor 1610 is configured to perform a second operation, where the second operation includes at least one of the following:
sending second information, where the second information includes at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; where the second requirement is used to require the terminal to perform the operation corresponding to the congestion mark;
receiving a first query, where the first query is used to query the terminal whether to allow to perform the operation corresponding to the congestion mark; and
receiving a second query, where the second query is used to query the terminal whether the operation corresponding to the congestion mark is being performed; where
the first capability information includes at least one of the following: supporting the operation and/or a function corresponding to the congestion mark, and not supporting the operation and/or the function corresponding to the congestion mark; where a first capability includes: the operation and/or a function corresponding to the congestion mark;
the first intention information of the terminal includes at least one of the following:
   allowing, by the terminal and/or a user, to perform the operation corresponding to the congestion mark; and
   not allowing, by the terminal and/or the user, to perform the operation corresponding to the congestion mark; and
   the operation information of the terminal includes at least one of the following:
      the terminal is performing the operation corresponding to the congestion mark; and
      the terminal has not performed the operation corresponding to the congestion mark.

In the embodiments of the present application, the first communication device performs the first operation based on the obtained information. The first operation includes at least one of the following: determining to accept the request of performing the operation corresponding to the congestion mark, or reject the request of performing the operation corresponding to the congestion mark; performing the operation corresponding to the congestion mark, or skipping performing or rejecting to perform the operation corresponding to the congestion mark; sending the second requirement to the terminal; sending the first query to the terminal; sending the second query to the terminal; and sending at least one of the first information and the first capability information of the first communication device to the second communication device. In the embodiments of the present application, the first communication device determines, based on a capability of the terminal, whether to accept or reject the congestion mark requirement, thereby avoiding a problem that the terminal cannot process the congestion mark in cooperation, and improving congestion processing efficiency.

It should be noted that, the terminal provided in this embodiment of the present application is a terminal capable of performing the above congestion processing method, and all embodiments of the above congestion processing method are applicable to the terminal, and can achieve same or similar beneficial effects.

An embodiment of the present application further provides a network side device, including a processor and a communication interface. The communication interface is configured to obtain first information. The first information includes at least one of the following: first capability information of a terminal, first intention information of the terminal, operation information of the terminal, and a first requirement; and the processor is configured to perform a first operation based on the first information, where the first operation includes at least one of the following:
determining to accept the first requirement or reject the first requirement;
performing the operation corresponding to the congestion mark, or skipping performing or rejecting to perform the operation corresponding to the congestion mark;
sending a second requirement to the terminal, where the second requirement is used to require the terminal to perform the operation corresponding to the congestion mark;
sending a first query to the terminal, where the first query is used to query the terminal whether to allow to perform the operation corresponding to the congestion mark;
sending a second query to the terminal, where the second query is used to query the terminal whether the operation corresponding to the congestion mark is being performed; and
sending at least one of the following to a second communication device: the first information and first capability information of the first communication device; where
the first capability information includes at least one of the following:
   supporting the operation and/or a function corresponding to the congestion mark; and
   not supporting the operation and/or the function corresponding to the congestion mark; where a first capability includes: the operation and/or a function corresponding to the congestion mark;
   the first intention information of the terminal includes at least one of the following:
      allowing, by the terminal and/or a user, to perform the operation corresponding to the congestion mark; and
      not allowing, by the terminal and/or the user, to perform the operation corresponding to the congestion mark; and
      the operation information of the terminal includes at least one of the following:
         the terminal is performing the operation corresponding to the congestion mark; and
         the terminal has not performed the operation corresponding to the congestion mark.

The first requirement is used to require to perform the operation corresponding to congestion mark. This embodiment of the network side device corresponds to the above method embodiment on the network side device, and each implementation process and implementation of the above method embodiment can be applied to this embodiment of the network side device, and can achieve the same technical effect.

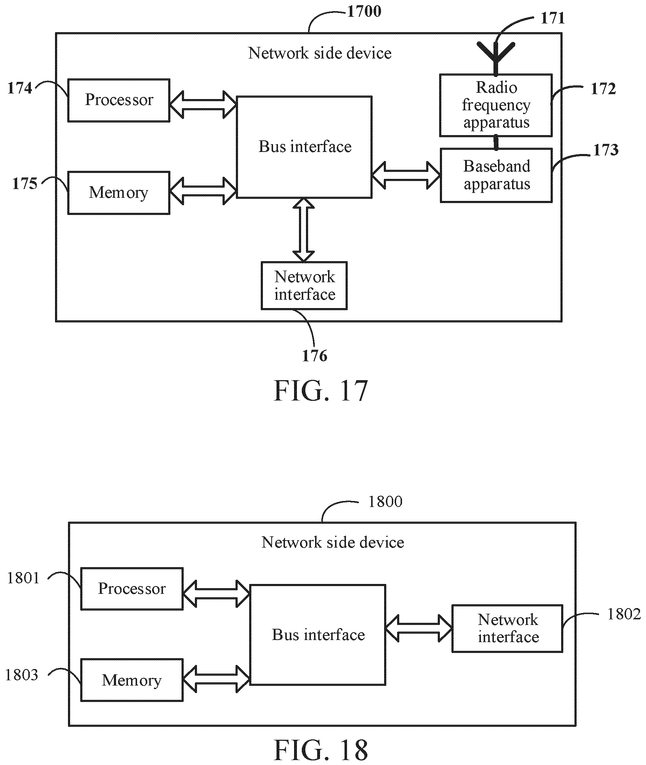

Specifically, an embodiment of the present application further provides a network side device. As shown in FIG. 17, a network side device 1700 includes: an antenna 171, a radio frequency apparatus 172, a baseband apparatus 173, a processor 174, and a memory 175. The antenna 171 is connected to the radio frequency apparatus 172. In an uplink direction, the radio frequency apparatus 172 receives information through the antenna 171, and sends the received information to the baseband apparatus 173 for processing. In a downlink direction, the baseband apparatus 173 processes information to be sent and sends the information to the radio frequency apparatus 172, and the radio frequency apparatus 172 processes the received information and then sends the information through the antenna 171.

The method performed by the network side device in the foregoing embodiment may be implemented in the baseband apparatus 173. The baseband apparatus 173 includes a baseband processor.

The baseband apparatus 173 may include, for example, at least one baseband board, and a plurality of chips are arranged on the baseband board. As shown in FIG. 17, one of the chips is, for example, the baseband processor and is connected to the memory 175 through a bus interface, to invoke a program in the memory 175, so as to perform the operations of the network device shown in the foregoing method embodiment.

The network side device may further include a network interface 176, and the interface is, for example, a common public radio interface (common public radio interface, CPRI).

Specifically, the network side device 1700 in this embodiment of the present application further includes: an instruction or a program stored on the memory 175 and executable on the processor 174, and the processor 174 invokes the instruction or program in the memory 175 to perform the method performed by the modules shown in FIG. 11, and achieve the same technical effect. To avoid repetition, details are not described herein again.

Specifically, an embodiment of the present application further provides a network side device. As shown in FIG. 18, a network side device 1800 includes: a processor 1801, a network interface 1802, and a memory 1803. The network interface 1802 is, for example, a common public radio interface (common public radio interface, CPRI).

Specifically, the network side device 1800 in this embodiment of the present application further includes: an instruction or a program stored on the memory 1803 and executable on the processor 1801, and the processor 1801 invokes the instruction or program in the memory 1803 to perform the method performed by the modules shown in FIG. 13 and FIG. 14, and achieve the same technical effect. To avoid repetition, details are not described herein again.

An embodiment of the present application further provides a readable storage medium. The readable storage medium stores a program or an instruction, and when the program or the instruction is executed by a processor, the processes of the foregoing embodiment of the congestion processing method are performed and the same technical effects can be achieved. To avoid repetition, details are not described herein again.

The processor is a processor in the terminal in the above embodiments. The readable storage medium includes a computer-readable storage medium, such as a computer read-only memory ROM, a random access memory RAM, a magnetic disk, an optical disc, or the like.

An embodiment of the present application further provides a chip, the chip includes a processor and a communication interface, the communication interface is coupled to the processor, and the processor is configured to run programs or instructions to implement each process of the embodiment of the foregoing congestion processing method and the same technical effects can be achieved. To avoid repetition, details are not described herein again.

It should be understood that the chip mentioned in the embodiments of the present application may also be called a system-level chip, a system chip, a chip system, or a system-on-chip.

An embodiment of the present application further provides a computer program/program product, the computer program/program product is stored in a storage medium, and the computer program/program product is executed by at least one processor to implement processes of the foregoing embodiment of the congestion processing method, and the same technical effects can be achieved. To avoid repetition, details are not described herein again.

An embodiment of the present application further provides a communication system, including: a terminal, a first communication device, a second communication device, and a third communication device. The terminal may be configured to perform the steps of the foregoing congestion processing method. The first communication device may be configured to perform the steps of the foregoing congestion processing method. The second communication device may be configured to perform the steps of the foregoing congestion processing method. The third communication device may be configured to perform the steps of the foregoing congestion processing method.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, an element defined by the sentence "including one" does not exclude that there are still other identical elements in this process, method, article, or apparatus including the element.

According to the foregoing descriptions of the implementations, persons skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

The embodiments of the present application are described above with reference to the accompanying drawings, but the present application is not limited to the foregoing specific implementations. The foregoing specific implementations are merely schematic instead of restrictive. Under enlightenment of the present application, persons of ordinary skill in the art may make many forms without departing from the protection scope of aims of the present application and claims, all of which fall within the protection of the present application.

## Claims

1. A congestion processing method, comprising:
obtaining, by a first communication device, first information; wherein the first information comprises at least one of the following: first capability information of a terminal, first intention information of the terminal, operation information of the terminal, and a first requirement; and
performing, by the first communication device, a first operation based on the first information, wherein the first operation comprises at least one of the following:
determining to accept the first requirement or reject the first requirement;
performing an operation corresponding to a congestion mark, or skipping performing or rejecting to perform an operation corresponding to a congestion mark;
sending a second requirement to the terminal, wherein the second requirement is used to require the terminal to perform the operation corresponding to the congestion mark;
sending a first query to the terminal, wherein the first query is used to query the terminal whether to allow to perform the operation corresponding to the congestion mark;
sending a second query to the terminal, wherein the second query is used to query the terminal whether the operation corresponding to the congestion mark is being performed; and
sending at least one of the following to a second communication device: the first information and first capability information of the first communication device; wherein
the first capability information indicates one of the following:
supporting the operation and/or a function corresponding to the congestion mark; and
not supporting the operation and/or the function corresponding to the congestion mark;
the first intention information of the terminal indicates one of the following:
allowing, by the terminal and/or a user, to perform the operation corresponding to the congestion mark; and
not allowing, by the terminal and/or the user, to perform the operation corresponding to the congestion mark;
the operation information of the terminal indicates one of the following:
the terminal is performing the operation corresponding to the congestion mark; and
the terminal has not performed the operation corresponding to the congestion mark, wherein
the first requirement is used to require to perform the operation corresponding to congestion mark.

2. The method according to claim 1, wherein
the performing an operation corresponding to a congestion mark comprises at least one of the following: setting a first congestion mark for a data packet when a congestion mark condition is met; setting, based on the received first congestion mark, a second congestion mark for feedback; performing a congestion response operation based on the received first congestion mark or the second congestion mark; and recognizing mark information related to a congestion mark in a first protocol layer;
and/or
the performing an operation corresponding to a congestion mark comprises at least one of the following: performing, on a downlink, the operation corresponding to the congestion mark, and performing, on an uplink, the operation corresponding to the congestion mark; and recognizing mark information related to a congestion mark in a first protocol layer;
and/or
the performing, on a downlink, the operation corresponding to the congestion mark comprises at least one of the following:
setting a first congestion mark for a downlink data packet when a downlink direction meets a congestion mark condition;
setting, based on the received first congestion mark, a second congestion mark for an uplink data packet for feedback; and
recognizing mark information related to a congestion mark in a first protocol layer;
and/or
the performing, on an uplink, the operation corresponding to the congestion mark comprises at least one of the following:
setting a first congestion mark for an uplink data packet when an uplink direction meets a congestion mark condition;
setting a first congestion mark for a downlink data packet when the uplink direction meets the congestion mark condition;
sending a corresponding congestion mark or a corresponding congestion status to the terminal when the uplink direction meets the congestion mark or the congestion condition; and
performing a congestion response operation on the uplink based on the received first congestion mark or a second congestion mark; wherein
the first protocol layer comprises at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

3. The method according to claim 2, wherein
the performing, on a downlink by the first communication device, the operation corresponding to the congestion mark comprises at least one of the following: setting the first congestion mark for the downlink data packet when the downlink direction meets the congestion mark condition; and recognizing the mark information related to the congestion mark in the first protocol layer;
and/or
the performing, on a downlink by the terminal, the operation corresponding to the congestion mark comprises at least one of the following: setting, based on the received first congestion mark, the second congestion mark for the uplink data packet for feedback; and recognizing the mark information related to the congestion mark in the first protocol layer;
and/or
the performing, on an uplink by the first communication device, the operation corresponding to the congestion mark comprises at least one of the following:
setting the first congestion mark for the uplink data packet when the uplink direction meets the congestion mark condition;
sending the congestion mark or the congestion status to the terminal when the uplink direction meets the congestion mark or the congestion condition; and
recognizing the mark information related to the congestion mark in the first protocol layer;
and/or
performing, on the uplink by the terminal, the operation corresponding to the congestion mark comprises at least one of the following:
setting the first congestion mark for the uplink data packet when the uplink direction meets the congestion mark condition;
performing the congestion response operation on the uplink based on the received first congestion mark or the second congestion mark; and
recognizing the mark information related to the congestion mark in the first protocol layer;
and/or
the requiring, by the first requirement, to perform the operation corresponding to the congestion mark comprises at least one of the following: requiring to perform, on the uplink, the operation corresponding to the congestion mark; and requiring to perform, on the downlink, the operation corresponding to the congestion mark;
and/or
the first requirement or the requiring, by the first requirement, to perform, on the downlink, the operation corresponding to the congestion mark comprises at least one of the following: requiring to set the first congestion mark for the downlink data packet when that the congestion mark condition is met; requiring to set, based on the received first congestion mark, the second congestion mark for feedback; and requiring to recognize the mark information related to the congestion mark in the first protocol layer;
and/or
requiring, by the second requirement, the terminal to perform the operation corresponding to the congestion mark comprises at least one of the following: requiring the terminal to perform, on the uplink, the operation corresponding to the congestion mark; and requiring the terminal to perform, on the downlink, the operation corresponding to the congestion mark;
and/or
the second requirement or the requiring, by the second requirement, the terminal to perform, on the downlink, the operation corresponding to the congestion mark comprises at least one of the following: requiring the terminal to set, based on the received first congestion mark, the second congestion mark for the uplink data packet for feedback; and requiring to recognize the mark information related to the congestion mark in the first protocol layer.

4. The method according to any one of claims 1 to 3, wherein the first operation further comprises at least one of the following:
sending a first response after the step of obtaining the first requirement;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; wherein
the first response comprises at least one of the following:
determining to accept the first requirement or reject the first requirement; and
a failure cause or a rejection cause;
the second response comprises at least one of the following information:
accepting the second requirement or rejecting the second requirement; and
a failure cause or a rejection cause;
the response to the first query comprises one of the following:
allowing, by the terminal and/or the user, to perform the operation corresponding to the congestion mark; and
not allowing, by the terminal and/or the user, to perform the operation corresponding to the congestion mark; and
the response to the second query comprises one of the following:
the terminal is performing the operation corresponding to the congestion mark; and
the terminal has not performed the operation corresponding to the congestion mark.

5. The method according to claim 4, wherein the failure cause or the rejection cause comprises at least one of the following:
the terminal does not support the operation and/or the function corresponding to the congestion mark; and
the terminal and/or the user does not allow to perform the operation corresponding to the congestion mark.

6. The method according to any one of claims 1 to 3, wherein when a first condition is met, the first operation comprises at least one of the following: performing the operation corresponding to the congestion mark, and determining to accept the first requirement; wherein
the first condition comprises at least one of the following:
the terminal supports the operation and/or the function corresponding to the congestion mark;
the terminal and/or the user allows to perform the operation corresponding to the congestion mark;
the terminal is performing the operation corresponding to the congestion mark;
the terminal accepts the second requirement;
the terminal accepts that the operation corresponding to the congestion mark is being performed;
the first communication device supports the operation and/or the function corresponding to the congestion mark;
a resource of the first communication device can meet the first requirement; and
the first communication device has received the first requirement.

7. The method according to any one of claims 1 to 3, wherein when a second condition is met, the first operation comprises at least one of the following: skipping performing or rejecting to perform the operation corresponding to the congestion mark; wherein
the second condition comprises at least one of the following:
the terminal does not support the operation and/or the function corresponding to the congestion mark;
the terminal and/or the user does not allow to perform the operation corresponding to the congestion mark;
the terminal rejects the second requirement;
the terminal has not performed the operation corresponding to the congestion mark;
the first communication device has not received the first requirement;
the first communication device has received the first requirement, but a resource of the first communication device cannot meet the first requirement; and
the first communication device does not support the operation and/or the function corresponding to the congestion mark.

8. The method according to any one of claims 1 to 3, wherein when a third condition is met, the first operation comprises at least one of the following: rejecting the first requirement; wherein
the third condition comprises at least one of the following:
the terminal does not support the operation and/or the function corresponding to the congestion mark;
the terminal and/or the user does not allow to perform the operation corresponding to the congestion mark;
the terminal rejects the second requirement;
the terminal has not performed the operation corresponding to the congestion mark;
the first communication device does not support the operation and/or the function corresponding to the congestion mark;
the first communication device has received the first requirement; and
a resource of the first communication device cannot meet the first requirement.

9. The method according to any one of claims 1 to 3, wherein when a fourth condition is met, the first operation comprises at least one of the following: sending the second requirement to the terminal; wherein
the fourth condition comprises at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device has received the first requirement; and
a resource of the first communication device can meet the first requirement.

10. The method according to any one of claims 1 to 3, wherein when a fifth condition is met, the first operation comprises at least one of the following: sending the first query to the terminal; wherein
the fifth condition comprises at least one of the following:
the terminal supports the operation and/or the function corresponding to the congestion mark;
the first communication device cannot determine whether the terminal allows to perform the operation corresponding to the congestion mark;
the first communication device supports the operation and/or the function corresponding to the congestion mark;
the first communication device has received the first requirement; and
a resource of the first communication device can meet the first requirement.

11. The method according to any one of claims 1 to 3, wherein when a sixth condition is met, the first operation comprises at least one of the following: sending the second query to the terminal; wherein
the sixth condition comprises at least one of the following:
the terminal supports the operation and/or the function corresponding to the congestion mark;
the first communication device cannot determine whether the terminal is performing the operation corresponding to the congestion mark;
the first communication device supports the operation and/or the function corresponding to the congestion mark;
the first communication device has received the first requirement; and
a resource of the first communication device can meet the first requirement.

12. The method according to any one of claims 7 to 11, wherein
the performing, by the first communication device, the operation corresponding to the congestion mark comprises: performing, on a downlink by the first communication device, the operation corresponding to the congestion mark;
and/or
the skipping, by the first communication device, performing or rejecting to perform the operation corresponding to the congestion mark comprises: skipping, by the first communication device, performing, on a downlink, or rejecting to perform, on a downlink, the operation corresponding to the congestion mark;
and/or
the first requirement or a first requirement in an N^{th} condition comprises: requiring to perform, on a downlink, the operation corresponding to the congestion mark;
and/or
the second requirement or a second requirement in an N^{th} condition comprises: requiring to perform, on a downlink, the operation corresponding to the congestion mark;
and/or
the first query comprises: querying the terminal whether to allow to perform, on a downlink, the operation corresponding to the congestion mark;
and/or
the second query comprises: querying whether the terminal is performing, on a downlink, the operation corresponding to the congestion mark;
and/or
the supporting, by the terminal, the operation and/or the function corresponding to the congestion mark in an N^{th} condition comprises: supporting, by the terminal, performing, on a downlink, the operation and/or the function corresponding to the congestion mark;
and/or
the allowing, by the terminal and/or the user, to perform the operation corresponding to the congestion mark in an N^{th} condition comprises: allowing, by the terminal and/or the user, to perform, on a downlink, the operation corresponding to the congestion mark;
and/or
that the terminal is performing the operation corresponding to the congestion mark in an N^{th} condition comprises: the terminal is performing, on a downlink, the operation corresponding to the congestion mark;
and/or
the not supporting, by the terminal, the operation and/or the function corresponding to the congestion mark in an N^{th} condition comprises: not supporting, by the terminal, performing, on a downlink, the operation and/or the function corresponding to the congestion mark;
and/or
the not allowing, by the terminal and/or the user, to perform the operation corresponding to the congestion mark in an N^{th} condition comprises: not allowing, by the terminal and/or the user, to perform, on a downlink, the operation corresponding to the congestion mark;
and/or
that the terminal has not performed the operation corresponding to the congestion mark in an N^{th} condition comprises: the terminal has not performed, on a downlink, the operation corresponding to the congestion mark, wherein
the N^{th} condition comprises at least one of the following: the first condition, the second condition, the third condition, the fourth condition, the fifth condition, and the sixth condition.

13. The method according to any one of claims 1 to 11, wherein the performing an operation corresponding to a congestion mark comprises: performing, on the downlink, the operation corresponding to the congestion mark;
and/or
the operation corresponding to the congestion mark comprises an operation corresponding to a downlink congestion mark.

14. The method according to claim 1, wherein
at least one of the first requirement, the second requirement, the first intention information, the operation information of the terminal, the first query, and the second query is granularity information of a first object;
and/or
at least one of the first requirement, the second requirement, the first intention information, the operation information of the terminal, the first query, and the second query further comprises: description information of the first object;
and/or
at least one of the first requirement, the second requirement, the first intention information, the operation information of the terminal, the first query, and the second query is carried in signaling or an information element corresponding to a granularity of the first object; wherein
the first object comprises at least one of the following: a terminal, a service data flow, a data packet set, and a channel.

15. A congestion processing method, comprising:
performing, by a terminal, a second operation, wherein the second operation comprises at least one of the following:
sending second information, wherein the second information comprises at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; wherein the second requirement is used to require the terminal to perform the operation corresponding to the congestion mark;
receiving a first query, wherein the first query is used to query the terminal whether to allow to perform the operation corresponding to the congestion mark; and
receiving a second query, wherein the second query is used to query the terminal whether the operation corresponding to the congestion mark is being performed; wherein
the first capability information indicates one of the following: supporting the operation and/or a function corresponding to the congestion mark, and not supporting the operation and/or the function corresponding to the congestion mark;
the first intention information of the terminal indicates one of the following:
the terminal and/or the user allows to perform the operation corresponding to the congestion mark; and
the terminal and/or the user does not allow to perform the operation corresponding to the congestion mark; and
the operation information of the terminal indicates one of the following:
the terminal is performing the operation corresponding to the congestion mark; and
the terminal has not performed the operation corresponding to the congestion mark.

16. The method according to claim 15, wherein
the performing an operation corresponding to a congestion mark comprises at least one of the following: setting a first congestion mark for a data packet when a congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark comprises at least one of the following: performing, on a downlink, the operation corresponding to the congestion mark, and performing, on an uplink, the operation corresponding to the congestion mark; and recognizing the mark information related to the congestion mark in the first protocol layer;
and/or
the performing, on a downlink, the operation corresponding to the congestion mark comprises at least one of the following:
setting the first congestion mark for the downlink data packet when the downlink direction meets the congestion mark condition;
setting, based on the received first congestion mark, the second congestion mark for the uplink data packet for feedback; and
recognizing the mark information related to the congestion mark in the first protocol layer;
and/or
the performing, on an uplink, the operation corresponding to the congestion mark comprises at least one of the following:
setting the first congestion mark for the uplink data packet when the uplink direction meets the congestion mark condition;
setting the first congestion mark for a downlink data packet when the uplink direction meets the congestion mark condition;
sending a corresponding congestion mark or a corresponding congestion status to the terminal when the uplink direction meets the congestion mark or the congestion condition; and
performing the congestion response operation on the uplink based on the received first congestion mark or the second congestion mark; where
the first protocol layer comprises at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

17. The method according to claim 16, wherein
the performing, on a downlink by the terminal, the operation corresponding to the congestion mark comprises at least one of the following: setting, based on the received first congestion mark, the second congestion mark for the uplink data packet for feedback; and recognizing the mark information related to the congestion mark in the first protocol layer;
and/or
the performing, on an uplink by the terminal, the operation corresponding to the congestion mark comprises at least one of the following:
setting the first congestion mark for the uplink data packet when the uplink direction meets the congestion mark condition;
performing the congestion response operation on the uplink based on the received first congestion mark or the second congestion mark; and
recognizing the mark information related to the congestion mark in the first protocol layer;
and/or
the requiring, by the second requirement, the terminal to perform the operation corresponding to the congestion mark comprises at least one of the following: requiring the terminal to perform, on the uplink, the operation corresponding to the congestion mark; and requiring the terminal to perform, on the downlink, the operation corresponding to the congestion mark;
and/or
the second requirement or the requiring, by the second requirement, the terminal to perform, on the downlink, the operation corresponding to the congestion mark comprises at least one of the following: requiring the terminal to set, based on the received first congestion mark, the second congestion mark for the uplink data packet for feedback; and requiring to recognize the mark information related to the congestion mark in the first protocol layer.

18. The method according to any one of claims 15 to 17, wherein the second operation further comprises at least one of the following:
sending a second response based on the received second requirement;
sending a response to the first query based on the received first query; and
sending a response to the second query based on the received second query; wherein
the second response comprises at least one of the following:
accepting the second requirement or rejecting the second requirement; and
a failure cause or a rejection cause;
the response to the first query comprises at least one of the following:
the terminal and/or the user allows to perform the operation corresponding to the congestion mark; and
the terminal and/or the user does not allow to perform the operation corresponding to the congestion mark; and
the response to the second query comprises at least one of the following:
the terminal is performing the operation corresponding to the congestion mark; and
the terminal has not performed the operation corresponding to the congestion mark.

19. The method according to claim 15, wherein when a seventh condition is met, the second operation comprises at least one of the following: performing the operation corresponding to the congestion mark, and determining to accept the second requirement; wherein
the seventh condition comprises at least one of the following:
the terminal supports the operation and/or the function corresponding to the congestion mark;
the terminal and/or the user allows to perform the operation corresponding to the congestion mark;
a requirement that the terminal is performing the operation corresponding to the congestion mark; and
the terminal has received the second requirement.

20. The method according to claim 19, wherein
the performing, by the terminal, the operation corresponding to the congestion mark comprises: performing, on a downlink, the operation corresponding to the congestion mark;
and/or
the second requirement comprises: requiring to perform, on a downlink, the operation corresponding to the congestion mark;
and/or
the supporting, by the terminal, the operation and/or the function corresponding to the congestion mark in the seventh condition comprises: supporting, by the terminal, performing, on a downlink, the operation and/or the function corresponding to the congestion mark;
and/or
the allowing, by the terminal and/or the user, to perform the operation corresponding to the congestion mark in the seventh condition comprises: allowing, by the terminal and/or the user, to perform, on a downlink, the operation corresponding to the congestion mark;
and/or
that the terminal is performing the operation corresponding to the congestion mark in the seventh condition comprises: the terminal is performing, on a downlink, the operation corresponding to the congestion mark.

21. The method according to claim 15, wherein when the second operation comprises performing the operation corresponding to the congestion mark, before the step of performing the operation corresponding to the congestion mark, the method further comprises: receiving the second requirement; and
the performing the operation corresponding to the congestion mark comprises:
performing, based on the second requirement, the operation corresponding to the congestion mark.

22. The method according to any one of claims 15 to 21, wherein the performing the operation corresponding to the congestion mark comprises: performing, on the downlink, the operation corresponding to the congestion mark;
and/or
the operation corresponding to the congestion mark comprises an operation corresponding to a downlink congestion mark.

23. The method according to claim 15, wherein a capability required for the operation and/or the function corresponding to the congestion mark is a first capability;
and/or
the first capability of the terminal or the first capability information is represented as one of the following: a radio resource control RRC capability of the terminal, a non-access stratum NAS capability of the terminal, a mobility management capability of the terminal, and a session management capability of the terminal.

24. A congestion processing method, comprising:
obtaining, by a second communication device, third information, wherein the third information comprises at least one of the following: first capability information of a terminal, first capability information of a first communication device, first intention information of the terminal, operation information of the terminal, and a third requirement; and
performing, by the second communication device, a third operation based on the third information; wherein the third operation comprises at least one of the following:
determining to accept the third requirement or reject the third requirement;
sending a first requirement to the first communication device, wherein the first requirement is used to require to perform an operation corresponding to a congestion mark;
sending a second requirement to the terminal, wherein the second requirement is used to require the terminal to perform the operation corresponding to the congestion mark;
sending a first query to the terminal, wherein the first query is used to query the terminal whether to allow to perform the operation corresponding to the congestion mark; and
sending a second query to the terminal, wherein the second query is used to query the terminal whether the operation corresponding to the congestion mark is being performed; wherein
the first capability information indicates one of the following: supporting the operation and/or a function corresponding to the congestion mark, and not supporting the operation and/or the function corresponding to the congestion mark;
the first intention information of the terminal indicates one of the following:
the terminal and/or the user allows to perform the operation corresponding to the congestion mark; and
the terminal and/or the user does not allow to perform the operation corresponding to the congestion mark; and
the operation information of the terminal indicates one of the following:
the terminal is performing the operation corresponding to the congestion mark; and
the terminal has not performed the operation corresponding to the congestion mark; wherein
the third requirement is used to require to perform the operation corresponding to the congestion mark.

25. The method according to claim 24, wherein
the performing an operation corresponding to a congestion mark comprises at least one of the following: setting a first congestion mark for a data packet when a congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark comprises at least one of the following: performing, on a downlink, the operation corresponding to the congestion mark, and performing, on an uplink, the operation corresponding to the congestion mark; and recognizing the mark information related to the congestion mark in the first protocol layer;
and/or
the performing, on a downlink, the operation corresponding to the congestion mark comprises at least one of the following:
setting the first congestion mark for the downlink data packet when the downlink direction meets the congestion mark condition;
setting, based on the received first congestion mark, the second congestion mark for the uplink data packet for feedback; and
recognizing the mark information related to the congestion mark in the first protocol layer;
and/or
the performing, on an uplink, the operation corresponding to the congestion mark comprises at least one of the following:
setting the first congestion mark for the uplink data packet when the uplink direction meets the congestion mark condition;
setting the first congestion mark for a downlink data packet when the uplink direction meets the congestion mark condition;
sending a corresponding congestion mark or a corresponding congestion status to the terminal when the uplink direction meets the congestion mark or the congestion condition; and
performing the congestion response operation on the uplink based on the received first congestion mark or the second congestion mark; wherein
the first protocol layer comprises at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

26. The method according to claim 25, wherein
the requiring, by the first requirement, to perform the operation corresponding to the congestion mark comprises at least one of the following: requiring to perform, on the uplink, the operation corresponding to the congestion mark; and requiring to perform, on a downlink, the operation corresponding to the congestion mark;
and/or
the first requirement or the requiring, by the first requirement, to perform, on the downlink, the operation corresponding to the congestion mark comprises at least one of the following: requiring to set the first congestion mark for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer;
and/or
the requiring, by the second requirement, the terminal to perform the operation corresponding to the congestion mark comprises at least one of the following: requiring the terminal to perform, on the uplink, the operation corresponding to the congestion mark; and requiring the terminal to perform, on the downlink, the operation corresponding to the congestion mark;
and/or
the second requirement or the requiring, by the second requirement, the terminal to perform, on the downlink, the operation corresponding to the congestion mark comprises at least one of the following: requiring the terminal to set, based on the received first congestion mark, the second congestion mark for the uplink data packet for feedback; and requiring to recognize the mark information related to the congestion mark in the first protocol layer;
and/or
the requiring, by the third requirement, to perform the operation corresponding to the congestion mark comprises at least one of the following: requiring to perform, on the uplink, the operation corresponding to the congestion mark; and requiring to perform, on a downlink, the operation corresponding to the congestion mark;
and/or
the third requirement or the requiring, by the third requirement, to perform, on the downlink, the operation corresponding to the congestion mark comprises at least one of the following: requiring to set the first congestion mark for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

27. The method according to any one of claims 24 to 26, wherein the third operation further comprises at least one of the following:
sending a third response after the step of obtaining the third requirement;
after the step of sending the first requirement to the first communication device, receiving a first response sent by the first communication device;
after the step of sending the second requirement to the terminal, receiving a second response sent by the terminal;
after the step of sending the first query to the terminal, receiving a response to the first query sent by the terminal; and
after the step of sending the second query to the terminal, receiving a response to the second query sent by the terminal; wherein
the first response comprises at least one of the following:
accepting the first requirement or rejecting the first requirement; and
a failure cause or a rejection cause;
the second response comprises at least one of the following information:
accepting the second requirement or rejecting the second requirement; and
a failure cause or a rejection cause;
the third response comprises at least one of the following:
accepting the third requirement or rejecting the third requirement; and
a failure cause or a rejection cause;
the response to the first query comprises one of the following:
the terminal and/or the user allows to perform the operation corresponding to the congestion mark; and
the terminal and/or the user does not allow to perform the operation corresponding to the congestion mark; and
the response to the second query comprises one of the following:
the terminal is performing the operation corresponding to the congestion mark; and
the terminal has not performed the operation corresponding to the congestion mark.

28. The method according to claim 27, wherein the failure cause or the rejection cause comprises at least one of the following:
the terminal does not support the operation and/or the function corresponding to the congestion mark;
the terminal and/or the user does not allow to perform the operation corresponding to the congestion mark;
the first communication device does not support the operation and/or the function corresponding to the congestion mark; and
the first communication device does not allow to perform the operation corresponding to the congestion mark.

29. The method according to any one of claims 24 to 26, wherein when an eighth condition is met, the third operation comprises at least one of the following: sending the first requirement to the first communication device, and determining to accept the third requirement; wherein
the eighth condition comprises at least one of the following:
the first communication device supports the operation and/or the function corresponding to the congestion mark;
the first communication device allows to perform the operation corresponding to the congestion mark;
the terminal supports the operation and/or the function corresponding to the congestion mark;
the terminal and/or the user allows to perform the operation corresponding to the congestion mark;
the terminal is performing the operation corresponding to the congestion mark;
the terminal accepts the second requirement; and
the second communication device has received the third requirement.

30. The method according to any one of claims 24 to 26, wherein when a ninth condition is met, the third operation comprises at least one of the following: determining to accept the third requirement; wherein
the ninth condition comprises at least one of the following:
the first communication device supports the operation and/or the function corresponding to the congestion mark;
the first communication device accepts the first requirement;
the terminal supports the operation and/or the function corresponding to the congestion mark;
the terminal and/or the user allows to perform the operation corresponding to the congestion mark;
the terminal is performing the operation corresponding to the congestion mark;
the terminal accepts the second requirement; and
the second communication device has received the third requirement.

31. The method according to any one of claims 24 to 26, wherein when a tenth condition is met, the first requirement is not sent to the first communication device, wherein
the tenth condition comprises at least one of the following:
the first communication device does not support the operation and/or the function corresponding to the congestion mark;
the terminal does not support the operation and/or the function corresponding to the congestion mark;
the terminal and/or the user does not allow to perform the operation corresponding to the congestion mark;
the terminal has not performed the operation corresponding to the congestion mark;
the terminal rejects the second requirement; and
the second communication device has not received the third requirement.

32. The method according to any one of claims 24 to 26, wherein when an eleventh condition is met, the third requirement is rejected, wherein
the eleventh condition comprises at least one of the following:
the first communication device does not support the operation and/or the function corresponding to the congestion mark;
the first communication device rejects the first requirement;
the terminal does not support the operation and/or the function corresponding to the congestion mark;
the terminal and/or the user does not allow to perform the operation corresponding to the congestion mark;
the terminal has not performed the operation corresponding to the congestion mark;
the terminal rejects the second requirement; and
the second communication device has received the third requirement.

33. The method according to any one of claims 24 to 26, wherein when a twelfth condition is met, the third operation comprises at least one of the following: sending the second requirement to the terminal; wherein
the twelfth condition comprises at least one of the following:
the terminal supports the operation and/or the function corresponding to the congestion mark;
the terminal allows to perform the operation corresponding to the congestion mark;
the terminal has not performed the operation corresponding to the congestion mark;
the first communication device supports the operation and/or the function corresponding to the congestion mark;
the first communication device accepts the first requirement; and
the second communication device has received the third requirement.

34. The method according to any one of claims 24 to 26, wherein when a thirteenth condition is met, the third operation comprises at least one of the following: sending the first query to the terminal; wherein
the thirteenth condition comprises at least one of the following:
the terminal supports the operation and/or the function corresponding to the congestion mark;
the second communication device cannot determine whether the terminal allows to perform the operation corresponding to the congestion mark;
the first communication device supports the operation and/or the function corresponding to the congestion mark;
the first communication device accepts the first requirement; and
the second communication device has received the third requirement.

35. The method according to any one of claims 24 to 26, wherein when a fourteenth condition is met, the third operation comprises at least one of the following: sending the second query to the terminal; wherein
the fourteenth condition comprises at least one of the following:
the terminal supports the operation and/or the function corresponding to the congestion mark;
the second communication device cannot determine whether the terminal is performing the operation corresponding to the congestion mark;
the first communication device supports the operation and/or the function corresponding to the congestion mark;
the first communication device accepts the first requirement; and
the second communication device has received the third requirement.

36. The method according to any one of claims 29 to 35, wherein
the performing, by the first communication device, the operation corresponding to the congestion mark comprises: performing, on a downlink by the first communication device, the operation corresponding to the congestion mark;
and/or
the skipping, by the first communication device, performing or rejecting to perform the operation corresponding to the congestion mark comprises: skipping, by the first communication device, performing, on a downlink, or rejecting to perform, on a downlink, the operation corresponding to the congestion mark;
and/or
the first requirement or the first requirement in an M^{th} condition comprises: requiring to perform, on a downlink, the operation corresponding to the congestion mark;
and/or
the second requirement or the second requirement in the M^{th} condition comprises: requiring to perform, on a downlink, the operation corresponding to the congestion mark;
and/or
the third requirement or the third requirement in the M^{th} condition comprises: requiring to perform, on a downlink, the operation corresponding to the congestion mark;
and/or
the first query comprises: querying the terminal whether to allow to perform, on a downlink, the operation corresponding to the congestion mark;
and/or
the second query comprises: querying whether the terminal is performing, on a downlink, the operation corresponding to the congestion mark;
and/or
the supporting, by the terminal, the operation and/or the function corresponding to the congestion mark in the M^{th} condition comprises: supporting, by the terminal, performing, on a downlink, the operation and/or the function corresponding to the congestion mark;
and/or
the allowing, by the terminal and/or the user, to perform the operation corresponding to the congestion mark in the M^{th} condition comprises: allowing, by the terminal and/or the user, to perform, on a downlink, the operation corresponding to the congestion mark;
and/or
that the terminal is performing the operation corresponding to the congestion mark in the M^{th} condition comprises: the terminal is performing, on a downlink, the operation corresponding to the congestion mark;
and/or
the not supporting, by the terminal, the operation and/or the function corresponding to the congestion mark in the M^{th} condition comprises: not supporting, by the terminal, performing, on a downlink, the operation and/or the function corresponding to the congestion mark;
and/or
the not allowing, by the terminal and/or the user, to perform the operation corresponding to the congestion mark in the M^{th} condition comprises: not allowing, by the terminal and/or the user, to perform, on a downlink, the operation corresponding to the congestion mark;
and/or
that the terminal has not performed the operation corresponding to the congestion mark in the M^{th} condition comprises: the terminal has not performed, on a downlink, the operation corresponding to the congestion mark; wherein
the M^{th} condition comprises at least one of the following: the eighth condition, the ninth condition, the tenth condition, the eleventh condition, the twelfth condition, the thirteenth condition, and the fourteenth condition.

37. The method according to any one of claims 24 to 35, wherein the performing the operation corresponding to the congestion mark comprises: performing, on the downlink, the operation corresponding to the congestion mark;
and/or
the operation corresponding to the congestion mark comprises an operation corresponding to a downlink congestion mark.

38. The method according to claim 24, wherein
at least one of the first requirement, the second requirement, the third requirement, the first intention information, the operation information of the terminal, the first query, and the second query is granularity information of a first object;
and/or
at least one of the first requirement, the second requirement, the third requirement, the first intention information, the operation information of the terminal, the first query, and the second query further comprises: description information of the first object;
and/or
at least one of the first requirement, the second requirement, the third requirement, the first intention information, the operation information of the terminal, the first query, and the second query is carried in signaling or an information element corresponding to the granularity of the first object; wherein
the first object comprises at least one of the following: a terminal, a service data flow, a data packet set, and a channel.

39. A congestion processing method, comprising:
obtaining, by a third communication device, a third requirement, wherein the third requirement is used to require to perform an operation corresponding to a congestion mark; and
sending, by the third communication device, the third requirement to a second communication device.

40. The method according to claim 39, wherein
the performing an operation corresponding to a congestion mark comprises at least one of the following: setting a first congestion mark for a data packet when a congestion mark condition is met; setting, based on the received first congestion mark, a second congestion mark for feedback; performing a congestion response operation based on the received first congestion mark or the second congestion mark; and recognizing the mark information related to the congestion mark in the first protocol layer;
and/or
the performing an operation corresponding to a congestion mark comprises at least one of the following: performing, on a downlink, the operation corresponding to the congestion mark, and performing, on an uplink, the operation corresponding to the congestion mark; and recognizing the mark information related to the congestion mark in the first protocol layer;
and/or
the performing, on a downlink, the operation corresponding to the congestion mark comprises at least one of the following:
setting the first congestion mark for the downlink data packet when the downlink direction meets the congestion mark condition;
setting, based on the received first congestion mark, the second congestion mark for the uplink data packet for feedback; and
recognizing the mark information related to the congestion mark in the first protocol layer;
and/or
the performing, on an uplink, the operation corresponding to the congestion mark comprises at least one of the following:
setting the first congestion mark for the uplink data packet when the uplink direction meets the congestion mark condition;
setting the first congestion mark for a downlink data packet when the uplink direction meets the congestion mark condition;
sending a corresponding congestion mark or a corresponding congestion status to the terminal when the uplink direction meets the congestion mark or the congestion condition; and
performing the congestion response operation on the uplink based on the received first congestion mark or the second congestion mark; wherein
the first protocol layer comprises at least one of the following: a physical layer, a medium access control MAC layer, a radio link control RLC layer, a packet data convergence protocol PDCP layer, a service data adaptation protocol SDAP layer, a general packet radio service tunneling protocol for the user plane GTP-U layer, an Internet protocol IP layer, and a transmission control protocol TCP layer.

41. The method according to claim 40, wherein
the requiring, by the third requirement, to perform the operation corresponding to the congestion mark comprises at least one of the following: requiring to perform, on the uplink, the operation corresponding to the congestion mark; and requiring to perform, on a downlink, the operation corresponding to the congestion mark;
and/or
the third requirement or the requiring, by the third requirement, to perform, on the downlink, the operation corresponding to the congestion mark comprises at least one of the following: requiring to set the first congestion mark for the downlink data packet when the congestion mark condition is met; requiring to set, based on the received first congestion mark, the second congestion mark for feedback and set, based on the received first congestion mark, the second congestion mark for the uplink data packet for feedback; and requiring to recognize the mark information related to the congestion mark in the first protocol layer.

42. The method according to claim 39, wherein
the obtained third requirement is granularity requirement information of a second object; and
the sent third requirement is granularity requirement information of a third object; wherein
the second object comprises at least one of the following: a service data flow; and the third object comprises at least one of the following: a service data flow and a QoS policy.

43. The method according to any one of claims 39 to 42, wherein the method further comprises:
after the step of sending the third requirement to the second communication device, receiving a third response sent by the second communication device; wherein
the third response comprises at least one of the following:
accepting the third requirement or rejecting the third requirement; and
a failure cause or a rejection cause.

44. A congestion processing apparatus, applied to a first communication device, comprising:
a first obtaining module, configured to obtain first information; wherein the first information comprises at least one of the following: first capability information of a terminal, first intention information of the terminal, operation information of the terminal, and a first requirement; and
a first execution module, configured to perform a first operation based on the first information; wherein the first operation comprises at least one of the following:
determining to accept the first requirement or reject the first requirement;
performing the operation corresponding to the congestion mark, or skipping performing or rejecting to perform the operation corresponding to the congestion mark;
sending a second requirement to the terminal, wherein the second requirement is used to require the terminal to perform the operation corresponding to the congestion mark;
sending a first query to the terminal, wherein the first query is used to query the terminal whether to allow to perform the operation corresponding to the congestion mark;
sending a second query to the terminal, wherein the second query is used to query the terminal whether the operation corresponding to the congestion mark is being performed; and
sending at least one of the following to a second communication device: the first information and first capability information of the first communication device; wherein
the first capability information indicates one of the following:
supporting the operation and/or a function corresponding to the congestion mark; and
not supporting the operation and/or the function corresponding to the congestion mark;
the first intention information of the terminal indicates one of the following:
the terminal and/or the user allows to perform the operation corresponding to the congestion mark; and
the terminal and/or the user does not allow to perform the operation corresponding to the congestion mark; and
the operation information of the terminal indicates one of the following:
the terminal is performing the operation corresponding to the congestion mark; and
the terminal has not performed the operation corresponding to the congestion mark; wherein
the first requirement is used to require to perform the operation corresponding to congestion mark.

45. A congestion processing apparatus, applied to a terminal, comprising:
a second execution module, configured to perform a second operation, wherein the second operation comprises at least one of the following:
sending second information, wherein the second information comprises at least one of the following: first capability information of the terminal, first intention information of the terminal, and operation information of the terminal;
determining to accept a second requirement or reject a second requirement;
performing the operation corresponding to the congestion mark, or skipping performing or rejecting to perform the operation corresponding to the congestion mark;
receiving the second requirement; wherein the second requirement is used to require the terminal to perform the operation corresponding to the congestion mark;
receiving a first query, wherein the first query is used to query the terminal whether to allow to perform the operation corresponding to the congestion mark; and
receiving a second query, wherein the second query is used to query the terminal whether the operation corresponding to the congestion mark is being performed; wherein
the first capability information indicates one of the following: supporting the operation and/or a function corresponding to the congestion mark, and not supporting the operation and/or the function corresponding to the congestion mark;
the first intention information of the terminal indicates one of the following:
the terminal and/or the user allows to perform the operation corresponding to the congestion mark; and
the terminal and/or the user does not allow to perform the operation corresponding to the congestion mark; and
the operation information of the terminal indicates one of the following:
the terminal is performing the operation corresponding to the congestion mark; and
the terminal has not performed the operation corresponding to the congestion mark.

46. A congestion processing apparatus, applied to a second communication device, comprising:
a second obtaining module, configured to obtain third information, wherein the third information comprises at least one of the following: first capability information of a terminal, first capability information of a first communication device, first intention information of the terminal, operation information of the terminal, and a third requirement; and
a third execution module, configured to perform a third operation based on the third information; wherein the third operation comprises at least one of the following:
determining to accept the third requirement or reject the third requirement;
sending a first requirement to the first communication device, wherein the first requirement is used to require to perform an operation corresponding to a congestion mark;
sending a second requirement to the terminal, wherein the second requirement is used to require the terminal to perform the operation corresponding to the congestion mark;
sending a first query to the terminal, wherein the first query is used to query the terminal whether to allow to perform the operation corresponding to the congestion mark; and
sending a second query to the terminal, wherein the second query is used to query the terminal whether the operation corresponding to the congestion mark is being performed; wherein
the first capability information indicates one of the following: supporting the operation and/or a function corresponding to the congestion mark, and not supporting the operation and/or the function corresponding to the congestion mark;
the first intention information of the terminal indicates one of the following:
the terminal and/or the user allows to perform the operation corresponding to the congestion mark; and
the terminal and/or the user does not allow to perform the operation corresponding to the congestion mark; and
the operation information of the terminal indicates one of the following:
the terminal is performing the operation corresponding to the congestion mark; and
the terminal has not performed the operation corresponding to the congestion mark; wherein
the third requirement is used to require to perform the operation corresponding to the congestion mark.

47. A congestion processing apparatus, applied to a third communication device, comprising:
a third obtaining module, configured to obtain a third requirement, wherein the third requirement is used to require to perform an operation corresponding to a congestion mark; and
a sending module, configured to send the third requirement to a second communication device.

48. A communication device, comprising a processor and a memory that stores a program or an instruction executable on the processor, wherein when the program or the instruction is executed by the processor, the steps of the congestion processing method according to any one of claims 1 to 14, or the steps of the congestion processing method according to any one of claims 24 to 38, or the steps of the congestion processing method according to any one of claims 39 to 43 are performed.

49. A terminal, comprising a processor and a memory that stores a program or an instruction executable on the processor, wherein when the program or the instruction is executed by the processor, the steps of the congestion processing method according to any one of claims 15 to 23 are performed.

50. A readable storage medium, storing a program or an instruction, wherein when the program or the instruction is executed by a processor, the steps of the congestion processing method according to any one of claims 1 to 14, or the steps of the congestion processing method according to any one of claims 15 to 23, or the steps of the congestion processing method according to any one of claims 24 to 38, or the steps of the congestion processing method according to any one of claims 39 to 43 are performed.
